(19) Europäisches Patentamt
European Patent Office
Office européen des brevets

(11) **EP 3 816 963 A1**

(12) **EUROPEAN PATENT APPLICATION**
published in accordance with Art. 153(4) EPC

(43) Date of publication:
**05.05.2021 Bulletin 2021/18**

(51) Int Cl.:
**G08G 1/123** (2006.01)   **G01C 21/34** (2006.01)
**G06Q 50/28** (2012.01)

(21) Application number: **19827439.1**

(22) Date of filing: **10.06.2019**

(86) International application number:
**PCT/JP2019/022879**

(87) International publication number:
**WO 2020/003987 (02.01.2020 Gazette 2020/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2018 JP 2018124322**

(71) Applicant: **Sony Corporation
108-0075 Tokyo (JP)**

(72) Inventor: **KANAMORI, Katsutoshi
Tokyo 108-0075 (JP)**

(74) Representative: **Witte, Weller & Partner
Patentanwälte mbB
Postfach 10 54 62
70047 Stuttgart (DE)**

(54) **INFORMATION PROCESSING DEVICE, MOVING DEVICE, INFORMATION PROCESSING SYSTEM, METHOD, AND PROGRAM**

(57) To implement calculation of low cost processing and task processing that fit reality by generating a task sequence in which a node identifier of an additional node at a position other than a registered position and a processing type are recorded. Regarding movement processing between registered nodes and processing at a registered node, a task sequence in which tasks each including a node identifier and a processing type are chronologically arranged is generated, and moreover a moving device corresponding task sequence corresponding to each moving device is generated on the basis of the generated task sequence. In a case where a processing execution position of the moving device does not match a registered node, a node is added to the processing execution position, and a task sequence including an additional node corresponding task in which the node identifier of the additional node and the processing type are recorded is generated.

*FIG. 12*

| | DATA TYPE | DETAILS |
|---|---|---|
| (1) | REQUEST | "PICK UP a AT P10 AND DROP a AT P11" |
| (2) | TASK SEQUENCE | TASK SEQUENCE 1: **load(P10,a)**, move(P5), move(P8),**move(P11)**, **unload(P11,a)** |
| (3) | VEHICLE CORRESPONDING TASK SEQUENCE | VEHICLE 1: move(P4),move(P5) ,**move(p10)** ,**load(P10, a)** ,move(P5),move(P8),**move(P11)**,**unload(P11,a)** |

ADDITIONAL NODE CORRESPONDING TASK ELEMENTS

ADDITIONAL NODE CORRESPONDING TASK ELEMENTS

EP 3 816 963 A1

**Description**

TECHNICAL FIELD

The present disclosure relates to an information processing device, a moving device, an information processing system, a method, and a program. More specifically, the present disclosure relates to an information processing device, a moving device, an information processing system, a method, and a program for efficiently performing various types of processing involving movement of vehicles that deliver packages, taxis, or delivery robots, such as collection and delivery of packages, or pickup and drop of people.

BACKGROUND ART

Vehicles or taxis that carry packages or people, or delivery robots that automatically travel in factories or offices move to various positions and load and unload the packages, people, or other goods at the destination. In the case of performing such processing, the efficiency greatly varies depending on how to set a movement route and a sequence of movement and other processing such as loading and unloading of the packages or people.
For example, as an optimization system for processing involving a route search, there is a system that sets a route (arc) connecting a plurality of bases (nodes) and nodes in a movement range of a moving device such as a vehicle, and calculating a shortest route connecting nodes at which processing such as loading and unloading of packages is performed.
For example, Patent Document 1 (Japanese Patent Application Laid-Open No. 2008-230816) discloses a configuration to determine an optimum processing sequence, using a database that stores an inter-node distance between a departure point node and an arrival point node, a travel time between nodes, and the like.
However, there is a limit to the number of nodes that can be registered in advance in terms of recording capacity and calculation cost of the database (DB), and it is almost impossible to register nodes corresponding to all of positions in a movement space in the DB. Meanwhile, for example, pickup and drop positions of a taxi are often different from the node positions registered in the DB. In such a case, even if the optimum processing sequence using prescribed node positions is calculated, a correct optimum sequence may not be calculated.

CITATION LIST

PATENT DOCUMENT

Patent Document 1: Japanese Patent Application Laid-Open No. 2008-230816

SUMMARY OF THE INVENTION

PROBLEMS TO BE SOLVED BY THE INVENTION

The present disclosure has been made in view of, for example, the above problem, and an objective is to provide an information processing device, a moving device, an information processing system, a method, and a program for dynamically adding a new node at a position having no registered node and calculating an optimum sequence considering the additional node even in the case where processing at a position other than the registered node is required.

SOLUTIONS TO PROBLEMS

The first aspect of this disclosure resides in
an information processing device including:

a task management unit configured to describe movement processing between registered nodes set on a movement route of a moving device and processing at a registered node as tasks that are data including a node identifier and a processing type, and generate a task sequence in which the tasks are chronologically arranged, and moreover, to generate a moving device corresponding task sequence that is a task sequence corresponding to each moving device on the basis of the generated task sequence, in which
in a case where a processing execution position of the moving device is a position not matching the registered node, the task management unit adds a node to the processing execution position and generates a task sequence including an additional node corresponding task in which a node identifier of the additional node and a processing type are recorded.

Moreover, the second aspect of the present disclosure resides in
a moving device that executes processing according to a moving device corresponding task sequence that is a task sequence corresponding to the moving device,
the moving device corresponding task sequence being a sequence generated in the moving device or an external server, and being a task sequence in which tasks each including a node identifier and a processing type are chronologically arranged, for movement processing between a registered node set on a movement route of the moving device and an additional node other than the registered node, and processing at the registered node and at the additional node.

Moreover, the third aspect of the present disclosure resides in
an information processing system including: a terminal configured to transmit a request that is a processing execution request; a task management server configured to receive the request from the terminal; and a moving device configured to execute processing, in which
the task management server, in response to the request,
describes movement processing between registered nodes set on a movement route of the moving device and processing at a registered node as tasks that are data including a node identifier and a processing type, and generates a moving device corresponding task sequence that is a task sequence corresponding to each moving device in which the tasks are chronologically arranged, and
in a case where a processing execution position of the moving device is a position not matching the registered node, adds a node to the processing execution position and generates a moving device corresponding task sequence including an additional node corresponding task in which a node identifier of the additional node and a processing type are recorded, and
the moving device
executes processing according to the moving device corresponding task sequence including an additional node corresponding task.

Moreover, the fourth aspect of the present disclosure resides in
an information processing method executed in an information processing device, the information processing method including:

> by a task management unit,
> a task sequence generation step of describing movement processing between registered nodes set on a movement route of a moving device and processing at a registered node as tasks that are data including a node identifier and a processing type, and generating a task sequence in which the tasks are chronologically arranged; and
> a moving device corresponding task sequence generation step of generating a moving device corresponding task sequence that is a task sequence corresponding to each moving device on the basis of the generated task sequence,
> in the moving device corresponding task sequence generation step,
> in a case where a processing execution position of the moving device is a position not matching the registered node, adding a node to the processing execution position and generating a task sequence including an additional node corresponding task in which a node identifier of the additional node and a processing type are recorded.

Moreover, the fifth aspect of the present disclosure resides in
a program for causing an information processing device to execute information processing, the program for causing a task management unit to execute:

> a task sequence generation step of describing movement processing between registered nodes set on a movement route of a moving device and processing at a registered node as tasks that are data including a node identifier and a processing type, and generating a task sequence in which the tasks are chronologically arranged; and
> a moving device corresponding task sequence generation step of generating a moving device corresponding task sequence that is a task sequence corresponding to each moving device on the basis of the generated task sequence,
> in the moving device corresponding task sequence generation step,
> in a case where a processing execution position of the moving device is a position not matching the registered node, adding a node to the processing execution position and generating a task sequence including an additional node corresponding task in which a node identifier of the additional node and a processing type are recorded.

Note that the program according to the present disclosure is, for example, a program that can be provided by a storage medium or a communication medium provided in a computer readable format to an information processing device or a computer system that can execute various program codes. By providing such a program in the computer readable format, processing according to the program is implemented on the information processing device or the computer system.

Still other objects, features, and advantages of the present disclosure will become clear from more detailed description based on examples and attached drawings of the present disclosure to be described below. Note that a system in the present specification is a logical aggregate configuration of a plurality of devices, and is not limited to devices having respective configurations within the same housing.

EFFECTS OF THE INVENTION

According to a configuration of an example of the present disclosure, calculation of low cost processing and task processing that fit reality are implemented by generating a task sequence in which a node identifier of an additional node at a position other than a registered position and a processing type are recorded.

Specifically, for example, regarding movement processing between registered nodes and processing at a registered node, a task sequence in which tasks each including a node identifier and a processing type are chronologically arranged is generated, and moreover a moving device corresponding task sequence corresponding to each moving device is generated on the basis of the generated task sequence. In a case where a processing execution position of the moving device does not match a registered node, a node is added to the processing execution position, and a task sequence including an additional node corresponding task in which the node identifier of the additional node and the processing type are recorded is generated.

According to the present configuration, calculation of low cost processing and task processing that fit reality are implemented by generating the task sequence in which the node identifier of the additional node at a position other than a registered position and the processing type are recorded.

Note that the effects described in the present specification are merely examples and are not limited, and additional effects may be exhibited.

BRIEF DESCRIPTION OF DRAWINGS

Fig. 1 is a diagram for describing a calculation processing configuration of an optimum sequence using nodes and routes between nodes.

Fig. 2 is a diagram for describing a calculation processing configuration of an optimum sequence using nodes and routes between nodes.

Fig. 3 is a diagram for describing a calculation processing configuration of an optimum sequence using nodes and routes between nodes.

Fig. 4 is a diagram for describing a calculation processing configuration of an optimum sequence using nodes and routes between nodes.

Fig. 5 is a diagram illustrating a configuration example of an information processing system according to the present disclosure.

Fig. 6 is a diagram for describing a configuration example of a task management server that calculates an optimum task sequence.

Fig. 7 is a flowchart for describing a processing sequence when the task management server receives a task request from a request transmission device such as a user terminal.

Fig. 8 is a diagram for describing a specific example of a task sequence generated by a task management unit.

Fig. 9 is a diagram for describing a specific example of a vehicle corresponding task sequence generated by the task management unit.

Fig. 10 is a flowchart for describing a detailed sequence of processing in step S102 of the flow illustrated in Fig. 7.

Fig. 11 is a diagram for describing a specific example of adding a new node to existing registered nodes and generating a task sequence.

Fig. 12 is a diagram for describing a vehicle corresponding task sequence including task elements corresponding to the additional node.

Fig. 13 is a flowchart for describing a detailed sequence of processing in step S103 of the flowchart illustrated in Fig. 7.

Fig. 14 is a flowchart for describing a processing sequence of the task management server when receiving a task completion notification from a vehicle that executes the vehicle corresponding task sequence.

Fig. 15 is a diagram illustrating a display example of a display unit of the task management server.

Fig. 16 is a diagram for describing a request and a task sequence in a package delivery example using a package delivery vehicle.

Fig. 17 is a diagram for describing a request and a task sequence in an example using a taxi.

Fig. 18 is a diagram for describing a vehicle corresponding task sequence in the example using a taxi.

Fig. 19 is a diagram for describing a request and a task sequence in an example of a product sales robot that cruises on a floor of an office or the like.

Fig. 20 is a diagram for describing a vehicle corresponding task sequence in the example of a product sales robot that cruises on a floor of an office or the like.

Fig. 21 is a diagram for describing a specific example of processing of adding a new task sequence based on a new request to a vehicle corresponding task sequence being executed in a vehicle and updating the vehicle corresponding task sequence.

Fig. 22 is a diagram for describing a processing procedure of adding an (2) additional task sequence to an (1) existing vehicle corresponding task sequence.

Fig. 23 is a diagram for describing a processing procedure of adding an (2) additional task sequence to an (1) existing vehicle corresponding task sequence.

Fig. 24 is a diagram for describing a processing procedure of adding an (2) additional task sequence to an (1) existing vehicle corresponding task sequence.

Fig. 25 is a diagram for describing a processing procedure of adding an (2) additional task sequence to an (1) existing vehicle corresponding task sequence.

Fig. 26 is a flowchart for describing a processing procedure of inserting an additional task sequence based on a new request to an existing vehicle corresponding task sequence.

Fig. 27 is a diagram for describing a specific example of processing of updating a vehicle corresponding task sequence in consideration of a task priority.

Fig. 28 is a diagram for describing a processing procedure of adding an (2) additional task sequence to an (1) existing vehicle corresponding task sequence in consideration of a task priority.

Fig. 29 is a diagram for describing a processing procedure of adding an (2) additional task sequence to an (1) existing vehicle corresponding task sequence in consideration of a task priority.

Fig. 30 is a diagram for describing a processing procedure of adding an (2) additional task sequence to an (1) existing vehicle corresponding task sequence in consideration of a task priority.

Fig. 31 is a diagram for describing a processing procedure of adding an (2) additional task sequence to an (1) existing vehicle corresponding task sequence in consideration of a task priority.

Fig. 32 is a flowchart for describing a processing procedure of inserting an additional task sequence based on a new request to an existing vehicle corresponding task sequence in consideration of a task priority.

Fig. 33 is a diagram for describing a specific sequence of cost matching processing executed by the task management unit of the task management server.

Fig. 34 is a diagram for describing a specific example of cost matching processing.

Fig. 35 is a diagram for describing a specific example of the cost matching processing.

Fig. 36 is a diagram for describing a specific example of the cost matching processing.

Fig. 37 is a diagram for describing a specific example of the cost matching processing.

Fig. 38 is a diagram for describing a specific example of the cost matching processing.

Fig. 39 is a diagram for describing a specific example of the cost matching processing.

Fig. 40 is a diagram for describing a hardware configuration example of an information processing device.

MODE FOR CARRYING OUT THE INVENTION

Hereinafter, an information processing device, a moving device, an information processing system, a method, and a program of the present disclosure will be described in detail with reference to the drawings. Note that the description will be given according to the following items.

1. Calculation of optimum sequence using nodes and routes between nodes and problems
2. Configuration example of information processing system and information processing device of present disclosure
3. Task management processing executed by task management server
4. Specific example of task sequence based on request and vehicle corresponding task sequence
5. Specific example of processing of adding new task sequence based on new request to vehicle corresponding task sequence being executed in vehicle to update vehicle corresponding task sequence
6. Specific example of processing of updating vehicle corresponding task sequence considering task priority
7. Details of cost matching processing for determining to which vehicle corresponding task sequence new task sequence is to be additionally inserted
8. Configuration example of information processing device
9. Conclusion of configurations of present disclosure

[1. Calculation of optimum sequence using nodes and routes between nodes and problems]

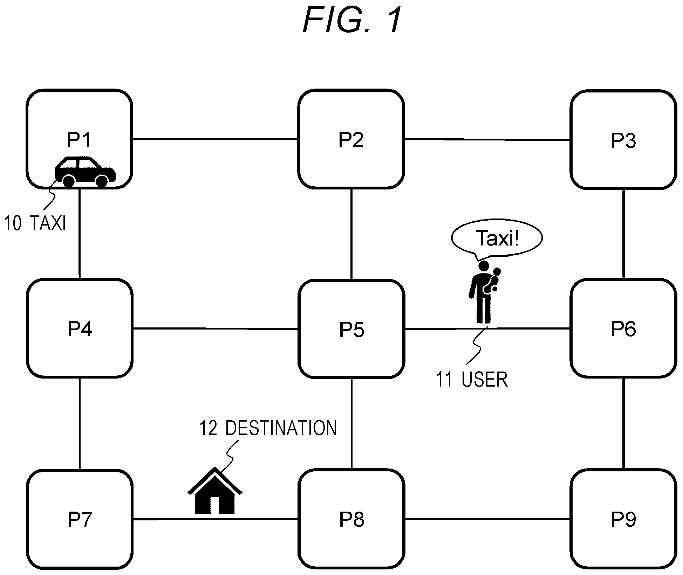

First, calculation of an optimum sequence using nodes and routes between nodes and problems will be described with reference to Fig. 1 and the subsequent drawings.

For example, as described above, as an optimization system for processing involving a route search, a system is known, which stores data setting a route (arc) connecting a plurality of bases (nodes) and nodes in a movement range of a moving device such as a vehicle in a storage unit such as a database, and calculating a shortest route connecting nodes at which processing such as loading and unloading of people or packages is performed, using the data (registered data).

However, the number of nodes that can be registered in the database in advance is finite in terms of recording capacity and calculation cost of the database (DB). That is, all of positions in a movement space cannot be recorded as registered nodes in the DB. Meanwhile, for example, pickup and drop positions of a taxi are often different from node positions registered in the DB. In such a case, even if an optimum processing sequence using the registered nodes is calculated, a correct result may not be obtained.

A specific example will be described with reference to Fig. 1. Fig. 1 illustrates a plurality of nodes (P1, P2, ..., and P9) registered in a database (DB) in advance, and route (arcs) connecting the nodes. The nodes P1 to P9 are existing registered nodes having position information registered in the DB.

However, as illustrated in Fig. 1, a user 11 is located at a position different from the positions of the existing registered nodes, that is, at a position between the node P5 and the node P6, as illustrated in Fig. 1, and the user 11 tries to take a taxi 10 at the position. Furthermore, a destination 12 that is a drop position is also located at a position different from the positions of the existing registered nodes, that is, at a position between the node P7 and the node P8, as illustrated in Fig. 1.

In such a case, even if an optimum processing sequence is calculated using the position information of registered nodes (P1 to P9), a correct result may not be obtained.

In the processing of the present disclosure, when a task sequence that prescribes a processing sequence is generated, a new node is added as a sequence element to a processing execution position of actual processing, that is, pickup processing or drop processing in the example illustrated in Fig. 1.

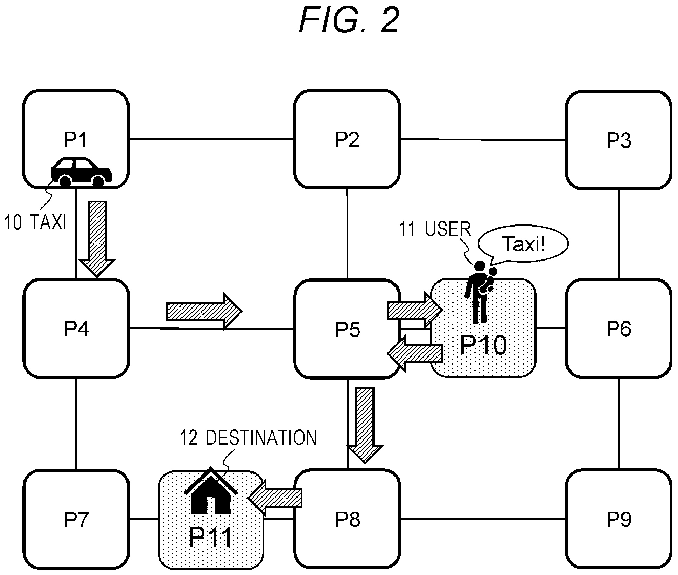

Fig. 2 illustrates an example in which additional nodes are set.

An additional node P10 is a new additional node set at the pickup position of the user 11.

Furthermore, an additional node P11 is a new additional node set at the destination 12 that is the drop position of the user 11.

In the configuration of the present disclosure, an information processing device such as a task management server that calculates an optimum task sequence corresponding to a vehicle adds a node corresponding to a position required for execution of an actual task, and calculates the optimum task sequence using the additional node, in response to a request from the user 11, for example.

Note that the server acquires the position information of each additional node from received information from a user terminal that has called the taxi, position information of a GPS or the like, map data in which the position information is recorded, or the like, adds and registers the additional node associated with the position information in the DB, and calculates the optimum task sequence using the newly registered additional node.

By the processing, a correct optimum sequence according to an actual processing sequence can be obtained.

Note that, regarding the destination 12, for example, the destination needs to be input to a terminal such as a navigation system of the taxi 13 after the taxi 10 picks up the user 11 and hears the destination 12 from the user 11. Alternatively, the server may acquire destination information input to the user terminal owned by the user 11.

When the task management server receives the destination information from the taxi 10, the user terminal of the user 11, or the like, the task management server sets a new node P11 at the position of the destination 12, and executes calculation of an optimum route using the new node P10, the new node P11, and the other existing nodes. Note that the following description of the example will be given on the assumption that the optimum task sequence calculation processing is executed by the server. However, a configuration in which the optimum task sequence calculation processing is executed by an information processing device in the moving device such as the taxi 10 may be adopted.

When the task management server calculates the optimum route using the new node P10, the new node P11, and the other existing nodes, that is, the optimum task sequence, the taxi 10 is notified of the optimum task sequence, and the taxi 10 performs processing according to the optimum task sequence.

Note that the task sequence used in the processing of the present disclosure prescribes processing of loading and unloading (load) and (unload) of people or packages, and processing of standby (wait), in addition to processing of moving (move) between nodes. The specific task sequence will be described in detail below.

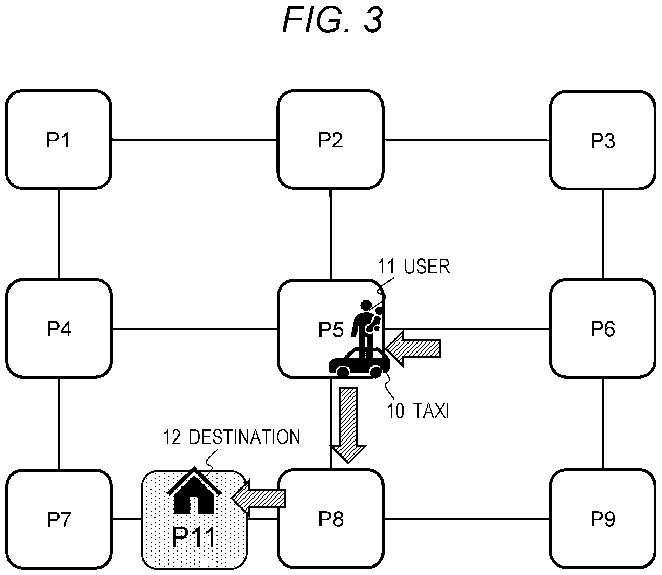

Fig. 3 illustrates a processing example after the taxi 10 starts moving according to the optimum task sequence notification of which is provided from the server. The server sequentially deletes the temporarily added additional node at the end of the processing after calculating the optimum task sequence. At the time of Fig. 3, the additional node P10 at which pickup (load) of the person has been completed is deleted. That is, the additional node P10 is deleted from the server DB.

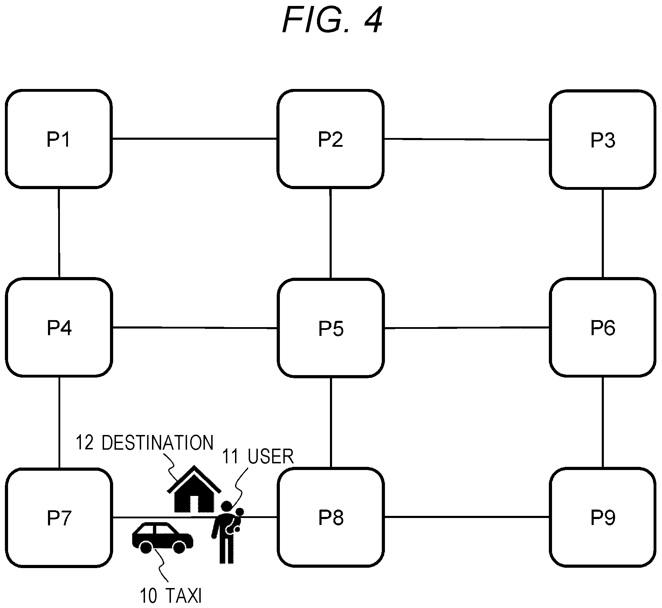

Fig. 4 illustrates a state where the taxi 10 has arrived at the destination 12. At this point, the additional node P11 at which drop (unload) of the person has been completed is deleted. That is, the additional node P11 is deleted from the server DB.

Since the additional nodes are sequentially deleted from the storage unit (DB) upon completion of processing, a situation where the storageable capacity of the DB is reduced cannot occur.

[2. Configuration example of information processing system and information processing device of present disclosure]

Next, a configuration example of an information processing system and an information processing device of the present disclosure will be described.

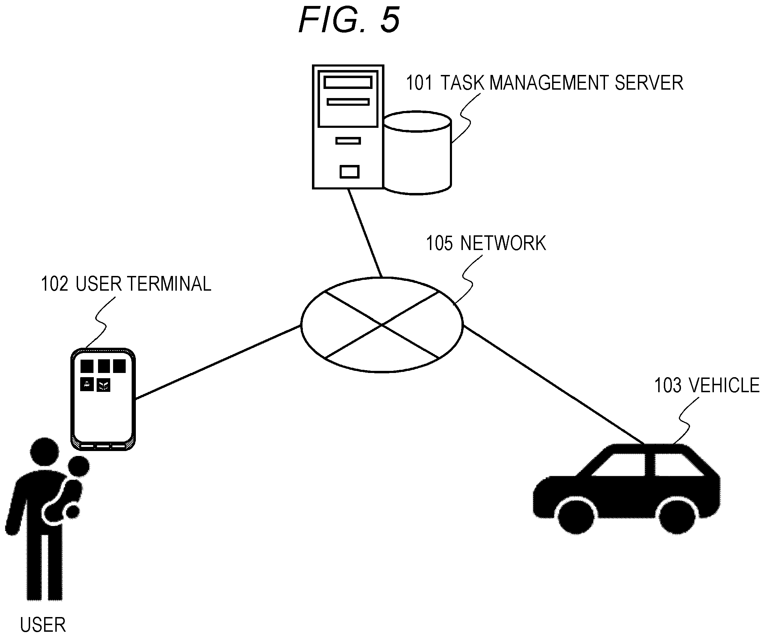

Fig. 5 is a diagram illustrating a configuration example of an information processing system according to the present disclosure.

The information processing system has a configuration in which a task management server 101 that executes the processing of calculating the optimum task sequence, and the like, a user terminal 102 of a user who requests various tasks, for example, use of a taxi, and a vehicle 103 such as a taxi that actually executes a task, for example, picks up the user and moves, are connected by a network 105.

Note that, in the example to be described below, an example in which the vehicle 103 as the moving device is mainly a taxi or a package delivery vehicle will be described. However, the moving device of the present disclosure is not limited to the taxi or the package delivery vehicle, and includes various moving means such as a self-propelled robot moving in a factory or an office, and a robot with a driver.

Furthermore, Fig. 5 illustrates the user terminal 102 configured by a smartphone as an example of a device through which a task request is input and which transmits the request to the task management server 101. However, the device that transmits a task request can be a terminal capable of inputting and transmitting the task request, which may be a personal computer or a tablet or may be an information processing device such as a management system equipped in the factory or the office.

Furthermore, the example to be described below will be given on the assumption that the task management server 101 performs processing of optimizing the task sequence, that is, processing of determining the optimum task sequence. However, the vehicle 103 as the moving device may calculate the optimum task sequence.

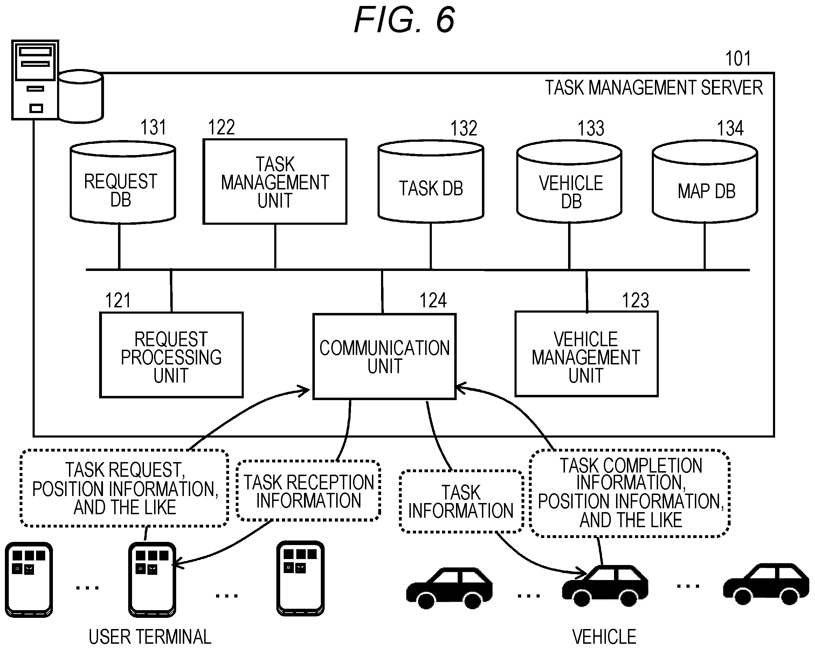

Next, a configuration example of an information processing device that calculates an optimum task sequence, that is, the task management server 101 in the present example will be described with reference to Fig. 6.

As illustrated in Fig. 6, the task management server 101 includes a request processing unit 121, a task management unit 122, a vehicle management unit 123, a communication unit 124, a request database (DB) 131, a task DB 132, a vehicle DB 133, and a map DB 134.

The task management server 101 receives various task requests from the user terminal via the communication unit 124.

The request processing unit 121 registers request content of the task request received from the user terminal together with request attribute information such as a terminal ID of the request transmission terminal and a request reception time in the request DB 131. Note that the user terminal transmits the position information of the user terminal and time information together with specific content of the request, such as the task request of "take a taxi from the current position". The processing is executed by an application being executed on the user terminal. That is, the application generates a packet storing the task content, time information, position information, and the like as a payload and transmits the packet to the task management server 101.

The task management unit 122 of the task management server 101 generates a task sequence for executing the request on the basis of the request stored in the request DB 131.

The final task sequence generated here is a vehicle-unit task sequence that prescribes which vehicle executes the processing in what order, that is, a vehicle corresponding task sequence. A specific example of the task sequence generation processing will be described in detail below.

Note that the processing will be described as the "vehicle corresponding task sequence" because an example using a vehicle will be described below. However, the processing of the present disclosure can be applied to various moving devices such as robots other than vehicles, and a moving device-unit task sequence will be called "moving device corresponding task sequence".

The task sequence generated by the task management unit 122 is stored in the task DB 132.

The vehicle management unit 123 manages a vehicle that is an entity for executing a task. For example, the vehicle management unit 123 receives a task status being executed in each vehicle or the like from the each vehicle via the communication unit 124 in addition to the position of each vehicle, and stores the received information in the vehicle DB 133. Moreover, the information is also provided to the task management unit 122, and the task management unit 122 performs processing of assigning a task to each vehicle on the basis of the information.

The map DB 134 stores registration information of the nodes, the routes (arcs), and the like described above with reference to Figs. 1 to 4 in addition to map data associated with the position information.

The task management unit 132 generates the optimum task sequence, using the node information stored in the map DB 134 and the nodes added as needed.

The vehicle that will execute the task sequence is notified of the optimum task sequence generated by the task management unit 132, and the vehicle executes processing according to the task sequence. Note that, as described above, the task sequence prescribes processing of moving (move) between nodes, processing of loading packages or picking up people (load), processing of unloading packages or dropping people (unload), processing of standby (wait), and the like. The specific task sequence will be described in detail below.

The vehicle transmits a task execution status, completion information, position information, and the like to the task management server 101.

The task management unit 122 grasps a progress status or completion status of a task according to the received information from the vehicle, and deletes the completed task and task sequence from the task DB 132.

[3. Task management processing executed by task management server]

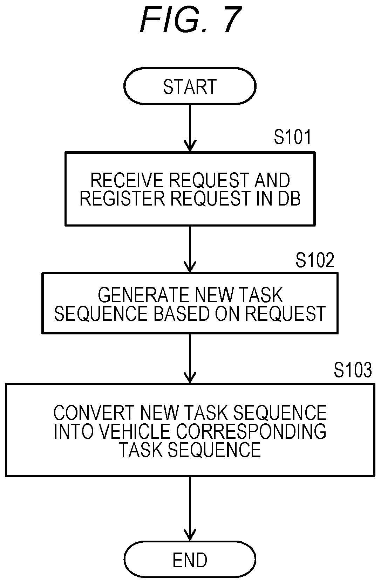

Next, task management processing executed by the task management server 101 will be described with reference to Fig. 7 and the subsequent drawings.

The flowchart illustrated in Fig. 7 is a flowchart for describing a processing sequence when the task management server 101 receives a task request from a request transmission device such as a user terminal.

Note that the processing according to the flowchart to be described below is executed under control of a control unit (data processing unit) including a CPU having a program execution function according to a program stored in a storage unit of the information processing device such as the task management server 101, for example.

Hereinafter, processing of each step of the flow illustrated in Fig. 7 will be described.

(step S101)

First, the task management server 101 receives the task request in step S101. The task management server 101 receives the task request from the request transmission device such as the user terminal via the communication unit 124.

The task request is input to the request management unit 121, and the request content of the task request is registered together with the request attribute information such as the terminal ID of the request transmission terminal and the request reception time in the request DB 131.

(step S102)

Next, in step S102, a new task sequence based on the request is generated.

This processing is executed by the task management unit 122.

In step S102, the task management unit 122 divides the task request received in step S101 into, for example, minimum-unit task sequences to generate one or more task sequences.

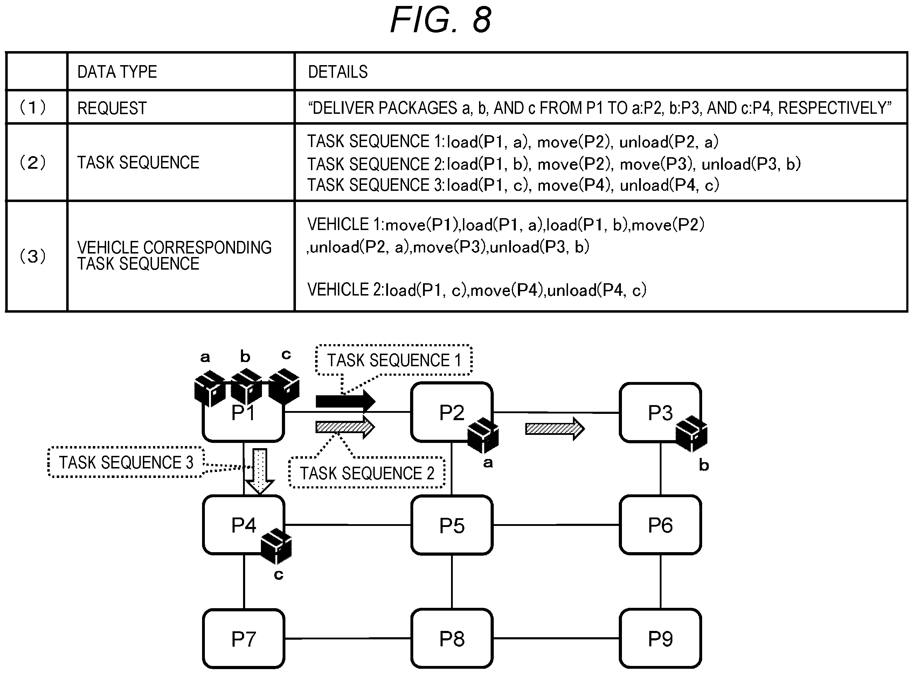

A specific example of the task sequence generated by the task management unit 122 will be described with reference to Fig. 8.

The upper table in Fig. 8 illustrates the following three data:

(1) request;
(2) task sequence; and
(3) vehicle corresponding task sequence.

The (1) request is a request received from the request transmission terminal such as the user terminal. Here, the following request is described as an example.

Request = "Deliver packages a, b, and c from P1 to P2, P3, and P4, respectively"

Note that, in reality, the request received from the user terminal does not include the node identifiers such as P1 to P4. These node identifiers are acquired by the request processing unit 121 or the task management unit 122 from the map DB 134 on the basis of the position information obtained from the received request or the like.

The task management unit 122 first generates the task sequence in step S102 of the flow illustrated in Fig. 7 in response to the request. In step S102, the task management unit 122 generates one or more task sequences for executing the request, for example, one or more minimum-unit task sequences.

The task management unit 122 generates the following three task sequences illustrated in Fig. 8(2) as the one or more minimum-unit task sequences for executing the request:

Request = "Deliver packages a, b, and c from P1 to P2, P3, and P4, respectively".
Task sequence 1 = load (P1, a), move (P2), unload (P2, a)
Task sequence 2 = load (P1, b), move (P2), move (P3), unload (P3, b)
Task sequence 3 = load (P1, c), move (P4), unload (P4, c)

Each task sequence is configured as a sequence of task elements such as load (P1, a) and move (P2).

load (P1, a) is a task element indicating processing of loading (load) the package a at the node P1.
move (P2) is a task element indicating processing of moving (move) from the current node to the node P2.
unload (P2, a) is a task element indicating processing of unloading (unload) the package a at the node P2.

The task element is data including configurations of [processing type (node identifier, processing target)]. To the processing type, moving (move), loading and unloading a person or a package (load) and (unload), standby (wait), or the like are set, as described above.
The node identifier is an identifier of a node such as P1 or P2. The position information corresponding to the node identifier is recorded in the map DB 134. It is also possible to register an additional node, which is not registered in the map DB 134 in advance, to the map DB 134 one after another.
The lower diagram in Fig. 8 illustrates a specific processing example of the three task sequences illustrated in the (2) task sequence in the upper table in Fig. 8.
As is understood from the diagram, Task sequence 1 = load (P1, a), move (P2), unload (P2, a) is a sequence of loading (load) a package a at the node P1, moving (move) to the node P2, and unloading (unload) the package a at the node P2.
Task sequence 2 = load (P1, b), move (P2), move (P3), unload (P3, b) is a sequence of loading (load) a package b at the node P1, moving (move) to the node P2, further moving (move) to the node P3, and unloading (unload) the package b at the node P3.
Task sequence 3 = load (P1, c), move (P4), unload (P4, c) is a sequence of loading (load) a package c at the node P1, moving (move) to the node P4, and unloading (unload) the package c at the node P4.
In step S102 of the flow in Fig. 7, the task management unit 122 generates the one or more minimum-unit task sequences for executing the request in response to the received request, as described above.

(step S103)

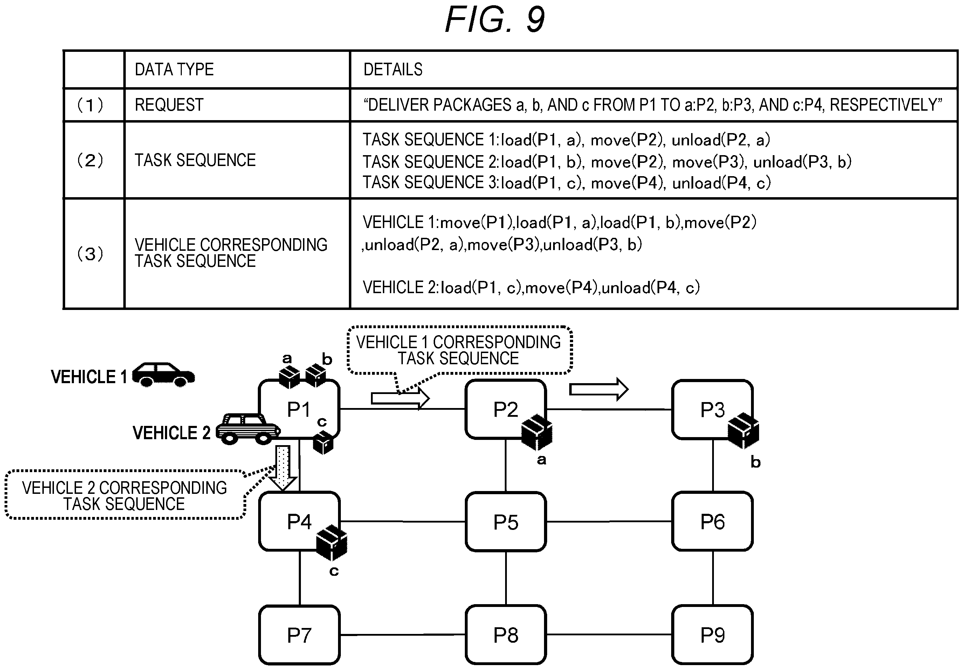

Next, in step S103, the task management unit 122 converts the new task sequence generated in response to the request in step S102 into a vehicle corresponding sequence.
This is processing of converting the new task sequence generated in step S102 into a vehicle-unit task sequence of a vehicle that actually executes the task sequence, that is, the vehicle corresponding task sequence.
Note that, in a case where the vehicle has already been executing another vehicle corresponding task sequence, processing of adding the new vehicle corresponding sequence based on the new task sequence to the vehicle corresponding sequence being executed to update the existing vehicle corresponding sequence is performed.
In the processing of generating and updating the vehicle corresponding task sequence, a vehicle capable of executing the new task sequence at the lowest cost is selected and the processing is executed in consideration of the current position of each vehicle, the task being executed in each vehicle, and the like. Alternatively, the processing is executed in consideration of the task priority.
Specific processing for the vehicle corresponding task sequence based on the cost, that is, cost matching processing, or sequence generation processing based on the priority will be described below in detail.
A specific example of the vehicle corresponding task sequence generated by the task management unit 122 in step S103 will be described with reference to Fig. 9.
The upper table in Fig. 9 illustrates the following three data, similarly to Fig. 8:

(1) request;
(2) task sequence; and
(3) vehicle corresponding task sequence.

The lower diagram in Fig. 9 illustrates the two vehicle corresponding task sequences illustrated in the (3) vehicle corresponding task sequence, that is, details of the vehicle corresponding task sequences of vehicle 1 and vehicle 2.
The (1) request illustrated in the upper table in Fig. 9 is the same as the request described with reference to Fig. 8, and is a request received from the request transmission terminal such as the user terminal. Here, the following request is described as an example.

Request = "Deliver packages a, b, and c from P1 to P2, P3, and P4, respectively"

The (2) task sequence illustrated in the upper table in Fig. 9 is the task sequence described above with reference to Fig. 8, and is the following three task sequences generated on the basis of the (1) request.

Task sequence 1 = load (P1, a), move (P2), unload (P2, a)
Task sequence 2 = load (P1, b), move (P2), move (P3), unload (P3, b)
Task sequence 3 = load (P1, c), move (P4), unload (P4, c)

In step S103 of the flow in Fig. 7, the three task sequences are assigned to the vehicle capable of executing the task sequences at the minimum cost, and the vehicle corresponding task sequence indicating a task sequence to be executed by the vehicle is generated.

The result is the two vehicle corresponding sequences illustrated in the (3) vehicle corresponding task sequence in Fig. 9. That is, the following two vehicle corresponding task sequences:

Vehicle 1 corresponding task sequence = move (P1), load (P1, a), load (P1, b), move (P2), unload (P2, a), move (P3), unload (P3, b); and
Vehicle 2 corresponding task sequence = load (P1, c), move (P4), unload (P4, c).

The lower diagram in Fig. 9 illustrates a specific processing example of these vehicle corresponding task sequences.

As is understood from the drawing, vehicle 1 corresponding task sequence = move (P1), load (P1, a), load (P1, b), move (P2), unload (P2, a), move (P3), unload (P3, b) is a sequence of the vehicle 1 first moving (move) to the node P1, loading (load) packages a and b at the node P1, moving (move) to the node P2, unloading (unload) the package a at the node P2, further moving (move) to the node P3, and unloading (unload) the package b at the node P3.

Note that the vehicle A is not located at the node P1 at the time of task request, and thus the first task element of the task sequence is set to moving [move (P1)] to the node P1.

Vehicle 2 corresponding task sequence = load (P1, c), move (P4), unload (P4, c) is a sequence of loading (unload) a package c at the node P1, moving (move) to the node P4, and unloading (unload) the package c at the node P4.

In step S103 of the flow illustrated in Fig. 7, the task sequence generated by the task management unit 122 in step S102 is converted into the vehicle-unit task sequence, that is, the vehicle corresponding task sequence.

In the conversion processing, selection of the vehicle that enables the most efficient processing and setting of the processing sequence are executed. Specifically, sequence generation processing considering the cost and task priority is performed. Specific processing for the vehicle corresponding task sequence based on the cost, that is, cost matching processing, or sequence generation processing based on the priority will be described below in detail.

Note that only a limited number of nodes are registered as the registered nodes in the storage unit of the task management server 101, for example, in the map DB 134, and there are some cases where the processing (load, unload, or the like) needs to be executed at a position other than the registered nodes, as described above with reference to Figs. 1 to 4.

As described above, in the configuration of the present disclosure, a corresponding node is added to the position required for executing an actual task in response to a request, and the optimum task sequence is calculated using the additional node.

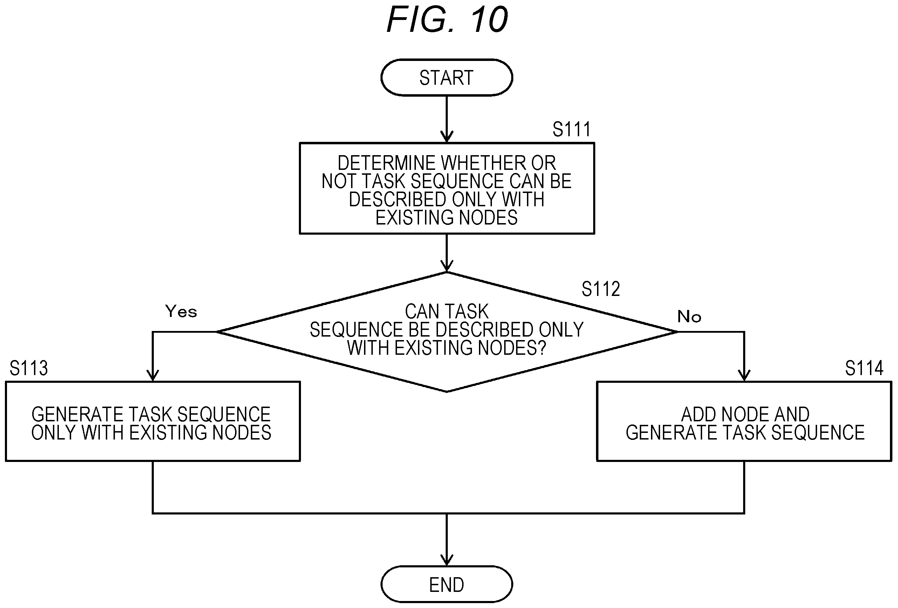

Processing of generating the task sequence to which such an additional node is set will be described with reference to Fig. 10 and the subsequent drawings.

Fig. 10 is a flowchart for describing a detailed sequence of the processing in step S102 of the flow illustrated in Fig. 7. Processing of each step of the flow illustrated in Fig. 10 will be described.

(steps S111 to S112)

In step S111, the task management unit 122 of the task management server 101 determines whether or not the task sequence can be described only with the existing registered nodes.

In the case where the task sequence can be described (step 112-Yes), the processing proceeds to step S113, and in the case where the task sequence cannot be described (step 112-No), the processing proceeds to step S114.

(step S113)

In the case where the task sequence can be described only with the existing registered nodes, the task management unit 122 generates the task sequence only with the existing registered nodes in step S113.

For example, the task sequence illustrated in Fig. 8(2) described above with reference to Fig. 8 is generated.

(step S114)

On the other hand, in the case where the task sequence cannot be described only with the existing registered nodes, the task management unit 122 adds a new node to the existing registered nodes and generates the task sequence in step S114.

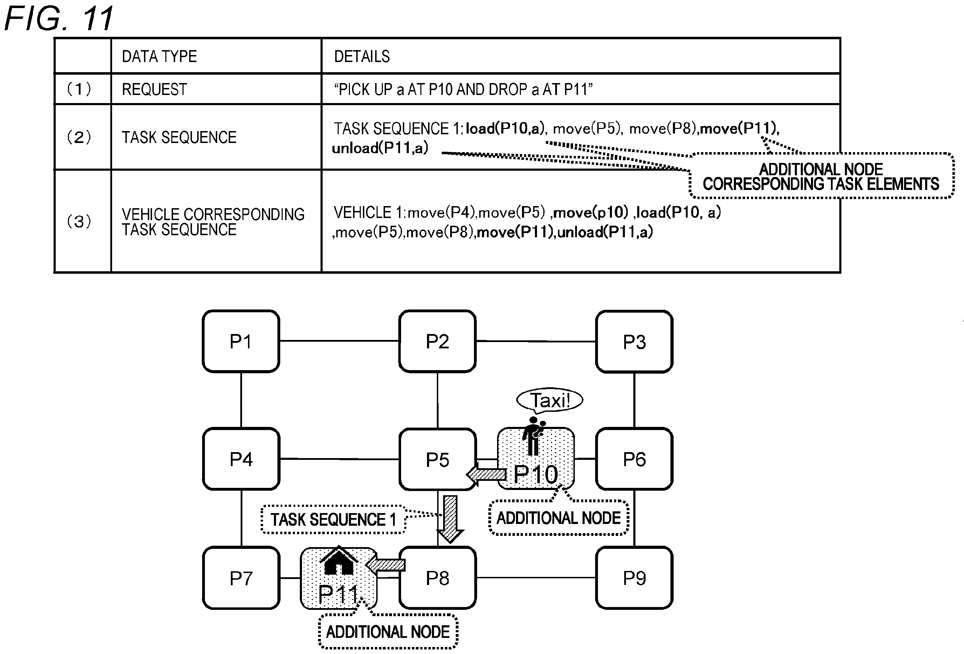

A specific example will be described with reference to Fig. 11.

The upper table in Fig. 11 illustrates the following three data:

(1) request;
(2) task sequence; and
(3) vehicle corresponding task sequence.

The (1) request is a request received from the request transmission terminal such as the user terminal. Here, the following request is described as an example.

Request = "Pick up a at P10 and drop a at P11".

Note that, in reality, the request received from the user terminal does not include the node identifiers of P10, P11, and the like. These node identifiers are acquired by the request processing unit 121 or the task management unit 122 from the map DB 134 on the basis of the position information obtained from the received request or the like, or the node identifier of the newly added additional node.

The task management unit 122 specifies the position information of the user a who has transmitted the request and the position information of the destination on the basis of the transmission information of the user terminal of the user a, the transmission information from the vehicle terminal, and the like, and adds and registers a new node corresponding to the unregistered node position to the map DB 134 in the case where the task management unit 122 confirms that a registered node corresponding to the position is not registered in the map DB 134.

As illustrated in the lower section in Fig. 11, the additional node P10 is added between the registered nodes P5 and P6, and the additional node P11 is added between the registered nodes P7 and P8. These additional nodes are registered in the map DB 134 together with the position information. Note that the registration information is deleted from the map DB 134 with the completion of the task.

The task management unit 122 generates the task sequence using the additional nodes. The task management unit 122 generates the following the task sequence illustrated in Fig. 11(2) as the one or more minimum-unit task sequences for executing the request:

Request = "Pick up a at P10 and drop a at P11".
Task sequence 1 = load (P10, a), move (P5), move (P8), move (P11), unload (P11, a)

In the task sequence,
the following task elements:

load (P10, a);
move (P11); and
unload (P11, a)
are task elements corresponding to the additional nodes.

In this way, in the case where the task management unit 122 cannot generate the task sequence only with the registered nodes when generating the task sequence based on the request, the task management unit 122 sets new additional nodes and generates the task sequence including the task elements corresponding to the additional nodes.

Moreover, the task management unit generates the vehicle corresponding task sequence including the task elements corresponding to the additional nodes on the basis of the task sequence including the task elements corresponding to the additional nodes.

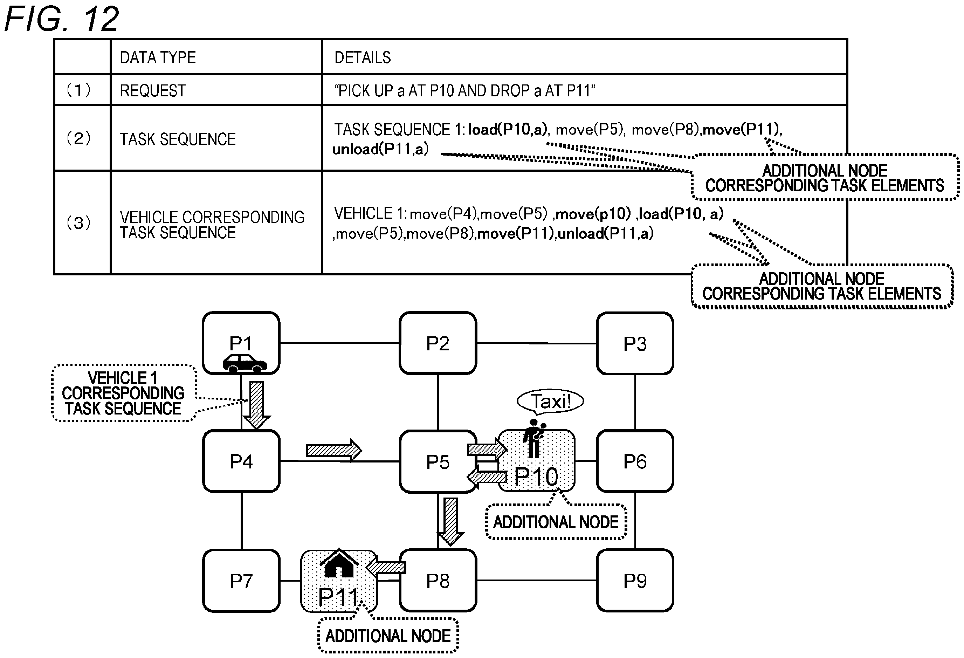

The vehicle corresponding task sequence including the task elements corresponding to the additional nodes will be described with reference to Fig. 12.

The upper table in Fig. 12 illustrates the following three data, similarly to Fig. 11:

(1) request;
(2) task sequence; and
(3) vehicle corresponding task sequence.

The (1) request is a request received from the request transmission terminal such as the user terminal, and the following request described with reference to Fig. 11.

Request = "Pick up a at P10 and drop a at P11".

The (2) task sequence is the following task sequence generated by the processing described with reference to Fig. 11.

Task sequence 1 = load (P10, a), move (P5), move (P8), move (P11), unload (P11, a)

In the task sequence,
the following task elements:

load (P10, a);
move (P11); and
unload (P11, a)
are task elements corresponding to the additional nodes.

The task management unit 122 generates the vehicle corresponding task sequence including the task elements corresponding to the additional nodes on the basis of the task sequence including the task elements corresponding to the additional nodes.

The task management unit 122 generates the following vehicle corresponding task sequence illustrated in Fig. 12(3).

Vehicle corresponding task sequence = move (P4), move (P5), move (P10), load (P10, a), move (P5), move (P8), move (P11), unload (P11, a).

Note that, since the current position of the vehicle 1 is the node P1, the task element indicating the movement from the node P1 is set at the beginning of the sequence.

In the vehicle corresponding task sequence,
the following task elements:

move (P10);
load (P10, a);
move (P11); and
unload (P11, a)
are task elements corresponding to the additional nodes.

In this way, in the case where the task management unit 122 cannot generate the vehicle corresponding task sequence based on the task sequence only with the registered nodes, the task management unit 122 sets new additional nodes and generates the vehicle corresponding task sequence including the task elements corresponding to the additional nodes.

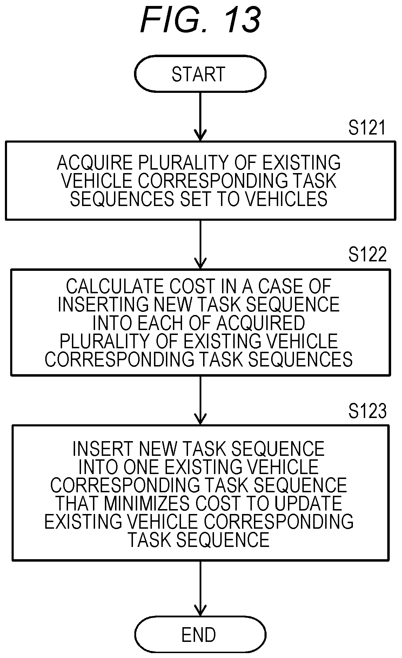

Next, a detailed sequence of the processing in step S103 described above with reference to the flowchart illustrated in Fig. 7 will be described with reference to the flow illustrated in Fig. 13.

As described above with reference to Fig. 7, in step S103, the task management unit 122 converts the new task sequence generated in response to the request in step S102 into the vehicle corresponding sequence.

This is processing of converting the new task sequence generated in step S102 into a vehicle-unit task sequence of a vehicle that actually executes the task sequence, that is, the vehicle corresponding task sequence. The flow illustrated in Fig. 13 corresponds to the detailed sequence of step S103. Processing of each step of the flow illustrated in Fig. 13 will be described.

(step S121)

First, in step S121, the task management unit 122 acquires a plurality of existing vehicle corresponding task sequences set for vehicles.

The existing vehicle corresponding task sequences set for vehicles are stored in the task DB 132, and the task management unit 122 acquires the plurality of existing vehicle corresponding task sequences set for vehicles from the task DB 132.

(step S122)

Next, in step S122, the task management unit 122 calculates the cost of the case of inserting a new task sequence to each of the plurality of acquired vehicle corresponding task sequences.

(step S123)

Next, in step S123, the task management unit 122 inserts the new task sequence into one existing vehicle corresponding task sequence that minimizes the cost to update the existing vehicle corresponding task sequence.

Note that, in some cases, a new vehicle corresponding task sequence based on the new task sequence is generated without inserting the new task sequence into the existing vehicle corresponding task sequence.

What types of vehicle corresponding task sequence is to be generated is determined according to the cost or the priority of the task.

Specific processing for the vehicle corresponding task sequence based on the cost, that is, cost matching processing, or sequence generation processing based on the priority will be described below in detail.

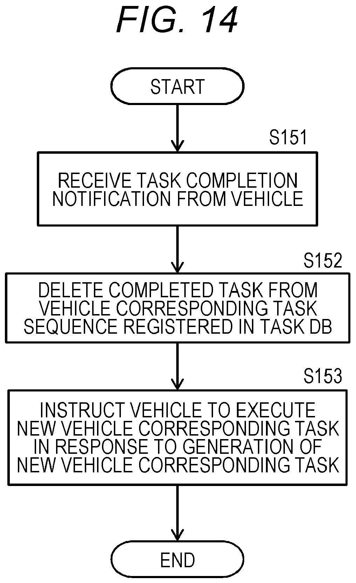

Fig. 14 is a flowchart for describing a processing sequence of the task management server 101 when receiving a task completion notification from the vehicle that executes the vehicle corresponding task sequence.

Processing of each step illustrated in the flow will be sequentially described.

(step S151)

First, in step S151, the task management server 101 receives the task completion notification from the vehicle that executes the vehicle corresponding task sequence.

(step S152)

Next, in step S152, the task management unit 122 of the task management server 101 deletes the task for which the completion report has been made from the vehicle corresponding task sequence registered in the task DB 132.

(step S153)

Next, in step S153, the task management unit 122 of the task management server 101 notifies the vehicle of execution of the new vehicle corresponding task sequence on the basis of generation of the new vehicle corresponding task sequence.

By such processing, communication is performed between the task management server 101 and the vehicle that is the task execution entity, and tasks corresponding to requests are sequentially executed.

Note that the task management server 101 includes an input unit operable by an operator and an output unit such as a display unit on which a task status can be confirmed.

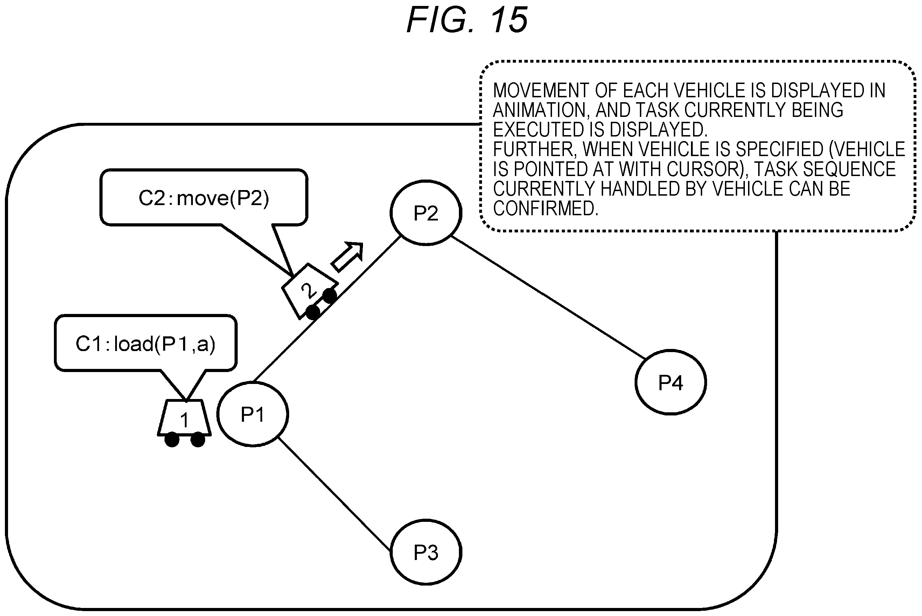

Fig. 15 illustrates a display example of the display unit of the task management server 101.

The example illustrated in Fig. 15 is an example of display data displayed on the display unit of the task management server 101.

Current information of each vehicle is displayed in real time on the display unit of the task management server 101. Movement of each vehicle is displayed as an animation and the task currently being executed is displayed on the display unit. Furthermore, when a vehicle is specified (pointed at with a cursor), the task sequence being currently executed by the vehicle can be confirmed.

[4. Specific example of task sequence based on request and vehicle corresponding task sequence]

Next, a specific example of a task sequence generated by the task management server 101 on the basis of a request and a vehicle corresponding task sequence will be described.

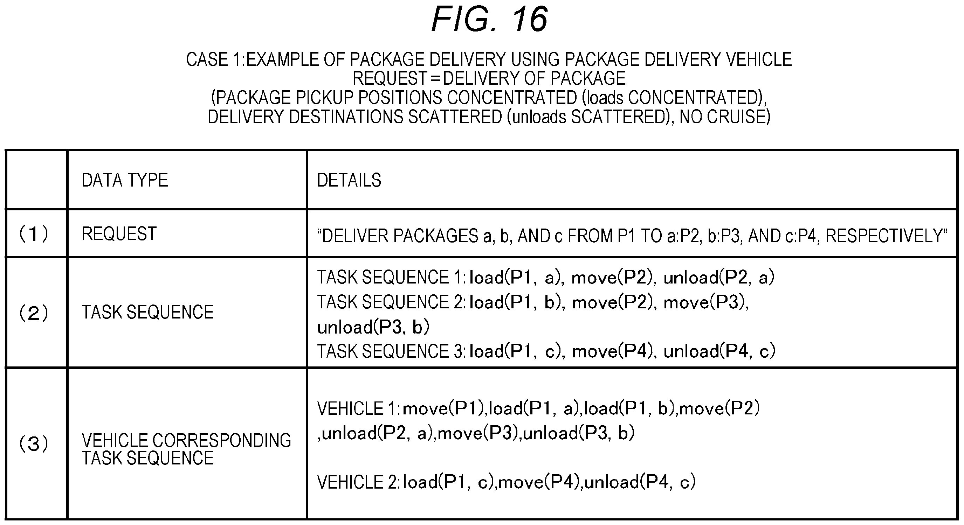

The following three specific examples will be sequentially described with reference to Fig. 16 and the subsequent drawings.

(Case 1) Example of package delivery using a package delivery vehicle
Request = Package delivery (package collection positions concentrated (loads concentrated), delivery destinations scattered (unloads scattered), no cruise)
(Case 2) Example of using a taxi
Request = cruise and dispatch (pickup position scattered (load scattered), drop position scattered (unload scattered), cruise, call)
(Case 3) Example of a product sales robot that cruises on a floor of an office, or the like
Request = cruise and dispatch (execute cruise and respond to call (no load, no unload))

First,

(Case 1) Example of package delivery using a package delivery vehicle will be described with reference to Fig. 16.

The request is delivery of a package.

This is a processing example of a case where package collection positions are concentrated (loads concentrated) and delivery destinations are scattered (unloads scattered), and the vehicle does not perform processing of cruising at nodes.

Fig. 16 illustrates the following three data:

(1) request;
(2) task sequence; and
(3) vehicle corresponding task sequence.

The (1) request is, for example, a request received from the request transmission terminal such as a user terminal. Here, the request is the following request:

Request = "Deliver packages a, b, and c from P1 to P2, P3, and P4, respectively"

As described above, in reality, the node identifiers of P1 to P4 and the like are not included in the request received from the user terminal, for example. The node identifier is a node identifier acquired by the request processing unit 121 or the task management unit 122 from the map DB 134 on the basis of the position information obtained from the received request or the like.

The task management unit 122 of the task management server 101 generates one or more minimum-unit task sequences for executing the request in response to the request.

The following three task sequences illustrated in Fig. 16(2) are generated:

Task sequence 1 = load (P1, a), move (P2), unload (P2, a)
Task sequence 2 = load (P1, b), move (P2), move (P3), unload (P3, b)
Task sequence 3 = load (P1, c), move (P4), unload (P4, c)

Task sequence 1 = load (P1, a), move (P2), unload (P2, a) is a sequence of loading (load) a package a at the node P1, moving (move) to the node P2, and unloading (unload) the package a at the node P2.

Task sequence 2 = load (P1, b), move (P2), move (P3), unload (P3, b) is a sequence of loading (load) a package b at the node P1, moving (move) to the node P2, further moving (move) to the node P3, and unloading (unload) the package b at the node P3.

Task sequence 3 = load (P1, c), move (P4), unload (P4, c) is a sequence of loading (load) a package c at the node P1, moving (move) to the node P4, and unloading (unload) the package c at the node P4.

Moreover, the task management unit 122 of the task management server 101 assigns the three task sequences to the vehicle capable of executing the task sequences at the minimum cost, and generates the vehicle corresponding task sequence indicating a task sequence to be executed by the vehicle.

The result is the following two vehicle corresponding task sequences illustrated in (3) vehicle corresponding task sequence in Fig. 16:

Vehicle 1 corresponding task sequence = move (P1), load (P1, a), load (P1, b), move (P2), unload (P2, a), move (P3), unload (P3, b); and
Vehicle 2 corresponding task sequence = load (P1, c), move (P4), unload (P4, c).

Vehicle 1 corresponding task sequence = move (P1), load (P1, a), load (P1, b), move (P2), unload (P2, a), move (P3), unload (P3, b) is a sequence of the vehicle 1 first moving (move) to the node P1, loading (load) packages a and b at the node P1, moving (move) to the node P2, unloading (unload) the package a at the node P2, further moving (move) to the node P3, and unloading (unload) the package b at the node P3.

Note that the vehicle A is not located at the node P1 at the time of task request, and thus the first task element of the task sequence is set to moving [move (P1)] to the node P1.

Vehicle 2 corresponding task sequence = load (P1, c), move (P4), unload (P4, c) is a sequence of loading (unload) a package c at the node P1, moving (move) to the node P4, and unloading (unload) the package c at the node P4.

The task management server 101 generates the task sequence on the basis of the request, and further generates the vehicle corresponding task sequence that is the task sequence to be executed by each vehicle on the basis of the generated task sequence, as described above.

Next,

(Case 2) Example of using a taxi

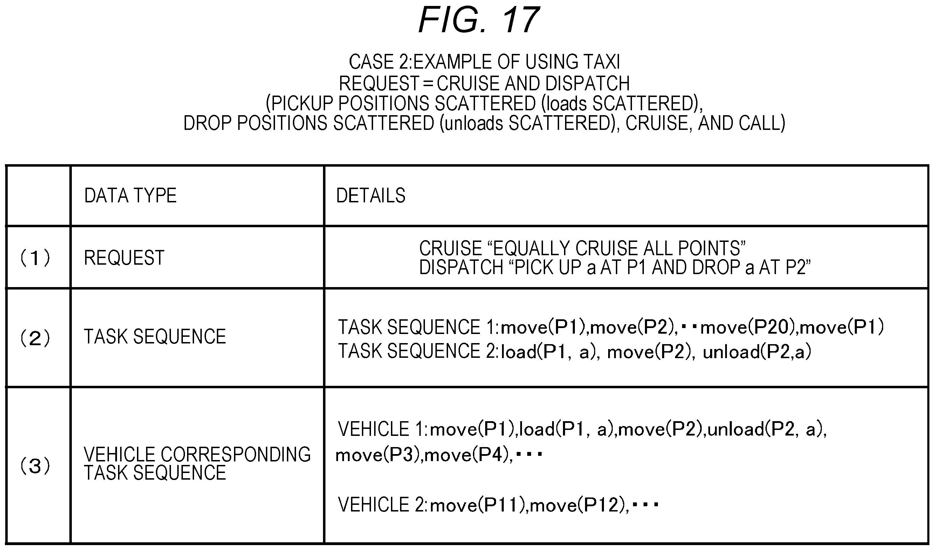

will be described with reference to Fig. 17.

The request is cruise and dispatch.

This is a processing example in which the pickup positions are scattered (load scattered), the drop positions are also scattered (unload scattered), cruise is required, and call is made.

Fig. 17 illustrates the following three data, similarly to Fig. 16:

(1) request;

(2) task sequence; and

(3) vehicle corresponding task sequence.

Here, the (1) request is predetermined "cruise" and "dispatch" as the request received from the request transmission terminal such as the user terminal, for example. Here, the "dispatch" request is the following request:

Request = "Pick up a at P1 and drop a at P2".

Note that, as described above, in reality, the node identifiers of P1 and the like are not included in the request received from the user terminal, for example. The node identifier is a node identifier acquired by the request processing unit 121 or the task management unit 122 from the map DB 134 on the basis of the position information obtained from the received request or the like.

The task management unit 122 of the task management server 101 generates one or more minimum-unit task sequences for executing the request in response to the request.

The following two task sequences illustrated in Fig. 17(2) are generated:

Task sequence 1 (corresponding to cruise) = move (P1), move (P2), ..., move (P20), move (P1); and

Task sequence 2 (corresponding dispatch) = load (P1, a), move (P2), unload (P2, a).

Task sequence 1 (corresponding to cruise) = move (P1), move (P2), ..., move (P20), move (P1) is a task sequence of moving and cruising at the node P1 to node P20 in order.

Task sequence 2 (corresponding dispatch) = load (P1, a), move (P2), unload (P2, a) is a sequence of picking up (load) a customer a at the node P1, moving (move) to the node P2, and dropping (unload) the customer a at the node P2.

Moreover, the task management unit 122 of the task management server 101 assigns the two task sequences to the vehicle capable of executing the task sequences at the minimum cost, and generates the vehicle corresponding task sequence indicating a task sequence to be executed by the vehicle.

The result is the following two vehicle corresponding task sequences illustrated in (3) vehicle corresponding task sequence in Fig. 17:

Vehicle 1 corresponding task sequence = move (P1), load (P1, a), move (P2), unload (P2, a), move (P3), move (P4), ...; and

Vehicle 2 corresponding task sequence = move (P11), move (P12), ....

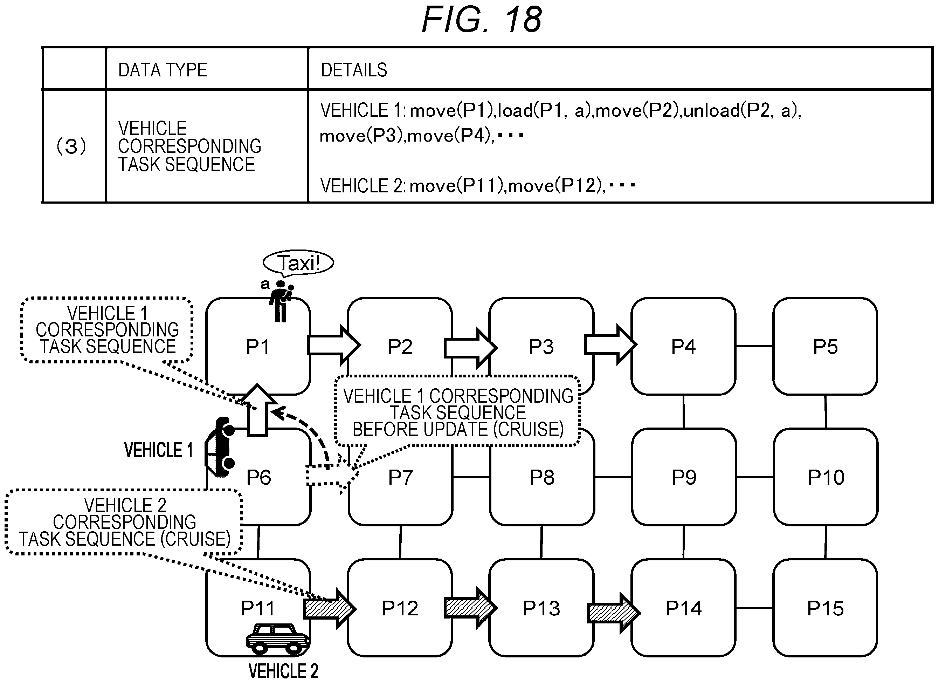

The two vehicle corresponding task sequences will be described with reference to Fig. 18. As illustrated in the lower section in Fig. 18, while both the vehicle 1 and the vehicle 2 are cruising, a dispatch task (task sequence 2) has occurred, and thus the dispatch task (task sequence 2) needs to be inserted into the vehicle corresponding task sequence of either the vehicle 1 or the vehicle 2.

The vehicle 1 is currently located at P6 and in a state before the vehicle 1 starts moving to P7 according to the cruise task. Meanwhile, the vehicle 2 is currently located at P11 and in a state before the vehicle 2 starts moving to P12 according to the cruise task.

The current position P6 of the vehicle 1 is close to P1 where the customer a is picked up, and the cost required to execute the dispatch task is low. Therefore, the task sequence corresponding to dispatch is inserted into the vehicle 1 corresponding task sequence.

As a result, the vehicle 1 corresponding task sequence = move (P1), load (P1, a), move (P2), unload (P2, a), move (P3), move (P4), ... illustrated in the upper table in Fig. 18 is generated.

As illustrated in the lower section in Fig. 18, the vehicle 1 cancels the next task element move (P7) of the cruise task and executes the dispatch task sequence, that is, the task sequence = move (P1), load (P1, a), move (P2), unload (P2, a). After that, the vehicle 1 returns to the cruise task from P2 and starts moving to P3.

Meanwhile, the vehicle 2 that does not execute the dispatch task continuously executes the cruise task.

In this way, in the present processing example,

while the vehicle 1 is cruising according to the vehicle 1 corresponding task sequence = move (P1), load (P1, a), move (P2), unload (P2, a), move (P3), move (P4), ...,

the task sequence 2 (corresponding dispatch) = load (P1, a), move (P2), unload (P2, a)

is inserted to the vehicle 1 corresponding task sequence to update the vehicle corresponding task sequence, and the vehicle 1 executes the generated new vehicle corresponding task sequence.

This sequence is a sequence of the vehicle 1 moving (move) to the node P1 during cruise, then picking up (load) the customer a at the node P1, moving (move) to the node P2, unloading (unload) the customer a at the node P2, and then returning to the cruise processing.

The task management server 101 generates the task sequence on the basis of the request, and further generates the vehicle corresponding task sequence that is the task sequence to be executed by each vehicle on the basis of the generated task sequence, as described above.

Next,

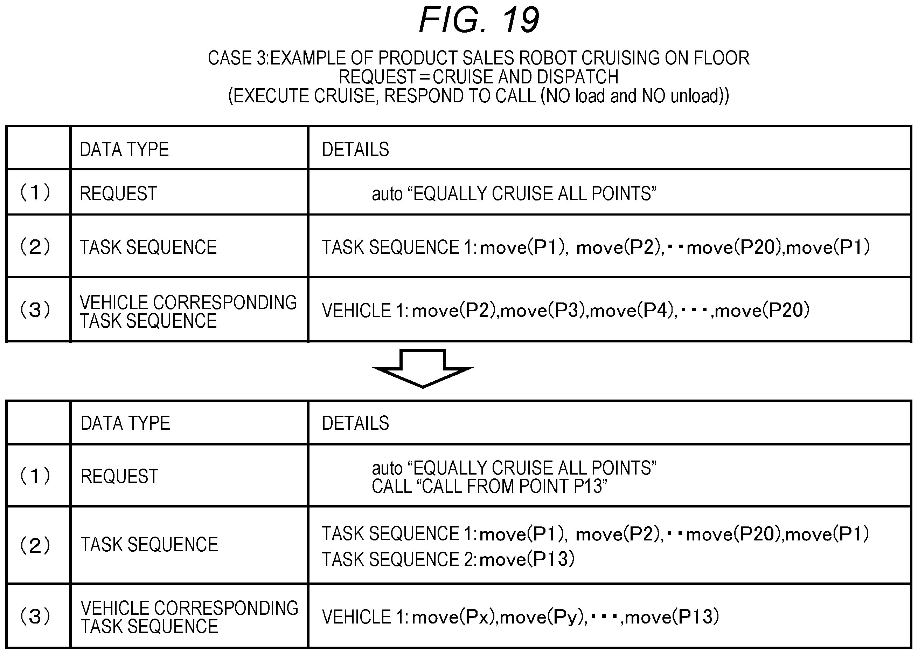

(Case 3) Example of a product sales robot that cruises on a floor of an office, or the like will be described with reference to Fig. 19.

The request is cruise and dispatch, and is a processing example of normally executing cruise, and heading to a call position in response to a generated call, one after another.

The upper section in Fig. 19 illustrates data during execution of normal cruise processing before a call is generated, and the lower section in Fig. 19 illustrates data after the call is generated and the following three data:

(1) request;
(2) task sequence; and
(3) vehicle corresponding task sequence.

The (1) request during execution of normal cruise processing before a call is generated illustrated in the upper table in Fig. 19 is "equally cruise at all of points", and the task management unit 122 of the task management server 101 generates the following task sequence illustrated in (2) in the upper table in Fig. 19:

Task sequence 1 (corresponding to cruise) = move (P1), move (P2), ..., move (P20), move (P1).

Task sequence 1 (corresponding to cruise) = move (P1), move (P2), ..., move (P20), move (P1) is a task sequence of moving and cruising at the node P1 to node P20 in order.

Moreover, the task management unit 122 of the task management server 101 assigns the task sequence to a vehicle and generates the vehicle corresponding task sequence indicating a task sequence to be executed by the vehicle.

The result is the following vehicle corresponding task sequence illustrated in (3) vehicle corresponding task sequence in the upper table in Fig. 19:

Vehicle 1 corresponding task sequence = move (P2), move (P3), move (P4), ....

The task management server receives the following request while the vehicle 1 is executing the vehicle 1 corresponding task sequence:

Request = Call from point P13.

The task management unit 122 of the task management server 101 generates the following task sequence illustrated in (2) in the lower table in Fig. 19 in response to the request:

Task sequence 2 (corresponding to call) = move (P13).

Moreover, the task management unit 122 of the task management server 101 assigns the task sequence 2 to a vehicle and generates the vehicle corresponding task sequence indicating a task sequence to be executed by the vehicle.

The result is the following vehicle corresponding task sequence illustrated in (3) vehicle corresponding task sequence in the lower table in Fig. 19:

Vehicle 1 corresponding task sequence = move (Px), move (Py), ..., move (P13), ....

Px and Py are positions determined on the basis of the current location of the vehicle 1 during cruise and are determined on the basis of the shortest movement route from the current location of the vehicle 1 to P13.

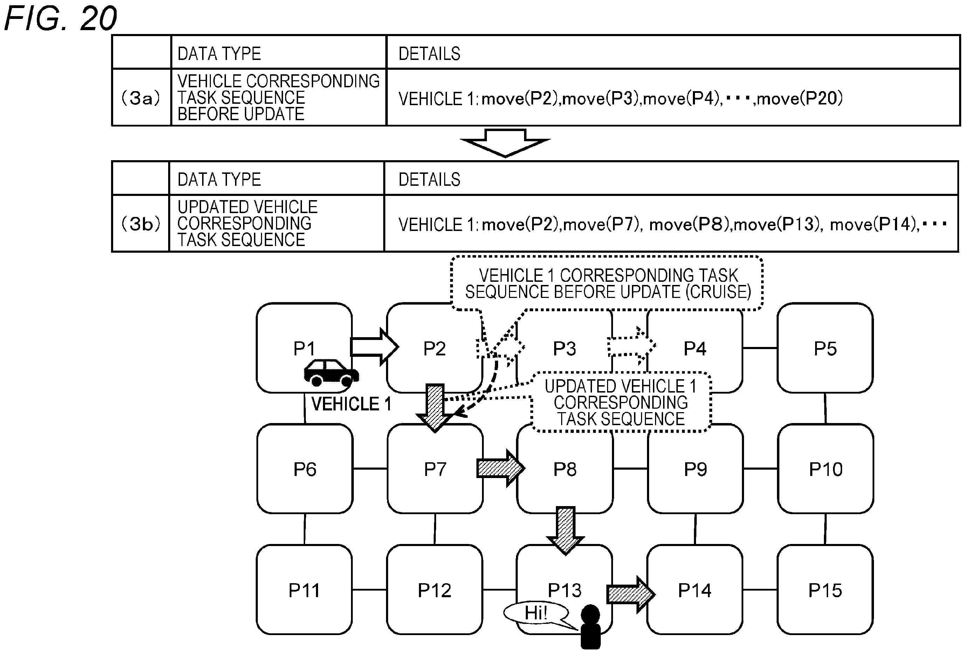

The vehicle corresponding task sequence will be described with reference to Fig. 20. As illustrated in the lower section in Fig. 20, the vehicle 12 is cruising, the current location is P1, and the vehicle 12 is scheduled to cruise in the order of P2 to P3 to P4.

The vehicle corresponding task sequence at this point is the vehicle 1 corresponding task sequence below:

Vehicle 1 corresponding task sequence = move (P2), move (P3), move (P4), ...,

as illustrated in the upper section (3a) in Fig. 20.

The task management server receives the following request while the vehicle 1 is executing the vehicle 1 corresponding task sequence:

Request = Call from point P13.

The task management unit 122 of the task management server 101 inserts the task sequence for executing the task of call processing into the vehicle 1 corresponding task sequence in response to the request to generate the updated vehicle 1 corresponding task sequence.

The result is the following vehicle corresponding task sequence illustrated in (3b) vehicle corresponding task sequence in the upper section in Fig. 20:

Vehicle 1 corresponding task sequence = move (P2), move (P7), move (P8), move (P13), move (P14), ....

The move (P2), move (P7), move (P8), move (P13) in the vehicle corresponding task sequence are elements for moving on the shortest route from the current location (P1) of the vehicle 1 during execution of cruise to P13.

The task management server 101 instantly generates the task sequence in response to a new request, and further generates the vehicle corresponding task sequence that is the task sequence to be executed by each vehicle on the basis of the generated task sequence, as described above.

[5. Specific example of processing of adding new task sequence based on new request to vehicle corresponding task sequence being executed in vehicle to update vehicle corresponding task sequence]

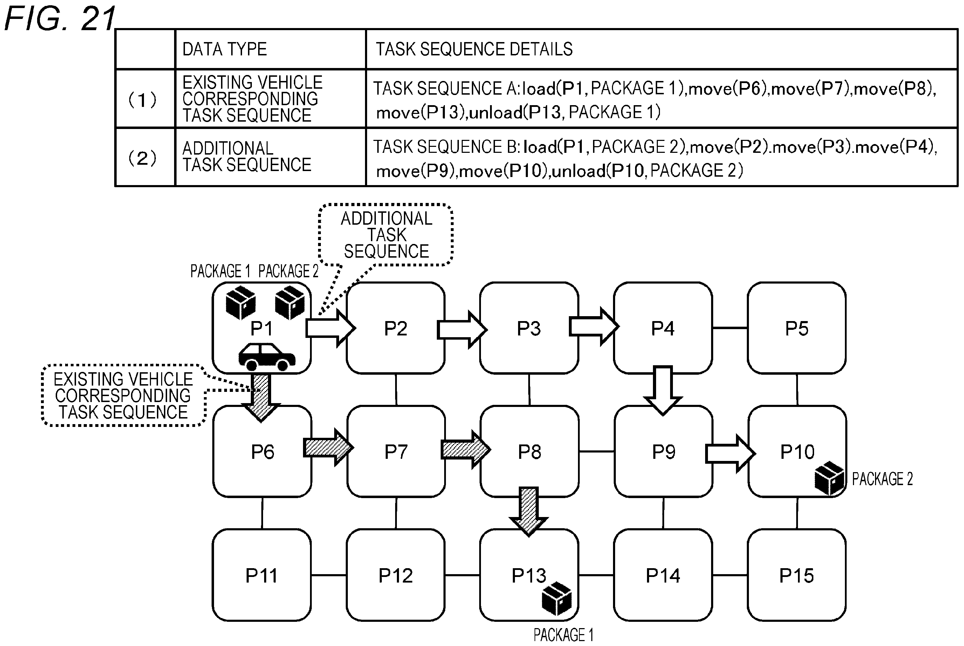

Next, a specific example of processing of adding a new task sequence based on a new request to a vehicle corresponding task sequence being executed in a vehicle to update the vehicle corresponding task sequence will be described with reference to Fig. 21 and the subsequent drawings.

Fig. 21 illustrates the following data:

(1) existing vehicle corresponding task sequence; and
(2) additional task sequence.

The (1) existing vehicle corresponding task sequence is a vehicle corresponding task sequence being currently executed by the vehicle 1.

The (2) additional task sequence is a task sequence generated on the basis of a new request, and the task management unit 122 of the task management server 101 performs processing of inserting the (2) additional task sequence into the (1) existing vehicle corresponding task sequence.

The processing of adding the additional task sequence to the existing vehicle corresponding task sequence, that is, a procedure of the processing of updating the vehicle corresponding task sequence will be described with reference to Fig. 21 and the subsequent drawings. Note that, in the update process, the task elements of the existing vehicle corresponding task sequence and the additional task sequence are sequentially changed. Here, description will be given under the following settings:

(1) existing vehicle corresponding task sequence = task sequence A; and
(2) additional task sequence = task sequence B,
as illustrated in the drawings including data of update processes of the sequences.

The task sequences are the following sequences, as illustrated in Fig. 21:

(1) existing vehicle corresponding task sequence = load (P1, package 1), move (P6), move (P7), move (P8), move (P13), unload (P13, package 1); and
(2) additional task sequence = load (P1, package 2), move (P2), move (P3), move (P4), move (P9), move (P10), unload (P10, package 2).

The (1) existing vehicle corresponding task sequence is a task sequence of loading (load) the package 1 at P1, moving to P6, P7, P8, and P13, and unloading (unload) the package 1 at P13.

The (2) additional task sequence is a task sequence of loading (load) the package 2 at P1, moving to P2, P3, P4, P9, and P10, and unloading (unload) the package 2 at P10.

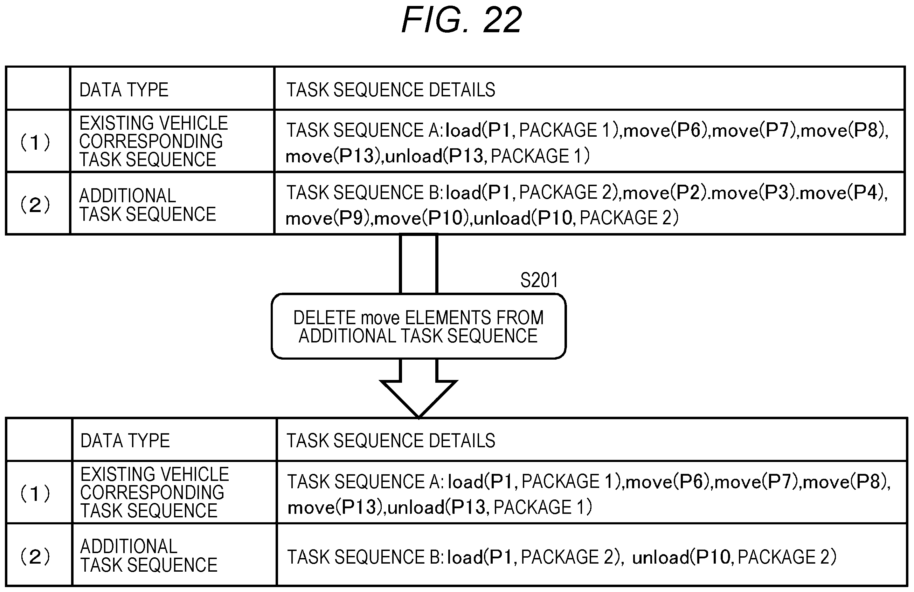

A processing procedure of adding the (2) additional task sequence to the (1) existing vehicle corresponding task sequence will be described with reference to Fig. 22 and the subsequent drawings.

First, the move task elements (moving task elements) are deleted from the additional task sequence as illustrated in step S201 in Fig. 22. By the processing, the (2) the additional task sequence is changed as follows:
(2) additional task sequence = load (P1, package 2), unload (P10, package 2).

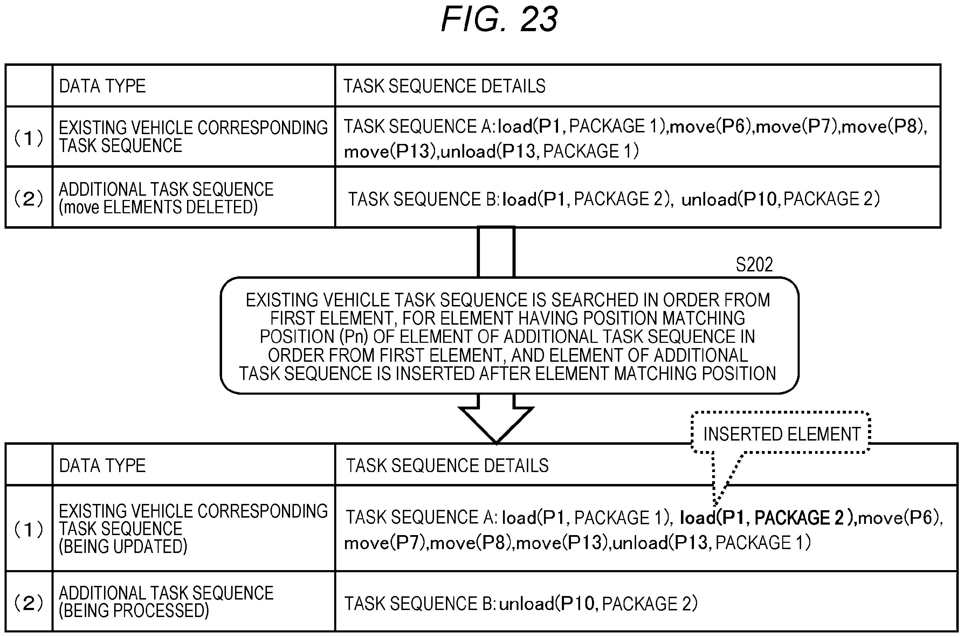

Next, as illustrated in step S202 in Fig. 23, the existing vehicle task sequence is searched in order from the first element, for an element having a position matching the position (Pn) of an element of the additional task sequence in order from the first element, and the element of the additional task sequence is inserted after the element of the existing vehicle task sequence, the element matching the position of the additional task sequence.

Note that the inserted task element is deleted from the (2) additional task sequence.

First, an element of the existing vehicle task sequence having the position matching the position (P1) of the first element load (P1, package 2) of the additional task sequence is the first element load (P1, package 1) of the existing vehicle task sequence.

Therefore, the first element load (P1, package 2) of the additional task sequence is inserted after the first element load (P1, package 1) of the existing vehicle task sequence.

As a result of the processing, as illustrated in the lower table in Fig. 23, the (1) existing vehicle corresponding task sequence and the (2) additional task sequence are changed as follows:

(1) existing vehicle corresponding task sequence = load (P1, package 1), load (P1, package 2), move (P6), move (P7), move (P8), move (P13), unload (P13, package 1); and

(2) additional task sequence = unload (P10, package 2) .

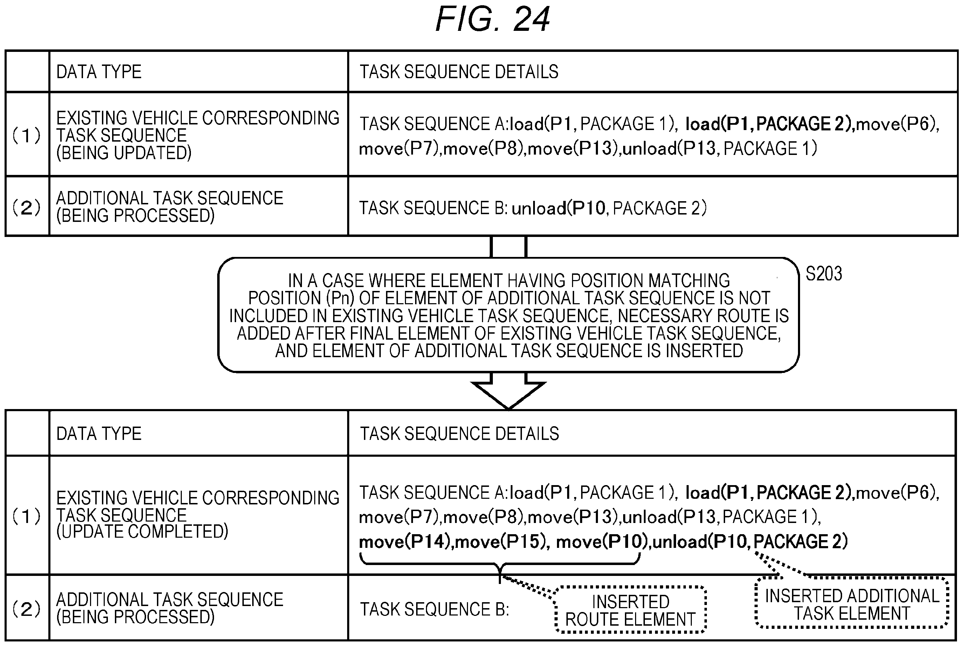

Note that the processing in step S202 is sequentially executed for all the task elements included in the additional task sequence. In this processing, in a case where there are no more elements included in the additional task sequence, the processing is terminated. In a case where the task element remains, the processing in step S203 in Fig. 24 is executed.

In the case where the task element remains in the additional task sequence, next, the processing in step S203 in Fig. 24 is performed. That is, in the case where there is no element in the existing vehicle task sequence, the element having the position matching the position (Pn) of an element of the additional task sequence, a necessary route is added after the final element of the existing vehicle task sequence, and the element of the additional task sequence is inserted.

There is no element of the existing vehicle task sequence, the element having the position matching the position (P10) of the first element unload (P10, package 2) of the additional task sequence. Therefore, a necessary route is added after the final element of the existing vehicle task sequence, and the first element unload (P10, package 2) of the additional task sequence is inserted into the end.

As a result of the processing, as illustrated in the lower table in Fig. 24, the (1) existing vehicle corresponding task sequence and the (2) additional task sequence are changed as follows:

(1) existing vehicle corresponding task sequence (update completed) = load (P1, package 1), load (P1, package 2), move (P6), move (P7), move (P8), move (P13), unload (P13, package 1), move (P14), move (P15), move (P10), unload (P10, package 2); and

(2) additional task sequence = none

Note that, in both the existing vehicle corresponding task sequence and the additional task sequence after update is completed,

the task element = unload (P13, package 1), and

the task elements = move (P14), move (P15), move (P10), unload (P10, package 2)

are added elements. Among the elements, move(P14), move(P15), and move(P10) are elements added as the necessary route, and unload (P10, package 2) is the element that remained in the original additional task sequence.

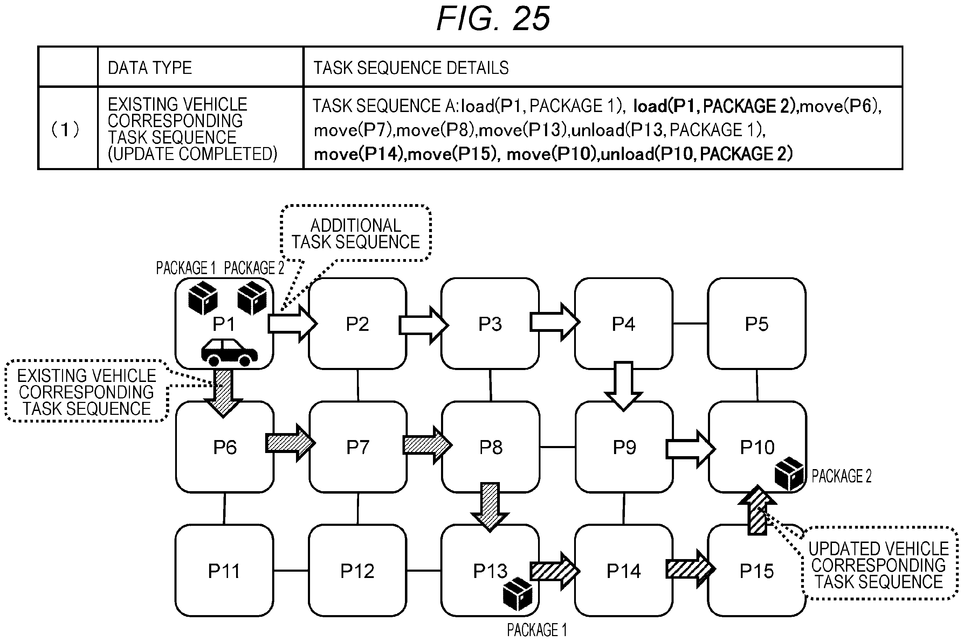

As a result, a finally updated vehicle corresponding task sequence is completed as illustrated in Fig. 25. The updated vehicle corresponding task sequence is a task sequence of loading the packages 1 and 2 at P1, moving to P6, P7, P8, and P13, unloading (unload) the package 1 at P13, further moving to P14, P15, and P10, and unloading (unload) the package 2 at P10, as illustrated in the lower map in Fig. 25.

The updated task sequence is a task sequence capable of executing the original existing vehicle corresponding task sequence and the new additional task sequence together.

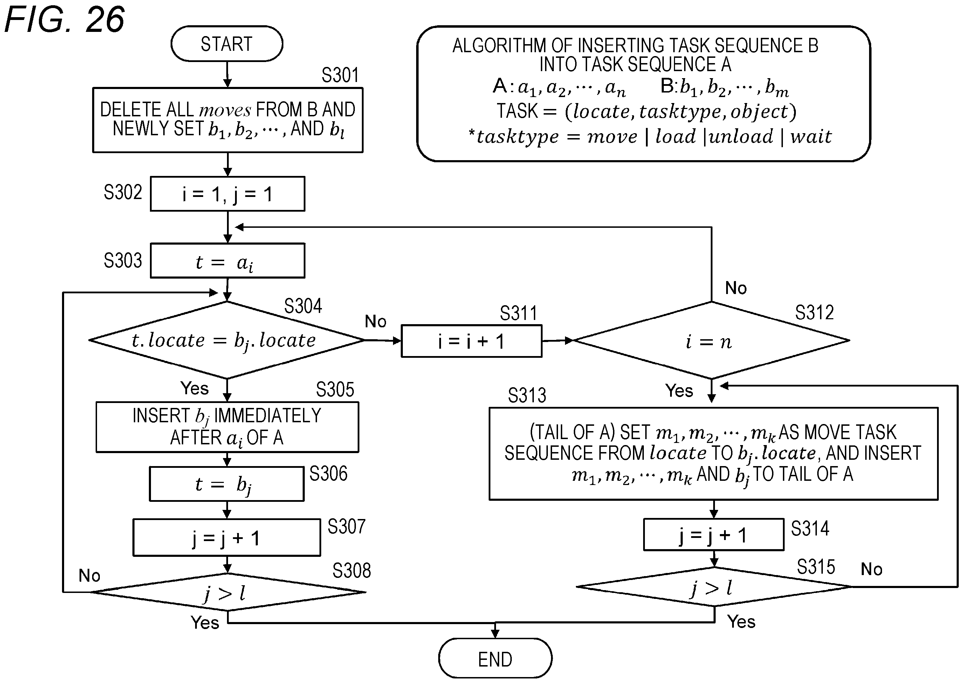

The processing described with reference to Figs. 21 to 25, that is, the processing procedure of inserting an additional task sequence based on a new request into an existing vehicle corresponding task sequence will be described with reference to the flowchart in Fig. 26.

The flowchart illustrated in Fig. 26 is executed by the task management unit 122 of the task management server 101.

Note that, in the flow illustrated in Fig. 26,

A = existing vehicle corresponding task sequence, and

B = additional task sequence, and

the task elements of A = existing vehicle corresponding task sequence are a1, a2, a3, ..., and an from the beginning, and the task sequences of B = additional task sequence are b1, b2, b3, ..., and bm from the beginning.

Hereinafter, processing of each step of the flow will be described.

(step S301)

First, in step S301, all the move task elements (moving task elements) are deleted from the task elements of the additional task sequence B.

The task elements of the task sequence B after the deletion are b1, b2, ... and b1.

This processing corresponds to the processing described above with reference to Fig. 22.

(steps S302 and S303)

Next, in step S302,
i = 1 and j = 1 are set, and
in step S303,
t = $a_i$ is set. That is, t is the task element selected in order from the beginning of A = existing vehicle corresponding task sequence.

These processes are initial settings of parameters.

(step S304)

Next, in step S304,
whether or not the position (locate) of the task element t (= ai) selected in order from the beginning of the existing vehicle corresponding task sequence A matches the position (locate) of the task element ($b_j$) of the task sequence B from which the move task elements (moving task elements) have been deleted is determined In the case where the positions match, the processing proceeds to step S305.

In the case where the positions do not match, the processing proceeds to step S311.

(step S305)

In step S304, in a case where it is determined that the position (locate) of the task element t (= ai) selected in order from the beginning of the existing vehicle corresponding task sequence A matches the position (locate) of the task element ($b_j$) of the task sequence B from which the move task elements (moving task elements) have been deleted, the processing in step S305 is executed.

In step S305, the task element ($b_j$) of the task sequence B is inserted immediately after the task element t (= ai) of the existing vehicle corresponding task sequence A.

This processing corresponds to the processing described above with reference to Fig. 23.

(steps S306 and S307)

Next, in step S306,
t = $b_j$ is set, and
in step S307,
j = j + 1 is set.

That is, the parameter is updated to change the element to be selected from the additional task sequence B after the move task elements are deleted to the next element.

(step S308)

Next, in step S308,
determination processing according to the following determination expression is performed:
j > 1. This is determination processing as to whether or not an unprocessed element remains in the additional task sequence B after the move task elements are deleted.

In the case where the above determination expression is not satisfied, it is determined that the unprocessed task element remains, and the processing returns to step S304. In the case where the above determination expression is satisfied, it is determined that no unprocessed task element remains, and the processing is terminated.

(step S311)

On the other hand, in step S304, in a case where it is determined that the position (locate) of the task element t (= ai) selected in order from the beginning of the existing vehicle corresponding task sequence A does not match the position (locate) of the task element (b$_j$) of the task sequence B from which the move task elements (moving task elements) have been deleted, the processing in step S311 is executed.

In step S311, processing of updating the parameter i of the task element t (= ai) of the existing vehicle corresponding task sequence A to the next element, that is, processing of:

$$i = i + 1$$

is executed.

(step S312)

Next, in step S312, determination processing according to the following determination expression is performed:
I = n. This is determination processing as to whether or not a succeeding task element remains in the existing vehicle corresponding task sequence A.

In the case where the above determination expression is not satisfied, it is determined that the succeeding task element remains, and the processing returns to step S303. In the case where the above determination expression is satisfied, it is determined that no succeeding task element remains, and the processing proceeds to step S313.

(step S313)

In the case where the determination expression in step S312 is satisfied, and it is determined that no succeeding task element remains in the existing vehicle corresponding task sequence A, the processing in step S313 is executed.

In step S313, the move task elements (moving task elements) (= m$_1$, m$_2$, ..., m$_k$) from the position (locate) of the tail task element of the existing task sequence A to the position (locate) of the task element (b$_j$) of the task sequence B are added after the tail task element of the existing vehicle corresponding task sequence A, and the task element (b$_j$) of the task sequence B is added to the end.

This processing corresponds to the processing described above with reference to Fig. 24.

(step S314)

Next, in step S314,

$$j = j + 1$$

is set.

That is, the parameter is updated to change the element to be selected from the additional task sequence B after the move task elements are deleted to the next element.

(step S315)

Next, in step S315, determination processing according to the following determination expression is performed:
j > 1. This is determination processing as to whether or not an unprocessed element remains in the additional task sequence B after the move task elements are deleted.

In the case where the above determination expression is not satisfied, it is determined that the unprocessed task element remains, and the processing returns to step S304. In the case where the above determination expression is satisfied, it is determined that no unprocessed task element remains, and the processing is terminated.

By executing the processing according to the flow, it is possible to add a new additional task sequence to the existing vehicle corresponding task sequence to generate one updated vehicle corresponding task sequence.

[6. Specific example of processing of updating vehicle corresponding task sequence considering task priority]

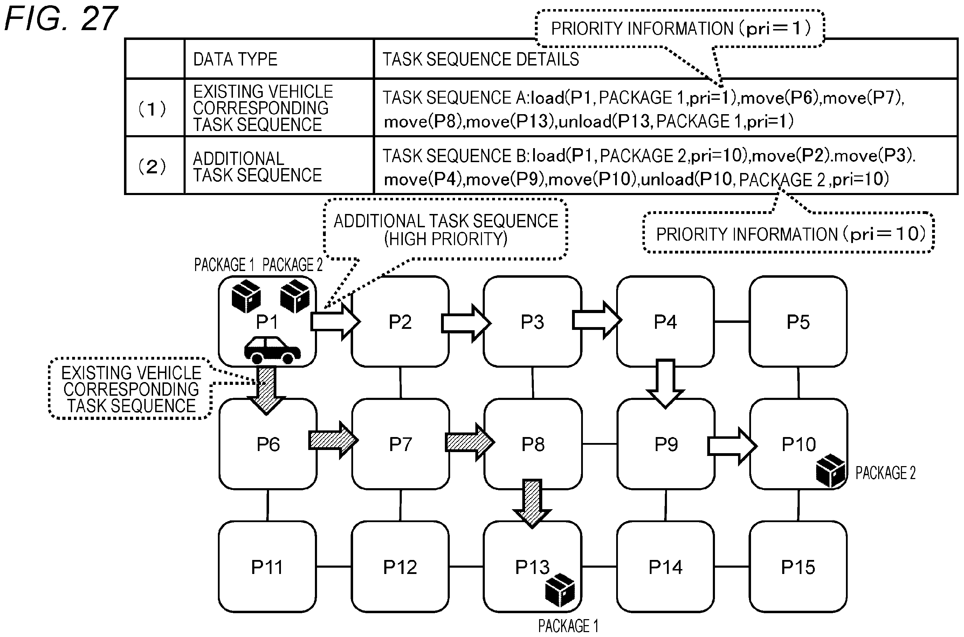

Next, a specific example of updating a vehicle corresponding task sequence in consideration of a task priority in the case of adding a new task sequence based on a new request to the vehicle corresponding task sequence being executed in a vehicle will be described with reference to Fig. 27 and the subsequent drawings.

Fig. 27 illustrates the following data:

(1) existing vehicle corresponding task sequence; and
(2) additional task sequence.

The (1) existing vehicle corresponding task sequence is a vehicle corresponding task sequence being currently executed by the vehicle 1.

The (2) additional task sequence is a task sequence generated on the basis of a new request, and the task management unit 122 of the task management server 101 performs processing of inserting the (2) additional task sequence into the (1) existing vehicle corresponding task sequence.

Arrangement of the task elements of the following two task sequences:

(1) existing vehicle corresponding task sequence = task sequence A; and
(2) additional task sequence = task sequence B,
illustrated in Fig. 27 are similar to those described above with reference to Fig. 21.

However, in the present example, priority information (pri) is set for the task elements (load, unload) of loading and unloading a package.

The existing vehicle corresponding task sequence = task sequence A in the present example has the following task elements:

load (P1, package 1, pri = 1); and
unload (P13, package 1, pri = 1), and
these task elements mean processing of loading the package 1 at P1 and processing of unloading the package 1 at P13, and moreover, mean that the priority of these tasks is 1.

Meanwhile, the additional task sequence = task sequence B has the following task elements:

load (P1, package 2, pri = 10); and
unload (P10, package 2, pri = 10), and
these task elements mean processing of loading the package 2 at P1 and processing of unloading the package 2 at P10, and moreover, mean that the priority of these tasks is 10.

A higher value of the priority (pri) means a higher priority. That is, in the present example, loading and unloading of the package 2, which are the additional tasks, have high priority.

The task sequences are the following sequences, as illustrated in Fig. 27:

(1) existing vehicle corresponding task sequence = load (P1, package 1, pri = 1), move (P6), move (P7), move (P8), move (P13), unload (P13, package 1, pri = 1); and
(2) additional task sequence = load (P1, package 2, pri = 10), move (P2), move (P3), move (P4), move (P9), move (P10), unload (P10, package 2, pri = 10).

The (1) existing vehicle corresponding task sequence is a task sequence of loading (load) the package 1 at P1, moving to P6, P7, P8, and P13, and unloading (unload) the package 1 at P13.

The (2) additional task sequence is a task sequence of loading (load) the package 2 at P1, moving to P2, P3, P4, P9, and P10, and unloading (unload) the package 2 at P10.

Note that the loading and unloading of the package 2 of the additional task sequence has higher priority than the loading and unloading of the package 1 of the existing vehicle corresponding task sequence.

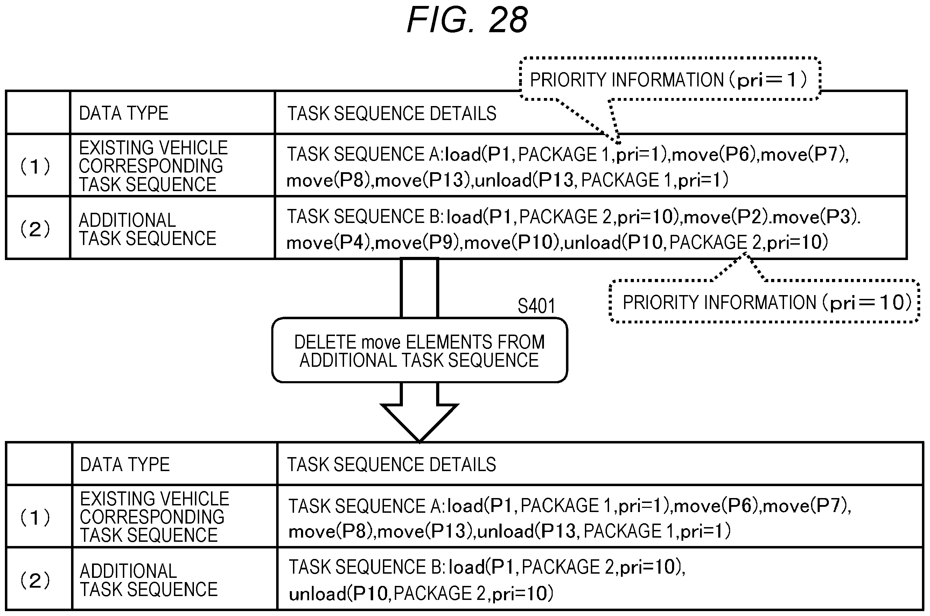

A processing procedure of adding the (2) additional task sequence to the (1) existing vehicle corresponding task sequence in consideration of the priority will be described with reference to Fig. 28 and the subsequent drawings. First, the move task elements (moving task elements) are deleted from the additional task sequence as illustrated in step S401 in Fig. 28. By the processing, the (2) the additional task sequence is changed as follows:
(2) additional task sequence = load (P1, package 2, pri = 10), unload (P10, package 2, pri = 10).

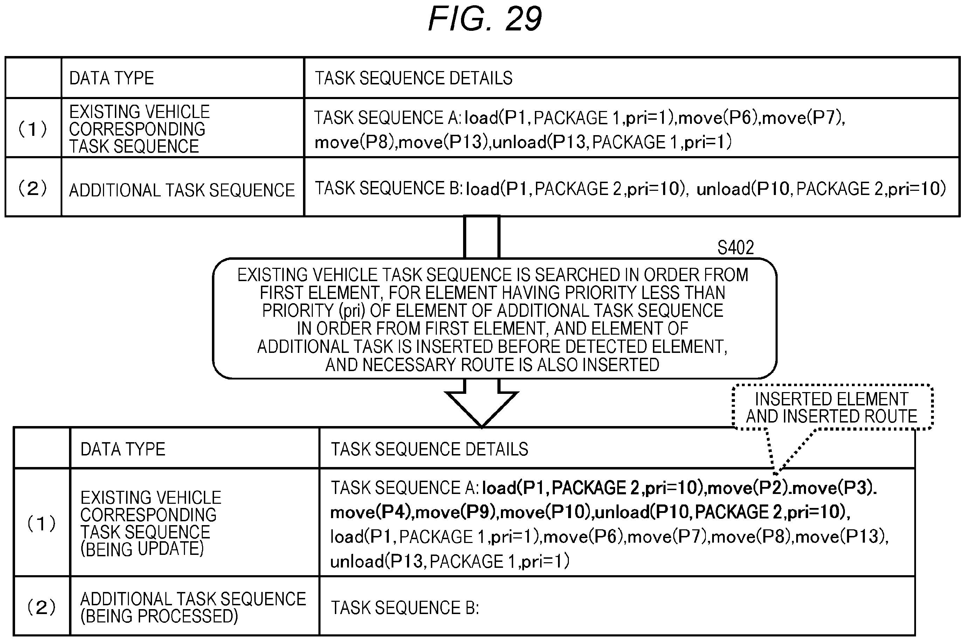

Next, as illustrated in step S402 in Fig. 29, the existing vehicle task sequence is searched in order from the first element, for an element having a priority less than the priority (pri) of an element of the additional task sequence in order from the first element, and the element of the additional task sequence is inserted before the detected element of the existing vehicle task sequence. Moreover, a necessary route is inserted.

Note that the inserted task element is deleted from the (2) additional task sequence.

First, an element of the existing vehicle task sequence having the priority less than the priority (pri) of the first element load (P1, package 2, pri = 10) of the additional task sequence is the first element load (P1, package 1, pri = 1) of the existing vehicle task sequence.

Therefore, the first element load (P1, package 2, pri = 10) of the additional task sequence is inserted before the first element load (P1, package 1, pri = 10) of the existing vehicle task sequence. Moreover, a necessary route is inserted.

As a result of the processing, as illustrated in the lower table in Fig. 29, the (1) existing vehicle corresponding task sequence and the (2) additional task sequence are changed as follows:

(1) existing vehicle corresponding task sequence = load (P1, package 2, pri = 10), move (P2), move (P3), move (P4), move (P9), move (P10), unload (P10, package 2, pri = 10), load (P1, package 1, pri = 1), move (P6), move (P7), move (P8), move (P13), unload (P13, package 1, pri = 1); and
(2) additional task sequence = unload (P10, package 2, pri = 10).

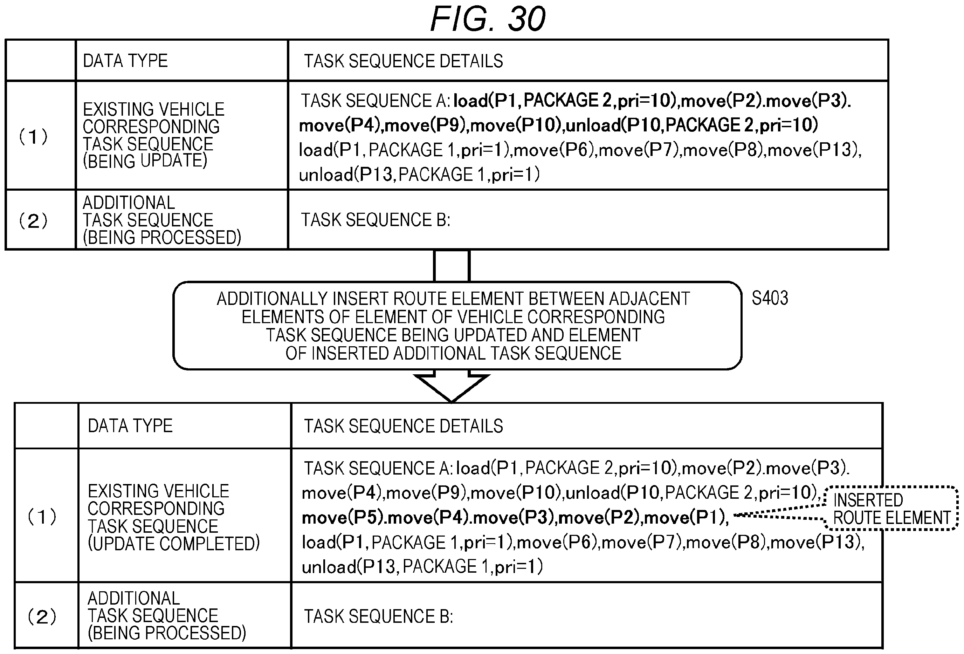

Next, processing illustrated in step S403 in Fig. 30 is performed. That is, a route element between adjacent elements of the element of the vehicle corresponding task sequence being updated and the element of the inserted additional task sequence is additionally inserted.

As a result of the processing, as illustrated in the lower table in Fig. 30, the (1) existing vehicle corresponding task sequence and the (2) additional task sequence are changed as follows:

(1) existing vehicle corresponding task sequence (update completed) = load (P1, package 2, pri = 10), move (P2), move (P3), move (P4), move (P9), move (P10), unload (P10, package 2, pri = 10), move (P5), move (P4), move (P3), move (P2), move(P1), load (P1, package 1, pri = 1), move (P6), move (P7), move (P8), move (P13), unload (P13, package 1, pri = 1); and
(2) additional task sequence = none

Note that the processing in steps S402 to S403 is sequentially executed for all the task elements included in the additional task sequence.

Note that, in both the existing vehicle corresponding task sequence and the additional task sequence after update is completed, the following task elements:

task elements = load (P1, package 2, pri = 10), move (P2), move (P3), move (P4), move (P9), move (P10), unload (P10, package 2, pri = 10)
are the tasks added by the additional task sequence including the high priority task in step S402. Moreover,
the task elements = move (P5), move (P4), move (P3), move (P2), move (P1)
are the route elements additionally inserted in step S403. That is, the task elements are the route elements between adjacent elements of the element of the vehicle corresponding task sequence being updated and the element of the inserted additional task sequence.

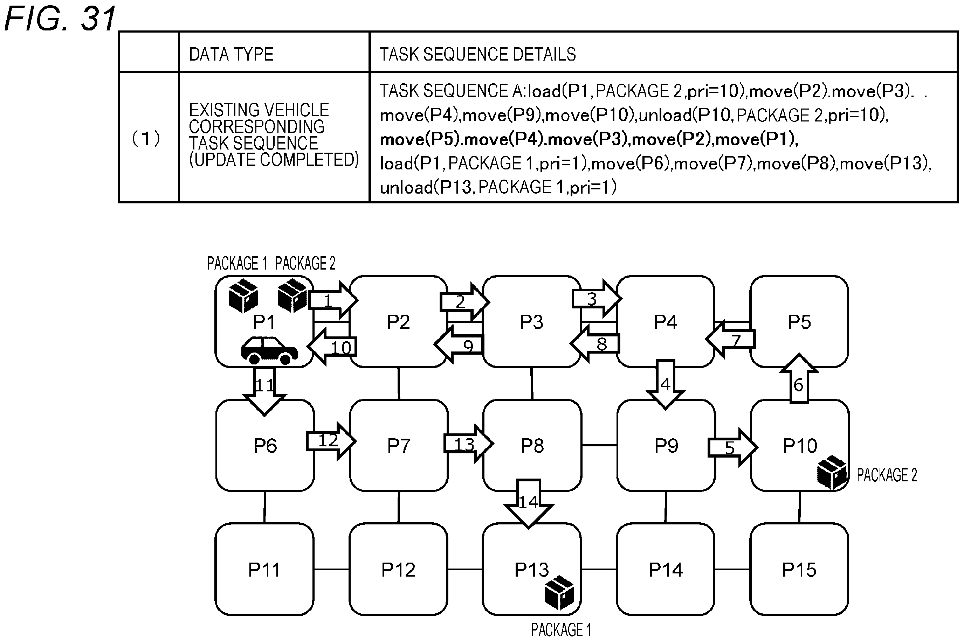

As a result, a finally updated vehicle corresponding task sequence is completed as illustrated in Fig. 31. The updated vehicle corresponding task sequence is a task sequence of loading the package 2 at P1, moving to P2, P3, P4, P9, and P10, unloading (unload) the package 2 at P10, further moving to P5, P4, P3, P2, and P1, loading the package 1 at P1, moving to P6, P7, P8, and P13, and unloading (unload) the package 1 at P13, as illustrated in the lower map in Fig. 31.

The updated task sequence is a task sequence capable of executing the original existing vehicle corresponding task sequence and the new additional task sequence together.

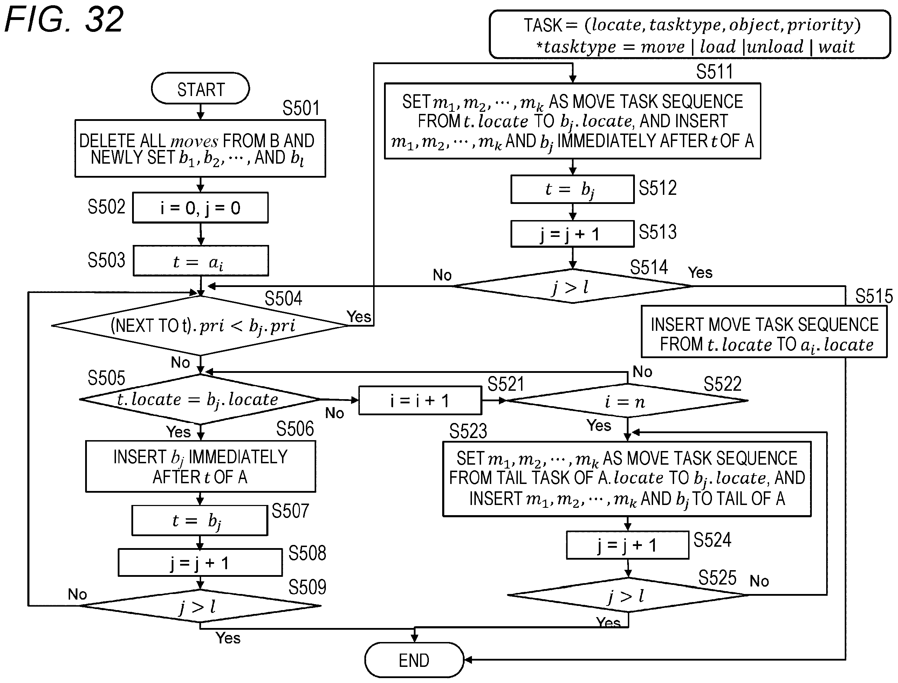

The processing described with reference to Figs. 27 to 31, that is, the processing procedure of inserting an additional task sequence based on a new request into an existing vehicle corresponding task sequence in consideration of the task priority will be described with reference to the flowchart in Fig. 32.

The flowchart illustrated in Fig. 32 is executed by the task management unit 122 of the task management server 101.

Note that, in the flow illustrated in Fig. 32,

A = existing vehicle corresponding task sequence, and
B = additional task sequence, and
the task elements of A = existing vehicle corresponding task sequence are a1, a2, a3, ..., and an from the beginning, and the task sequences of B = additional task sequence are b1, b2, b3, ..., and bm from the beginning.

Hereinafter, processing of each step of the flow will be described.

(step S501)

First, in step S501, all the move task elements (moving task elements) are deleted from the task elements of the additional task sequence B.
The task elements of the task sequence B after the deletion are b1, b2, ... and bl.
This processing corresponds to the processing described above with reference to Fig. 28.

(steps S502 and S503)

Next, in step S502,
i = 0 and j = 0 are set, and
in step S503,
t = ai is set. That is, t is the task element selected in order from the beginning of A = existing vehicle corresponding task sequence.
These processes are initial settings of parameters.

(step S504)

Next, in step S504,
whether or not the priority (pri) of the task element (= $b_j$) of the task sequence B from which the move task elements (moving task elements) have been deleted is higher than the next (= next to ai) priority (pri) of the task element t selected in order from the beginning of the existing vehicle corresponding task sequence A is determined.
In the case where the priority is high, the processing proceeds to step S511.
In the case where the priority is not high, the processing proceeds to step S505.

(step S505)

In step S504, in the case where it is determined that the priority (pri) of the task element (= $b_j$) of the task sequence B from which the move task elements (moving task elements) have been deleted is not higher than the next (= next to ai) priority (pri) of the task element t selected in order from the beginning of the existing vehicle corresponding task sequence A, the processing proceeds to step S505.
In step S505, whether or not the position (locate) of the task element t (= ai) selected in order from the beginning of the existing vehicle corresponding task sequence A matches the position (locate) of the task element ($b_j$) of the task sequence B from which the move task elements (moving task elements) have been deleted is determined.
In the case where the positions match, the processing proceeds to step S506.
In the case where the positions do not match, the processing proceeds to step S521.

(step S506)

In step S505, in a case where it is determined that the position (locate) of the task element t (= ai) selected in order from the beginning of the existing vehicle corresponding task sequence A matches the position (locate) of the task element ($b_j$) of the task sequence B from which the move task elements (moving task elements) have been deleted, the processing in step S506 is executed.
In step S506, the task element ($b_j$) of the task sequence B is inserted immediately after the task element t (= ai) of the existing vehicle corresponding task sequence A.

(steps S507 and S508)

Next, in step S507,
t = $b_j$ is set, and
in step S508,
j = j + 1 is set.
That is, the parameter is updated to change the element to be selected from the additional task sequence B after the move task elements are deleted to the next element.

(step S509)

Next, in step S509,
determination processing according to the following determination expression is performed:
j > 1. This is determination processing as to whether or not an unprocessed element remains in the additional task sequence B after the move task elements are deleted.
In the case where the above determination expression is not satisfied, it is determined that the unprocessed task element remains, and the processing returns to step S504. In the case where the above determination expression is satisfied, it is determined that no unprocessed task element remains, and the processing is terminated.

(step S511)

On the other hand, in step S504, in the case where it is determined that the priority (pri) of the task element (= $b_j$) of the task sequence B from which the move task elements (moving task elements) have been deleted is higher than the next (= next to ai) priority (pri) of the task element t selected in order from the beginning of the existing vehicle corresponding task sequence A, the processing proceeds to step S511.
In step S511, the move task elements (moving task elements) (= $m_1$, $m_2$, ..., $m_k$) from the position (locate) of the task element t (= ai) of the existing task sequence A to the position (locate) of the task element ($b_j$) of the task sequence B from which the move task elements (moving task elements) have been deleted are added immediately after the task element t (= ai) of the existing vehicle corresponding task sequence A, and the task element ($b_j$) of the task sequence B is added to the end.
This processing is the processing described above with reference to Fig. 29.

(steps S512 and S513)

Next, in step S512,
t = $b_j$ is set, and
in step S513,
j = j + 1 is set.
That is, the parameter is updated to change the element to be selected from the additional task sequence B after the move task elements are deleted to the next element.

(step S514)

Next, in step S514,
determination processing according to the following determination expression is performed:
j > I. This is determination processing as to whether or not an unprocessed element remains in the additional task sequence B after the move task elements are deleted.
In the case where the above determination expression is not satisfied, it is determined that the unprocessed task element remains, and the processing returns to step S504. In the case where the above determination expression is satisfied, it is determined that no unprocessed task element remains, and the processing proceeds to step S515.

(step S515)

In step S515, a move task element (moving task element) sequence from the position (locate) of the task element t (= $b_j$) added to the existing vehicle corresponding task sequence A to the position (locate) of the task element ai are added and the processing is terminated.
This processing is the processing described above with reference to Fig. 30.

(step S521)

On the other hand, in step S505, in a case where it is determined that the position (locate) of the task element t (= ai) selected in order from the beginning of the existing vehicle corresponding task sequence A does not match the position (locate) of the task element ($b_j$) of the task sequence B from which the move task elements (moving task elements) have been deleted, the processing in step S521 is executed.
In step S521, processing of updating the parameter i of the task element t (= ai) of the existing vehicle corresponding task sequence A to the next element, that is, processing of:

$$i = i + 1$$

is executed.

(step S522)

Next, in step S522,
determination processing according to the following determination expression is performed:
i = n. This is determination processing as to whether or not a succeeding task element remains in the existing vehicle corresponding task sequence A.
In the case where the above determination expression is not satisfied, it is determined that the succeeding task element remains, and the processing returns to step S505. In the case where the above determination expression is satisfied, it is determined that no succeeding task element remains, and the processing proceeds to step S523.

(step S523)

In the case where the determination expression in step S522 is satisfied, and it is determined that no succeeding task element remains in the existing vehicle corresponding task sequence A, the processing in step S523 is executed.
In step S523, the move task elements (moving task elements) (= $m_1$, $m_2$, ..., $m_k$) from the position (locate) of the tail task element of the existing task sequence A to the position (locate) of the task element ($b_j$) of the task sequence B are added after the tail task element of the existing vehicle corresponding task sequence A, and the task element ($b_j$) of the task sequence B is added to the end.

(step S524)

Next, in step S524,

$$j = j + 1$$

is set.
That is, the parameter is updated to change the element to be selected from the additional task sequence B after the move task elements are deleted to the next element.

(step S525)

Next, in step S525,
determination processing according to the following determination expression is performed:
j > 1. This is determination processing as to whether or not an unprocessed element remains in the additional task sequence B after the move task elements are deleted.
In the case where the above determination expression is not satisfied, it is determined that the unprocessed task element remains, and the processing returns to step S523. In the case where the above determination expression is satisfied, it is determined that no unprocessed task element remains, and the processing is terminated.
By executing the processing according to the flow, it is possible to add a new additional task sequence to the existing vehicle corresponding task sequence to generate one updated vehicle corresponding task sequence according to the rule of antecedently executing a task with high priority.

[7. Details of cost matching processing for determining to which vehicle corresponding task sequence new task sequence is to be additionally inserted]

Next, details of cost matching processing for determining to which vehicle corresponding task sequence the new task sequence is to be additionally inserted will be described.
As described above with reference to the flow in Fig. 7, when a new request is generated, for example, the task management unit 122 of the task management server 101 generates the minimum-unit task sequence in step S102 in the flow in Fig. 7 on the basis of the request, and then assigns the task sequence to the vehicle capable of executing the task sequence at the minimum cost and generates the vehicle corresponding task sequence indicating the task sequence to be executed by the vehicle in step S103.

In step S103 of the flow illustrated in Fig. 7, the task sequence generated by the task management unit 122 in step S102 is converted into the vehicle-unit task sequence, that is, the vehicle corresponding task sequence.

In the conversion processing, selection of the vehicle that enables the most efficient processing and setting of the processing sequence are executed. Specifically, sequence generation processing considering the cost and task priority is performed. Specific processing for the vehicle corresponding task sequence based on the cost, that is, a specific example of the cost matching processing will be described.

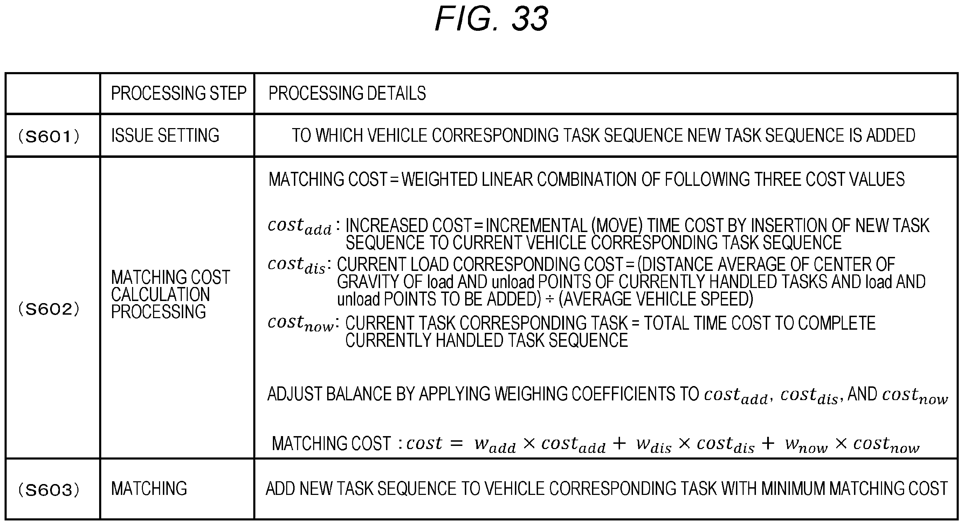

A specific sequence of the cost matching processing executed by the task management unit 122 of the task management server 101 will be described with reference to Fig. 33.

The task management unit 122 performs the processing in order of steps S601 to S603 in Fig. 33, determines the vehicle capable of executing the task sequence at the minimum cost, and generates the vehicle corresponding task sequence to be executed by the vehicle.

Step S601 presents an issue raised when generating a new task sequence based on a new request. That is, the issue is to which vehicle corresponding task sequence the new task sequence is to be added.

A specific method for solving this issue is matching cost calculation processing illustrated in step S602.

The matching cost calculation processing is executed in the following procedures as illustrated in step S602 in Fig. 33.

The matching cost is calculated by weighted linear combination of the following three cost values:

(1) $cost_{add}$: increased cost = incremental (movement) time cost by inserting the new task sequence to the current vehicle corresponding task sequence;
(2) $cost_{dis}$: current load corresponding cost = (a distance average of the center of gravity of load and unload points of the currently handling tasks and load and unload points to be added) ÷ (an average vehicle speed); and
(3) $cost_{now}$: current task corresponding cost = total time cost to complete the currently handling task sequence.

The matching cost is calculated by the above-described weighted linear combination of the three cost values.

That is, the matching cost (cost) is calculated by the following (Expression 1):

$$cost = w_{add} \times cost_{add} + w_{dis} \times cost_{dis} + w_{now} \times cost_{now}$$

$$... \text{(Expression 1)}.$$

Note that

$w_{add}$ is a weight (multiplication parameter) for $cost_{add}$,
$w_{dis}$ is a weight (multiplication parameter) for $cost_{dis}$, and
$w_{now}$ is a weight (multiplication parameter) for $cost_{now}$.

In step S602, a matching cost (cost) in the case of additionally inserting the additional task sequence into the vehicle corresponding task sequence set to each vehicle at the present moment, that is, the matching cost corresponding to each vehicle is calculated according to (Expression 1) above.

In step S103, the vehicle with the minimum matching cost is selected as a target to which the new additional task sequence is to be added.

The task management unit 122 of the task management server 101 determines the vehicle to which the new task sequence is to be assigned and the vehicle corresponding task sequence to be an addition target by such cost matching processing.

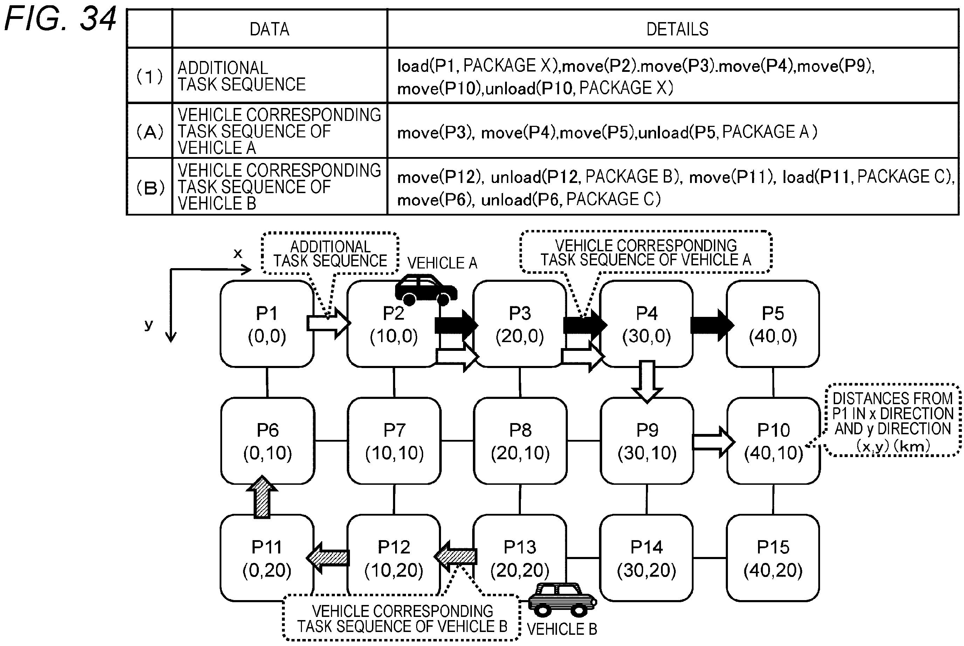

A specific processing example will be described with reference to Fig. 34 and the subsequent drawings.

Fig. 34 illustrates the following data:

(1) additional task sequence;

(A) vehicle corresponding task sequence of vehicle A; and
(B) vehicle corresponding task sequence of vehicle B.

The (1) additional task sequence is an additional task sequence generated on the basis of a new request. The additional task sequence needs to be assigned to either the vehicle A or the vehicle B, and the task management unit 122 of the task management server 101 calculates the matching cost described with reference to Fig. 33, determines which of the vehicle A or the vehicle B is more cost effective to assign the additional task sequence, and inserts the additional task sequence to the vehicle corresponding task sequence of the vehicle with a lower cost.

Note that the vehicle A is currently executing the vehicle corresponding task sequence illustrated in Fig. 34(2), and the vehicle B is executing the vehicle corresponding task sequence illustrated in Fig. 34(3).

The lower section in Fig. 34 illustrates specific processing sequences of the following three task sequences:

(1) additional task sequence;

(A) vehicle corresponding task sequence of the vehicle A; and
(B) vehicle corresponding task sequence of the vehicle B. Note that (0, 0) to (40, 20) or the like described at each node represents distances (km) in an x direction and in a y direction from a point P. For example, (20, 10) illustrated at P8 represents that the position of P8 is 20 km in the x direction and 10 km in the y direction from P1.

The (1) additional task sequence = load (P1, package X), move (P2), move (P3), move (P4), move (P9), move (P10), unload (P10, package X)

is a task sequence of loading a package X at P1, moving to P2, P3, P4, P9, and P10, and unloading the package X at P10.

The (A) vehicle corresponding task sequence of the vehicle A = move (P3), move (P4), move (P5), unload (P5, package A) is a task sequence of moving to P3, P4, and P5, and unloading a package A at P5.

The (B) vehicle corresponding task sequence of the vehicle B = move (P12), unload (P12, package B), move (P11), load (P11, package C), move (P6), unload (P6, package C) is a task sequence of moving to P12, unloading a package B at P12, moving to P11, unloading a package C at P11, moving to P6, and unloading the package C at P6.

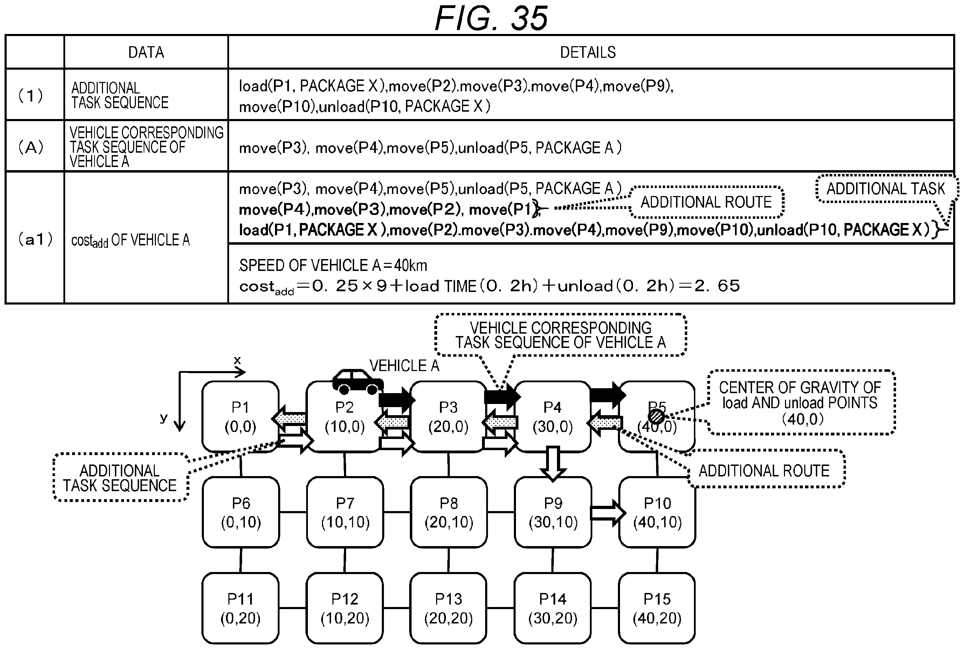

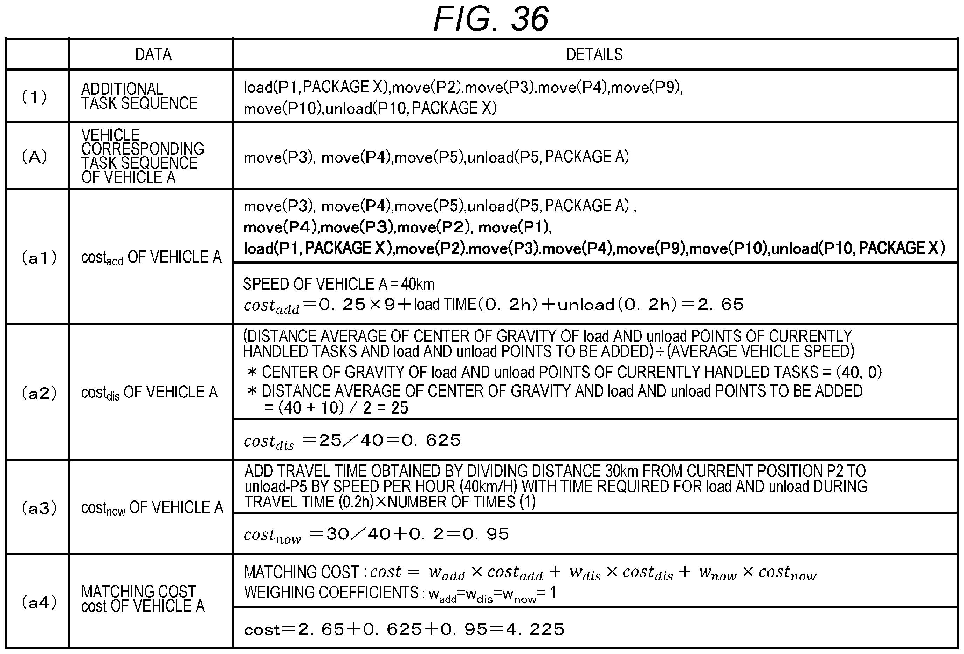

First, the matching cost calculation processing for the vehicle A will be described with reference to Figs. 35 and 36.

The upper table in Fig. 35 illustrates the following data:

(1) additional task sequence;

(A) vehicle corresponding task sequence of the vehicle A; and
(a1) cost$_{add}$ (increased cost) of the vehicle A.

The (1) additional task sequence is an additional takaku sequence described with reference to Fig. 34. That is, the (1) additional task sequence = load (P1, package X), move (P2), move (P3), move (P4), move (P9), move (P10), unload (P10, package X), and is a task sequence of loading a package X at P1, moving to P2, P3, P4, P9, and P10, and unloading the package X at P10.

The (A) vehicle corresponding task sequence of the vehicle A is a vehicle corresponding task sequence of the vehicle A described with reference to Fig. 34. The vehicle A is located at the position of P2, as illustrated in the lower section in Fig. 35. The vehicle corresponding task sequence of the vehicle A at this point is as follows. That is,

(A) vehicle corresponding task sequence of the vehicle A = move (P3), move (P4), move (P5), unload (P5, package A) is a task sequence of moving to P3, P4, and P5, and unloading a package A at P5.

The (a1) cost$_{add}$ (increased cost) of the vehicle A is the increased cost = incremental (movement) time cost by inserting a new task sequence to the current vehicle corresponding task sequence, as described above with reference to Fig. 33.

When the additional task sequence, that is, the additional task sequence illustrated in (1) in the table in Fig. 35 is added to the current vehicle corresponding task sequence of the vehicle A, that is, the vehicle corresponding task sequence of the vehicle A illustrated in (A) in the table in Fig. 35, the vehicle corresponding task sequence of the vehicle A is updated as follows, as illustrated in (a1) in the table in Fig. 35:

(a1) updated vehicle corresponding task sequence of the vehicle A = move (P3), move (P4), move (P5), unload (P5, package A), move (P4), move (P3), move (P2), move (P1), load (P1, package X), move (P2), move (P3), move (P4), move (P9), move (P10), unload (P10, package X).

This sequence is a task sequence of moving from P2 to P3, P4, and P5, unloading the package A at P5, then moving to P4, P3, P2, and P1, loading the package X at P1, then, moving to P2, P3, P4, P9, and P10, and unloading the package X at P10, as illustrated in the lower map in Fig. 35.

The cost$_{add}$ (increased cost) of the vehicle A is calculated using the following data:

the current vehicle corresponding task sequence of the vehicle A illustrated in (A); and

the updated vehicle corresponding task sequence of the vehicle A illustrated in (a1),

in the table in Fig. 35.

This processing will be described.

The speed of the vehicle A is 40 km.

Increased tasks by changing the current vehicle corresponding task sequence of the vehicle A in (A) to the updated vehicle corresponding task sequence of the vehicle A in (a1) are as follows:

(1) Increased moving (move) task = move (P4), move (P3), move (P2), move (P1), move (P2), move (P3), move (P4), move (P9), move (P10); and

(2) increased package loading and unloading (load, unload) task = load (P1, package X), unload (P10, package X) .

Since the distance between two adjacent nodes illustrated in Fig. 35 is 10 km and the speed of the vehicle A is 40 km, a travel time between adjacent nodes by the vehicle A is 10/40 = 0.25 hours (h).

Since the above "(1) increased moving (move) task" includes nine times of movement between adjacent nodes, the total travel time is

$$0.25 \times 9 = 2.25 \text{ h.}$$

Furthermore, times required for the package loading (load) processing and the package unloading (unload) processing are 0.2 h.

As a result, the incremental time (= $cost_{add}$ (increased cost)) required for the task processing by changing the current vehicle corresponding task sequence of the vehicle A in Fig. 35(A) to the updated vehicle corresponding task sequence of the vehicle A in (a1) can be calculated by the following expression:

$$\text{The } cost_{add} \text{ (increased cost) of the vehicle A} =$$

moving (move) task increased time + package loading

processing (load) task increased time + package unloading

processing (unload) task increased time

$$= 0.25 \times 9 + 0.2 + 0.2$$

$$= 2.65.$$

Next, processing of calculating $cost_{dis}$ (current load corresponding cost) of the vehicle A will be described. As described above with reference to Fig. 33,

the $cost_{dis}$ (current load corresponding cost) = (the distance average of the center of gravity of load and unload points of the currently handling tasks and load and unload points to be added) ÷ (the average vehicle speed).

(The center of gravity of load and unload points of the currently handing tasks) will be described.

The (A) vehicle corresponding task sequence of the vehicle A = move (P3), move (P4), move (P5), unload (P5, package A) is a task sequence of moving to P3, P4, and P5, and unloading the package A at P5. In this task sequence, the load and unload task is only unload (P5, package A). Therefore,

(the center of gravity of load and unload points of the currently handing tasks) is the position of P5, which is (40, 0).

A (load point to be added) is the P1 position (0, 0), and

An (unload point to be added) is the P10 position (40, 10).

The (distance between the center of gravity (40, 0) of the load and unload points of the currently handling tasks and the load point to be added P1 (0, 0)) is 40 km, and
(the distance between the center of gravity (40, 0) of the load and unload points of the currently handling tasks and the unload point to be added P10 (40, 10)) is 10 km. Therefore, the $cost_{dis}$ (current load corresponding cost) of the vehicle A can be calculated according to the following expression as illustrated in Fig. 36(a2):

$$\text{The } cost_{dis} \text{ (current load corresponding cost) of the}$$
$$\text{vehicle A} = \text{(the distance average of the center of}$$
$$\text{gravity of the load and unload points of the currently}$$
$$\text{handling tasks and the load and unload points to be}$$
$$\text{added)} \div \text{(the average vehicle speed)}$$
$$= ((40 + 10)/2)/40 = 0.625.$$

Next, the $cost_{now}$ (current task corresponding cost) of the vehicle A will be described.

As described above with reference to Fig. 33,
the $cost_{now}$ (current task corresponding cost) = the total time cost to complete the currently handling task sequence.

The currently handling task sequence is the vehicle corresponding task sequence of the vehicle A in (A) illustrated in Fig. 35 or 36, and is
the (A) vehicle corresponding task sequence of the vehicle A = move (P3), move (P4), move (P5), unload (P5, package A). That is, the currently handling task sequence is a task sequence of moving to P3, P4, and P5 and unloading the package A at P5.

The currently handling task sequence includes three moving (move) tasks including three times of movement between adjacent nodes with 10 km, and one time of package loading or unloading (load or unload). In a case of a time device running speed = 40 km for executing the three times of movement between adjacent nodes with 10 km,

$$(3 \times 10)/40 = 0.75 \text{ h.}$$

Furthermore, the time required for the one time of package loading or unloading (load or unload) is 0.2 h.

Therefore, the total time cost to complete the vehicle corresponding task sequence currently handled by the vehicle A, that is, the $cost_{now}$ (current task corresponding cost) can be calculated by the following expression, as illustrated in Fig. 36(a3):

$$\text{the } cost_{now} \text{ (current task corresponding cost)} = (3 \times 10)/40 + 0.2 = 0.95.$$

As described above with reference to Fig. 33, the matching cost is calculated by the above-described weighted linear combination of the three cost values.

That is, the matching cost (cost) is calculated by the following (Expression 1):

$$cost = w_{add} \times cost_{add} + w_{dis} \times cost_{dis} + w_{now} \times cost_{now}$$
$$\ldots \text{ (Expression 1).}$$

Note that

$w_{add}$ is a weight (multiplication parameter) for $cost_{add}$,
$w_{dis}$ is a weight (multiplication parameter) for $cost_{dis}$, and
$w_{now}$ is a weight (multiplication parameter) for $cost_{now}$.

Here, weighting coefficients corresponding to the respective costs are all 1, that is,

$$W_{add} = W_{dis} = W_{now} = 1$$

are set as illustrated in Fig. 36(a4). With the setting, the matching cost (cost) of the vehicle A is calculated by the following expression:

$$cost = W_{add} \times cost_{add} + W_{dis} \times cost_{dis} + W_{now} \times cost_{now}$$
$$= 1 \times 2.65 + 1 \times 0.625 + 1 \times 0.95$$
$$= 4.225 \quad \dots \quad (Expression\ A)$$

The matching cost (cost) of the vehicle A in the case of adding the additional task sequence in Fig. 36(1) to the vehicle corresponding task sequence of the current vehicle A in Fig. 36(A) becomes 4.225, which is the value calculated according to the above (Expression A).

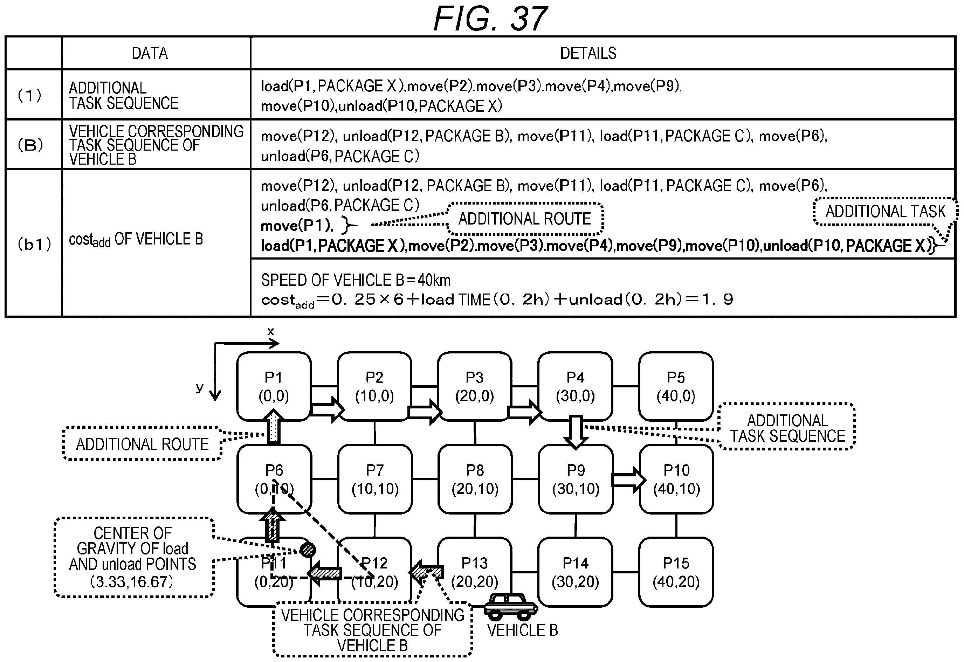

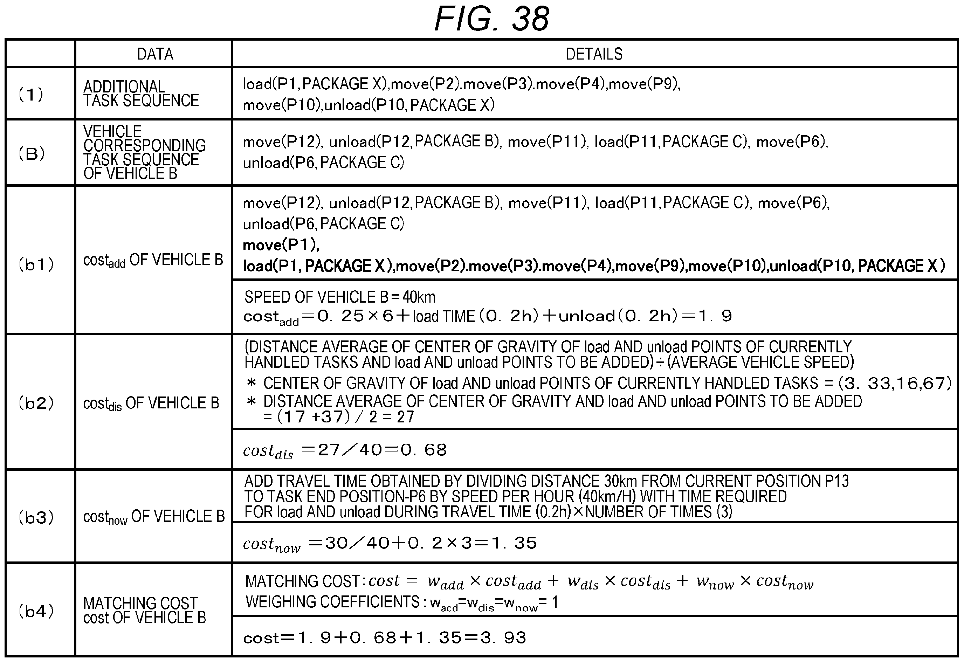

Next, the matching cost calculation processing for the vehicle B will be described with reference to Figs. 37 and 38.

The upper table in Fig. 37 illustrates the following data:

(1) additional task sequence;

(B) vehicle corresponding task sequence of the vehicle B; and
(b1) $cost_{add}$ (increased cost) of the vehicle B.

The (1) additional task sequence is an additional takaku sequence described with reference to Fig. 34. That is, the (1) additional task sequence = load (P1, package X), move (P2), move (P3), move (P4), move (P9), move (P10), unload (P10, package X), and is a task sequence of loading a package X at P1, moving to P2, P3, P4, P9, and P10, and unloading the package X at P10.

The (B) vehicle corresponding task sequence of the vehicle B is a vehicle corresponding task sequence of the vehicle B described with reference to Fig. 34. The vehicle B is located at the position of P13, as illustrated in the lower section in Fig. 37. The vehicle corresponding task sequence of the vehicle B at this point is as follows. That is, the (B) vehicle corresponding task sequence of the vehicle B = move (P12), unload (P12, package B), move (P11), load (P11, package C), move (P6), unload (P6, package C) is a task sequence of moving to P12, unloading a package B at P12, moving to P11, unloading a package C at P11, moving to P6, and unloading the package C at P6.

(b1) $cost_{add}$ (increased cost) of the vehicle B is the increased cost = incremental (movement) time cost by inserting a new task sequence to the current vehicle corresponding task sequence, as described above with reference to Fig. 33.

When the additional task sequence, that is, the additional task sequence illustrated in (1) in the table in Fig. 37 is added to the current vehicle corresponding task sequence of the vehicle B, that is, the vehicle corresponding task sequence of the vehicle B illustrated in (B) in the table in Fig. 37, the vehicle corresponding task sequence of the vehicle B is updated as follows, as illustrated in (b1) in the table in Fig. 37:

(b1) updated vehicle corresponding task sequence of the vehicle B = move (P12), unload (P12, package B), move (P11), load (P11, package C), move (P6), unload (P6, package C), move (P1), load (P1, package X), move (P2), move (P3), move (P4), move (P9), move (P10), unload (P10, package X).

This sequence is a task sequence of moving from P13 to P12 and P11, unloading the package C at P11, then moving to P6 and P1, loading the package X at P1, then, moving to P2, P3, P4, P9, and P10, and unloading the package X at P10, as illustrated in the lower map in Fig. 37.

The $cost_{add}$ (increased cost) of the vehicle B is calculated using the following data:

the current vehicle corresponding task sequence of the vehicle B illustrated in (B); and
the updated vehicle corresponding task sequence of the vehicle B illustrated in (b1),
in the table in Fig. 37.

This processing will be described.

The speed of the vehicle B is 40 km.

Increased tasks by changing the current vehicle corresponding task sequence of the vehicle B in (B) to the updated vehicle corresponding task sequence of the vehicle B in (b1) are as follows:

(1) Increased moving (move) task = move (P1), move (P2), move (P3), move (P4), move (P9), move (P10); and

(2) increased package loading and unloading (load, unload) task = load (P1, package X), unload (P10, package X) .

Since the distance between two adjacent nodes illustrated in Fig. 37 is 10 km and the speed of the vehicle B is 40 km, a travel time between adjacent nodes by the vehicle B is 10/40 = 0.25 hours (h).

Since the above "(1) increased moving (move) task" includes six times of movement between adjacent nodes, the total travel time is

$$0.25 \times 6 = 1.5 \text{ h.}$$

Furthermore, times required for the package loading (load) processing and the package unloading (unload) processing are 0.2 h.

As a result, the incremental time (= $cost_{add}$ (increased cost)) required for the task processing by changing the current vehicle corresponding task sequence of the vehicle B in Fig. 37(B) to the updated vehicle corresponding task sequence of the vehicle B in (b1) can be calculated by the following expression:

$$\text{The } cost_{add} \text{ (increased cost) of the vehicle B =}$$
$$\text{moving (move) task increased time + package loading}$$
$$\text{processing (load) task increased time + package unloading}$$
$$\text{processing (unload) task increased time}$$
$$= 0.25 \times 6 + 0.2 + 0.2$$
$$= 1.9$$

Next, processing of calculating $cost_{dis}$ (current load corresponding cost) of the vehicle B will be described. As described above with reference to Fig. 33,

the $cost_{dis}$ (current load corresponding cost) = (the distance average of the center of gravity of load and unload points of the currently handling tasks and load and unload points to be added) ÷ (the average vehicle speed).

(The center of gravity of load and unload points of the currently handing tasks) will be described.

The (B) vehicle corresponding task sequence of the vehicle B = move (P12), unload (P12, package B), move (P11), load (P11, package C), move (P6), unload (P6, package C) is a task sequence of moving to P12, unloading the package B at P12, moving to P11, unloading the package C at P11, moving to P6, and unloading the package C at P6. In this task sequence, the load and unload tasks are the three tasks of unload (P12, package B), load (P11, package C), and unload (P6, package C).

Therefore, (the center of gravity of load and unload points of the currently handing tasks) is the gravity position of the three points of P12, P11, and P6, as illustrated on the lower map in Fig. 37, and is (3.33, 16.67).

A (load point to be added) is the P1 position (0, 0), and

An (unload point to be added) is the P10 position (40, 10).

The (distance between the center of gravity (3.33, 16.67) of the load and unload points of the currently handling tasks and the load point to be added P1 (0, 0)) is about 17 km, and

(the distance between the center of gravity (3.33, 16.67) of the load and unload points of the currently handling tasks and the unload point to be added P10 (40, 10)) is about 37 km. Therefore, the $cost_{dis}$ (current load corresponding cost) of the vehicle B can be calculated according to the following expression as illustrated in Fig. 38(b2):

$$\text{The cost}_{dis} \text{ (current load corresponding cost) of the}$$
$$\text{vehicle B} = \text{(the distance average of the center of}$$
$$\text{gravity of the load and unload points of the currently}$$
$$\text{handling tasks and the load and unload points to be}$$
$$\text{added)} \div \text{(the average vehicle speed)}$$
$$= ((17 + 37)/2)/40 = 27.$$

Next, the $\text{cost}_{now}$ (current task corresponding cost) of the vehicle B will be described.

As described above with reference to Fig. 33,

the $\text{cost}_{now}$ (current task corresponding cost) = the total time cost to complete the currently handling task sequence.

The currently handling task sequence is the vehicle corresponding task sequence of the vehicle B in (B) illustrated in Fig. 37 or 38, and

the (B) vehicle corresponding task sequence of the vehicle B = move (P12), unload (P12, package B), move (P11), load (P11, package C), move (P6), unload (P6, package C) is a task sequence of moving to P12, unloading the package B at P12, moving to P11, unloading the package C at P11, moving to P6, and unloading the package C at P6.

The currently handling task sequence includes three moving (move) tasks including three times of movement between adjacent nodes with 10 km, and three times of package loading or unloading (load or unload). In a case of a time device running speed = 40 km for executing the three times of movement between adjacent nodes with 10 km,

$$(3 \times 10)/40 = 0.75 \text{ h.}$$

Furthermore, the time required for the one time of package loading or unloading (load or unload) is 0.2 h.

Therefore, the total time cost to complete the vehicle corresponding task sequence currently handled by the vehicle B, that is, the $\text{cost}_{now}$ (current task corresponding cost) can be calculated by the following expression, as illustrated in Fig. 38(b3):

$$\text{the cost}_{now} \text{ (current task corresponding cost)} = (3 \times$$
$$10)/40 + 0.2 \times 3 = 1.35.$$

As described above with reference to Fig. 33, the matching cost is calculated by the above-described weighted linear combination of the three cost values.

That is, the matching cost (cost) is calculated by the following (Expression 1):

$$\text{cost} = w_{add} \times \text{cost}_{add} + w_{dis} \times \text{cost}_{dis} + w_{now} \times \text{cost}_{now}$$
$$\dots \text{(Expression 1).}$$

Note that

$w_{add}$ is a weight (multiplication parameter) for $\text{cost}_{add}$,
$w_{dis}$ is a weight (multiplication parameter) for $\text{cost}_{dis}$, and
$w_{now}$ is a weight (multiplication parameter) for $\text{cost}_{now}$.

Here, weighting coefficients corresponding to the respective costs are all 1, that is,

$$w_{add} = w_{dis} = w_{now} = 1$$

are set as illustrated in Fig. 38(b4). With the setting, the matching cost (cost) of the vehicle B is calculated by the following expression:

$$\text{cost} = w_{add} \times \text{cost}_{add} + w_{dis} \times \text{cost}_{dis} + w_{now} \times \text{cost}_{now}$$

$$= 1 \times 1.9 + 1 \times 0.68 + 1 \times 1.35$$

$$= 3.93 \quad \dots \quad (\text{Expression B})$$

The matching cost (cost) of the vehicle B in the case of adding the additional task sequence in Fig. 38(1) to the vehicle corresponding task sequence of the current vehicle B in Fig. 38(B) becomes 3.93, which is the value calculated according to the above (Expression B).

The matching cost (cost) described above with reference to Figs. 35 and 36 is the value 4.225 calculated according to the above-described (Expression A), and the matching cost (cost) of the vehicle B is the smaller value than the matching cost (cost) of the vehicle A.

The task management unit 122 of the task management server 101 executes the processing of assigning the additional task sequence to the vehicle B with a low matching cost on the basis of the result.

Note that, in the examples described with reference to Figs. 34 to 38, the matching cost calculation processing has been performed with the settings of the weighting coefficients corresponding to the respective costs being all 1, that is,

$$w_{add} = w_{dis} = w_{now} = 1.$$

These weighting coefficients can be set in various ways depending on the situation.

For example, it is favorable to perform learning processing based on data of weather or traffic conditions, and to set optimum parameters (weighting coefficients) on the basis of learning results.

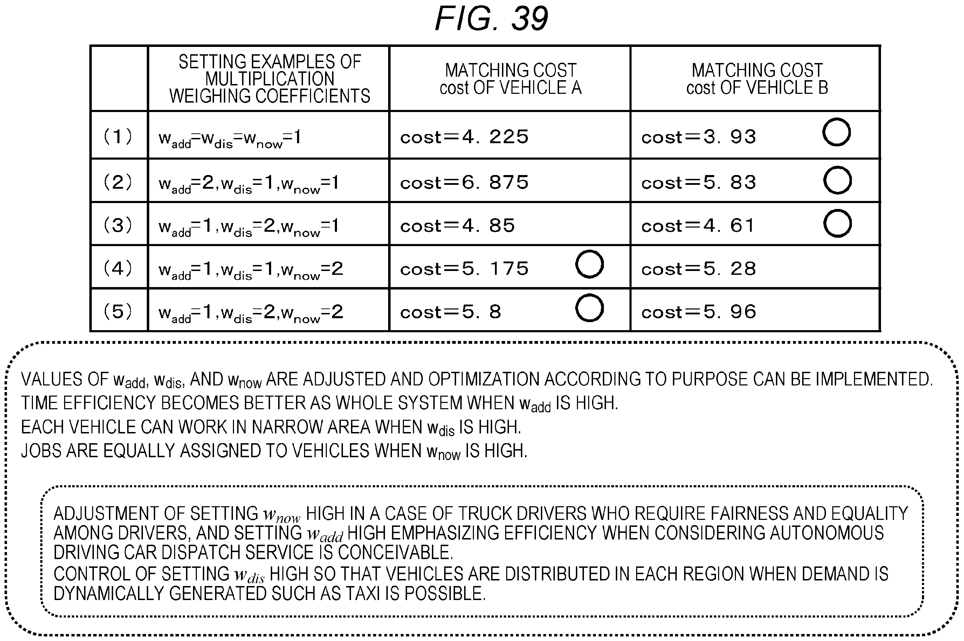

The matching costs of the vehicle A and the vehicle B vary in various values depending on the settings of the weighting coefficients. Specific examples are illustrated in Fig. 39.

Fig. 39 illustrates five types of setting examples of the weighting coefficients corresponding to the respective costs, that is, the following setting values:

$$(1) \quad w_{add} = w_{dis} = w_{now} = 1;$$

$$(2) \quad w_{add} = 2, \ w_{dis} = w_{now} = 1;$$

$$(3) \quad w_{add} = 1, \ w_{dis} = 2, \ w_{now} = 1;$$

$$(4) \quad w_{add} = w_{dis} = 1, \ w_{now} = 1;$$

and

$$(5) \quad w_{add} = 1, \ w_{dis} = w_{now} = 2.$$

The matching costs of the vehicle A and the vehicle B in the case of applying the above settings (1) to (5) when calculating the matching costs in the case of adding the additional task sequence in Fig. 34 to the vehicle A and the vehicle B in Fig. 34 are as follows, as illustrated in Fig. 39:

$$(1) \quad w_{add} = w_{dis} = w_{now} = 1$$

the matching cost for the vehicle A = 4.225 and the matching cost for the vehicle B = 3.93;

$$(2) \quad w_{add} = 2, \ w_{dis} = w_{now} = 1$$

the matching cost for the vehicle A = 6.875 and the matching cost for the vehicle B = 5.83;

$$(3) \quad W_{add} = 1, \quad W_{dis} = 2, \quad W_{now} = 1$$

the matching cost for the vehicle A = 4.85 and the matching cost for the vehicle B = 4.61;

$$(4) \quad W_{add} = W_{dis} = 1, \quad W_{now} = 1$$

the matching cost for the vehicle A = 5.175 and the matching cost for the vehicle B = 5.28; and

$$(5) \quad W_{add} = 1, \quad W_{dis} = W_{now} = 2$$

the matching cost for the vehicle A = 5.8 and the matching cost for the vehicle B = 5.96.

In this way, the matching cost corresponding to each vehicle varies in various values according to the setting of the parameters (weighting coefficients).

Therefore, as described above, it is favorable to perform learning processing based on data of weather or traffic conditions, and to set optimum parameters (weighting coefficients) on the basis of learning results.

Furthermore, in the above-described example, the time calculated as the cost required for the package loading processing (load) and the package unloading processing (unload) is uniformly 0.2 h. However, the time cost reflecting the weight of the package or the like may be set.

[8. Configuration example of information processing device]

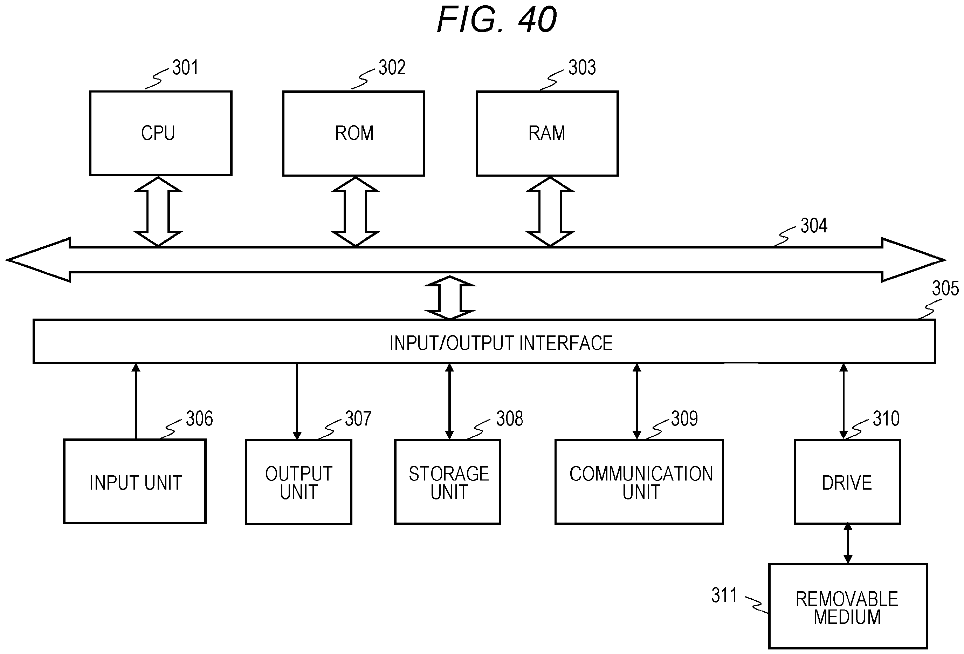

Next, a specific hardware configuration example of an information processing device that executes the above-described processing, that is, for example, the task management server 101 or an information processing device mountable in a moving device such as a vehicle will be described with reference to Fig. 40.

Fig. 40 is a diagram illustrating a hardware configuration example of the information processing device.

A central processing unit (CPU) 301 functions as a data processing unit that execute various types of processing according to a program stored in a read only memory (ROM) 302 or a storage unit 308. For example, the CPU 301 executes processing according to the sequence described in the above example. A random access memory (RAM) 303 stores the program executed by the CPU 301, data, and the like. These CPU 301, ROM 302, and RAM 303 are mutually connected by a bus 304.

The CPU 301 is connected to an input/output interface 305 via the bus 304. An input unit 306 including various switches, a keyboard, a touch panel, a mouse, a microphone, and a state data acquisition unit such as a sensor, a camera, and GPS, and an output unit 307 including a display, a speaker, and the like are connected to the input/output interface 305.

The CPU 301 receives commands, state data, and the like input from the input unit 306, executes various types of information, and outputs processing results to the output unit 307, for example.

The storage unit 308 connected to the input/output interface 305 includes, for example, a hard disk and the like, and stores the program executed by the CPU 301 and various data. A communication unit 309 functions as a transmission/reception unit for data communication via a network such as the Internet or a local area network, and communicates with an external device.

A drive 310 connected to the input/output interface 305 drives a removable medium 311 such as a magnetic disk, an optical disk, a magneto-optical disk, or a semiconductor memory such as a memory card, and executes data recording or reading.

[9. Conclusion of configurations of present Disclosure]

The examples of the present disclosure have been described in detail with reference to the specific examples. However, it is obvious that those skilled in the art can make modifications and substitutions of the examples without departing from the gist of the present disclosure. That is, the present invention has been disclosed in the form of exemplification, and should not be restrictively interpreted. To judge the gist of the present disclosure, the scope of claims should be taken into consideration.

Note that the technology disclosed in the present specification can have the following configurations.

(1) An information processing device including:

a task management unit configured to describe movement processing between registered nodes set on a movement route of a moving device and processing at a registered node as tasks that are data including a node identifier and a processing type, and generate a task sequence in which the tasks are chronologically arranged, and moreover,

to generate a moving device corresponding task sequence that is a task sequence corresponding to each moving device on the basis of the generated task sequence, in which,

in a case where a processing execution position of the moving device is a position not matching the registered node, the task management unit adds a node to the processing execution position and generates a task sequence including an additional node corresponding task in which a node identifier of the additional node and a processing type are recorded.

(2) The information processing device according to (1), in which
the task management unit
generates one or more task sequences for executing a request that is a processing execution request on the basis of the request, and
assigns the generated task sequence to one or more moving devices to generate the moving device corresponding task sequence corresponding to the moving device.

(3) The information processing device according to (1) or (2), in which
the task management unit generates the moving device corresponding task sequence that minimizes a processing cost.

(4) The information processing device according to any one of (1) to (3), in which
the registered node is a registered node having position information stored in a storage unit, and
the task management unit acquires the position information of the additional node from an outside, and generates the moving device corresponding task sequence that minimizes a processing cost, using the acquired position information.

(5) The information processing device according to (4), in which
the task management unit receives the position information of the additional node from a terminal that outputs a request that is a processing execution request or the moving device.

(6) The information processing device according to any one of (1) to (5), in which
the task management unit calculates a matching cost corresponding to each moving device according to a prescribed cost calculation algorithm, and determines a moving device to which a task sequence is to be assigned on the basis of the calculated matching cost corresponding to each moving device.

(7) The information processing device according to (6), in which
the task management unit calculates the matching cost by arithmetic processing based on each of costs (a), (b), and (c) below:

(a) a $cost_{add}$ that is an increased cost in a processing time generated by addition of a task sequence to each moving device;
(b) a $cost_{dis}$ that is a load corresponding cost in a moving device corresponding task at a present moment; and
(c) a current task corresponding cost $cost_{now}$ corresponding to a time to complete the moving device corresponding task sequence at a present moment.

(8) The information processing device according to (7), in which
the task management unit calculates the matching cost by multiplying each of the costs (a), (b), and (c) by a prescribed weighting coefficient, and adding each multiplication result.

(9) The information processing device according to (8), in which the weighting coefficient is a coefficient determined by learning processing executed in advance.

(10) The information processing device according to any one of (1) to (9), in which
the task management unit determines a moving device to which a task sequence is to be assigned on the basis of a task priority.

(11) The information processing device according to any one of (1) to (10), in which
the task management unit generates tasks distinguishing movement processing, processing of loading a package or a person, processing of unloading a package or a person, and standby processing.

(12) The information processing device according to any one of (1) to (11), in which
the task management unit generates a task having priority information recorded in the each task.

(13) A moving device that executes processing according to a moving device corresponding task sequence that is a task sequence corresponding to the moving device,
the moving device corresponding task sequence being a sequence generated in the moving device or an external server, and being a task sequence in which tasks each including a node identifier and a processing type are chronologically arranged, for movement processing between a registered node set on a movement route of the moving device and an additional node other than the registered node, and processing at the registered node and at the additional node.
(14) The moving device according to (13), in which
the moving device corresponding task sequence is a sequence generated according to a processing cost or a task priority on the basis of one or more task sequences generated for executing a request that is a processing execution request.
(15) An information processing system including: a terminal configured to transmit a request that is a processing execution request; a task management server configured to receive the request from the terminal; and a moving device configured to execute processing, in which
the task management server, in response to the request,
describes movement processing between registered nodes set on a movement route of the moving device and processing at a registered node as tasks that are data including a node identifier and a processing type, and generates a moving device corresponding task sequence that is a task sequence corresponding to each moving device in which the tasks are chronologically arranged, and
in a case where a processing execution position of the moving device is a position not matching the registered node, adds a node to the processing execution position and generates a moving device corresponding task sequence including an additional node corresponding task in which a node identifier of the additional node and a processing type are recorded, and
the moving device
executes processing according to the moving device corresponding task sequence including an additional node corresponding task.
(16) An information processing method executed in an information processing device, the information processing method including:

by a task management unit,
a task sequence generation step of describing movement processing between registered nodes set on a movement route of a moving device and processing at a registered node as tasks that are data including a node identifier and a processing type, and generating a task sequence in which the tasks are chronologically arranged; and
a moving device corresponding task sequence generation step of generating a moving device corresponding task sequence that is a task sequence corresponding to each moving device on the basis of the generated task sequence,
in the moving device corresponding task sequence generation step,
in a case where a processing execution position of the moving device is a position not matching the registered node, adding a node to the processing execution position and generating a task sequence including an additional node corresponding task in which a node identifier of the additional node and a processing type are recorded.

(17) A program for causing an information processing device to execute information processing, the program for causing
a task management unit to execute:

a task sequence generation step of describing movement processing between registered nodes set on a movement route of a moving device and processing at a registered node as tasks that are data including a node identifier and a processing type, and generating a task sequence in which the tasks are chronologically arranged; and
a moving device corresponding task sequence generation step of generating a moving device corresponding task sequence that is a task sequence corresponding to each moving device on the basis of the generated task sequence,
in the moving device corresponding task sequence generation step,
in a case where a processing execution position of the moving device is a position not matching the registered node, adding a node to the processing execution position and generating a task sequence including an additional node corresponding task in which a node identifier of the additional node and a processing type are recorded.

Furthermore, the series of processing described in the description can be executed by hardware, software, or a combined configuration of the hardware and software. In the case of executing the processing by software, a program, in which the processing sequence is recorded, can be installed in a memory of a computer incorporated in dedicated hardware and executed by the computer, or the program can be installed in and executed by a general-purpose computer capable of executing various types of processing. For example, the program can be recorded in the recording medium in advance. Other than the installation from the recording medium to the computer, the program can be received via a network such as a local area network (LAN) or the Internet and installed in a recording medium such as a built-in hard disk.

Note that the various types of processing described in the description may be executed not only in chronological order as described but also in parallel or individually depending on the processing capability of the device that executes the process or as required. Furthermore, the system in the present description is a logical aggregate configuration of a plurality of devices, and is not limited to devices having respective configurations within the same housing.

INDUSTRIAL APPLICABILITY

As described above, according to the configuration of the example of the present disclosure, low cost processing calculation and task processing that fit reality are implemented by generating a task sequence in which a node identifier of an additional node at a position other than a registered position and a processing type are recorded.

Specifically, for example, regarding movement processing between registered nodes and processing at a registered node, a task sequence in which tasks each including a node identifier and a processing type are chronologically arranged is generated, and moreover a moving device corresponding task sequence corresponding to each moving device is generated on the basis of the generated task sequence. In a case where a processing execution position of the moving device does not match a registered node, a node is added to the processing execution position, and a task sequence including an additional node corresponding task in which the node identifier of the additional node and the processing type are recorded is generated.

According to the present configuration, calculation of low cost processing and task processing that fit reality are implemented by generating a task sequence in which a node identifier of an additional node at a position other than a registered position and a processing type are recorded.

REFERENCE SIGNS LIST

| 10  | Taxi |
| 11  | User |
| 12  | Destination |
| 101 | Task management server |
| 102 | User terminal |
| 103 | Vehicle |
| 105 | Network |
| 121 | Request processing unit |
| 122 | Task management unit |
| 123 | Vehicle management unit |
| 124 | Communication unit |
| 131 | Request DB (database) |

| 132 | Task DB (database) |
| 133 | Vehicle DB (database) |
| 134 | Map DB (database) |
| 301 | CPU |
| 302 | ROM |
| 303 | RAM |
| 304 | Bus |
| 305 | Input/output interface |
| 306 | Input unit |
| 307 | Output unit |
| 308 | Storage unit |
| 309 | Communication unit |
| 310 | Drive |

311 Removable medium

**Claims**

1. An information processing device comprising:

   a task management unit configured to describe movement processing between registered nodes set on a movement route of a moving device and processing at a registered node as tasks that are data including a node identifier and a processing type, and generate a task sequence in which the tasks are chronologically arranged, and moreover,
   to generate a moving device corresponding task sequence that is a task sequence corresponding to each moving device on a basis of the generated task sequence, wherein,
   in a case where a processing execution position of the moving device is a position not matching the registered node, the task management unit adds a node to the processing execution position and generates a task sequence including an additional node corresponding task in which a node identifier of the additional node and a processing type are recorded.

2. The information processing device according to claim 1, wherein
   the task management unit
   generates one or more task sequences for executing a request that is a processing execution request on a basis of the request, and
   assigns the generated one or more task sequences to one or more moving devices to generate the moving device corresponding task sequence corresponding to the one or more moving devices.

3. The information processing device according to claim 1, wherein
   the task management unit generates the moving device corresponding task sequence that minimizes a processing cost.

4. The information processing device according to claim 1, wherein
   the registered node is a registered node having position information stored in a storage unit, and
   the task management unit acquires the position information of the additional node from an outside, and generates the moving device corresponding task sequence that minimizes a processing cost, using the acquired position information.

5. The information processing device according to claim 4, wherein
   the task management unit receives the position information of the additional node from a terminal that outputs a request that is a processing execution request or the moving device.

6. The information processing device according to claim 1, wherein
   the task management unit calculates a matching cost corresponding to each moving device according to a prescribed cost calculation algorithm, and determines a moving device to which a task sequence is to be assigned on a basis of the calculated matching cost corresponding to each moving device.

7. The information processing device according to claim 6, wherein
   the task management unit calculates the matching cost by arithmetic processing based on each of costs (a), (b), and (c) below:

   (a) a $cost_{add}$ that is an increased cost in a processing time generated by addition of a task sequence to each moving device;
   (b) a $cost_{dis}$ that is a load corresponding cost in a moving device corresponding task at a present moment; and
   (c) a current task corresponding cost $cost_{now}$ corresponding to a time to complete the moving device corresponding task sequence at a present moment.

8. The information processing device according to claim 7, wherein
   the task management unit calculates the matching cost by multiplying each of the costs (a), (b), and (c) by a prescribed weighting coefficient, and adding each multiplication result.

9. The information processing device according to claim 8, wherein the weighting coefficient is a coefficient determined by learning processing executed in advance.

10. The information processing device according to claim 1, wherein
the task management unit determines a moving device to which a task sequence is to be assigned on a basis of a task priority.

11. The information processing device according to claim 1, wherein
the task management unit generates tasks distinguishing movement processing, processing of loading a package or a person, processing of unloading a package or a person, and standby processing.

12. The information processing device according to claim 1, wherein
the task management unit generates a task having priority information recorded in the each task.

13. A moving device that executes processing according to a moving device corresponding task sequence that is a task sequence corresponding to the moving device,
the moving device corresponding task sequence being a sequence generated in the moving device or an external server, and being a task sequence in which tasks each including a node identifier and a processing type are chronologically arranged, for movement processing between a registered node set on a movement route of the moving device and an additional node other than the registered node, and processing at the registered node and at the additional node.

14. The moving device according to claim 13, wherein
the moving device corresponding task sequence is a sequence generated according to a processing cost or a task priority on a basis of one or more task sequences generated for executing a request that is a processing execution request.

15. An information processing system comprising: a terminal configured to transmit a request that is a processing execution request; a task management server configured to receive the request from the terminal; and a moving device configured to execute processing, wherein
the task management server, in response to the request,
describes movement processing between registered nodes set on a movement route of the moving device and processing at a registered node as tasks that are data including a node identifier and a processing type, and generates a moving device corresponding task sequence that is a task sequence corresponding to each moving device in which the tasks are chronologically arranged, and
in a case where a processing execution position of the moving device is a position not matching the registered node, adds a node to the processing execution position and generates a moving device corresponding task sequence including an additional node corresponding task in which a node identifier of the additional node and a processing type are recorded, and
the moving device
executes processing according to the moving device corresponding task sequence including an additional node corresponding task.

16. An information processing method executed in an information processing device, the information processing method comprising:

by a task management unit,
a task sequence generation step of describing movement processing between registered nodes set on a movement route of a moving device and processing at a registered node as tasks that are data including a node identifier and a processing type, and generating a task sequence in which the tasks are chronologically arranged; and
a moving device corresponding task sequence generation step of generating a moving device corresponding task sequence that is a task sequence corresponding to each moving device on a basis of the generated task sequence,
in the moving device corresponding task sequence generation step,
in a case where a processing execution position of the moving device is a position not matching the registered node, adding a node to the processing execution position and generating a task sequence including an additional node corresponding task in which a node identifier of the additional node and a processing type are recorded.

17. A program for causing an information processing device to execute information processing, the program for causing a task management unit to execute:

a task sequence generation step of describing movement processing between registered nodes set on a movement route of a moving device and processing at a registered node as tasks that are data including a node identifier and a processing type, and generating a task sequence in which the tasks are chronologically arranged; and

a moving device corresponding task sequence generation step of generating a moving device corresponding task sequence that is a task sequence corresponding to each moving device on a basis of the generated task sequence,

in the moving device corresponding task sequence generation step,

in a case where a processing execution position of the moving device is a position not matching the registered node, adding a node to the processing execution position and generating a task sequence including an additional node corresponding task in which a node identifier of the additional node and a processing type are recorded.

# FIG. 1

EP 3 816 963 A1

FIG. 2

EP 3 816 963 A1

*FIG. 3*

# FIG. 4

P1 — P2 — P3

P4 — P5 — P6

12 DESTINATION    11 USER

P7    10 TAXI    P8 — P9

EP 3 816 963 A1

# FIG. 5

101 TASK MANAGEMENT SERVER

105 NETWORK

102 USER TERMINAL

103 VEHICLE

USER

EP 3 816 963 A1

## FIG. 6

TASK MANAGEMENT SERVER — 101

- 131 REQUEST DB
- 122 TASK MANAGEMENT UNIT
- 132 TASK DB
- 133 VEHICLE DB
- 134 MAP DB
- 121 REQUEST PROCESSING UNIT
- 124 COMMUNICATION UNIT
- 123 VEHICLE MANAGEMENT UNIT

TASK REQUEST, POSITION INFORMATION, AND THE LIKE

TASK RECEPTION INFORMATION

TASK INFORMATION

TASK COMPLETION INFORMATION, POSITION INFORMATION, AND THE LIKE

USER TERMINAL

VEHICLE

EP 3 816 963 A1

## FIG. 7

```
         ┌─────────┐
         │  START  │
         └────┬────┘
              │
              ▼                        S101
    ┌──────────────────────┐
    │ RECEIVE REQUEST AND   │
    │ REGISTER REQUEST IN DB│
    └──────────┬───────────┘
              │
              ▼                        S102
    ┌──────────────────────┐
    │  GENERATE NEW TASK    │
    │ SEQUENCE BASED ON REQUEST│
    └──────────┬───────────┘
              │
              ▼                        S103
    ┌──────────────────────┐
    │ CONVERT NEW TASK SEQUENCE│
    │ INTO VEHICLE CORRESPONDING│
    │     TASK SEQUENCE     │
    └──────────┬───────────┘
              │
              ▼
         ┌─────────┐
         │   END   │
         └─────────┘
```

# FIG. 8

|  | DATA TYPE | DETAILS |
|---|---|---|
| (1) | REQUEST | "DELIVER PACKAGES a, b, AND c FROM P1 TO a:P2, b:P3, AND c:P4, RESPECTIVELY" |
| (2) | TASK SEQUENCE | TASK SEQUENCE 1:load(P1, a), move(P2), unload(P2, a)<br>TASK SEQUENCE 2:load(P1, b), move(P2), move(P3), unload(P3, b)<br>TASK SEQUENCE 3:load(P1, c), move(P4), unload(P4, c) |
| (3) | VEHICLE CORRESPONDING TASK SEQUENCE | VEHICLE 1:move(P1),load(P1, a),load(P1, b),move(P2)<br>,unload(P2, a),move(P3),unload(P3, b)<br><br>VEHICLE 2:load(P1, c),move(P4),unload(P4, c) |

EP 3 816 963 A1

# FIG. 9

| | DATA TYPE | DETAILS |
|---|---|---|
| (1) | REQUEST | "DELIVER PACKAGES a, b, AND c FROM P1 TO a:P2, b:P3, AND c:P4, RESPECTIVELY" |
| (2) | TASK SEQUENCE | TASK SEQUENCE 1:load(P1, a), move(P2), unload(P2, a)<br>TASK SEQUENCE 2:load(P1, b), move(P2), move(P3), unload(P3, b)<br>TASK SEQUENCE 3:load(P1, c), move(P4), unload(P4, c) |
| (3) | VEHICLE CORRESPONDING TASK SEQUENCE | VEHICLE 1:move(P1),load(P1, a),load(P1, b),move(P2) ,unload(P2, a),move(P3),unload(P3, b)<br><br>VEHICLE 2:load(P1, c),move(P4),unload(P4, c) |

VEHICLE 1

VEHICLE 2

VEHICLE 1 CORRESPONDING TASK SEQUENCE

VEHICLE 2 CORRESPONDING TASK SEQUENCE

a b

P1 c

P2

a

P3

b

P4

c

P5

P6

P7

P8

P9

EP 3 816 963 A1

# FIG. 10

START

S111
DETERMINE WHETHER OR
NOT TASK SEQUENCE CAN BE
DESCRIBED ONLY WITH
EXISTING NODES

S112
CAN TASK
SEQUENCE BE DESCRIBED ONLY
WITH EXISTING NODES?

Yes

No

S113
GENERATE TASK SEQUENCE
ONLY WITH EXISTING NODES

S114
ADD NODE AND
GENERATE TASK SEQUENCE

END

EP 3 816 963 A1

## FIG. 11

|  | DATA TYPE | DETAILS |
|---|---|---|
| (1) | REQUEST | "PICK UP a AT P10 AND DROP a AT P11" |
| (2) | TASK SEQUENCE | TASK SEQUENCE 1:**load(P10,a)**, move(P5), move(P8),**move(P11)**, **unload(P11,a)** |
| (3) | VEHICLE CORRESPONDING TASK SEQUENCE | VEHICLE 1:move(P4),move(P5) ,**move(p10)** ,**load(P10, a)** ,move(P5),move(P8),**move(P11),unload(P11,a)** |

ADDITIONAL NODE CORRESPONDING TASK ELEMENTS

P1 — P2 — P3

Taxi!

P4 — P5 — P10 — P6

TASK SEQUENCE 1

ADDITIONAL NODE

P7 — P11 — P8 — P9

ADDITIONAL NODE

# FIG. 12

|   | DATA TYPE | DETAILS |
|---|-----------|---------|
| (1) | REQUEST | "PICK UP a AT P10 AND DROP a AT P11" |
| (2) | TASK SEQUENCE | TASK SEQUENCE 1: **load(P10,a)**, move(P5), move(P8),**move(P11)**, **unload(P11,a)** |
| (3) | VEHICLE CORRESPONDING TASK SEQUENCE | VEHICLE 1: move(P4),move(P5) ,**move(p10)** ,load(P10, a) ,move(P5),move(P8),**move(P11),unload(P11,a)** |

ADDITIONAL NODE CORRESPONDING TASK ELEMENTS

ADDITIONAL NODE CORRESPONDING TASK ELEMENTS

VEHICLE 1 CORRESPONDING TASK SEQUENCE

P1  P2  P3

Taxi!

P4  P5  P10  P6

ADDITIONAL NODE

P7  P11  P8  P9

ADDITIONAL NODE

# FIG. 13

```
          ┌─────────┐
          │  START  │
          └────┬────┘
               │
               ▼                          S121
  ┌──────────────────────────────┐
  │  ACQUIRE PLURALITY OF EXISTING │
  │   VEHICLE CORRESPONDING TASK   │
  │    SEQUENCES SET TO VEHICLES   │
  └───────────────┬────────────────┘
                  │
                  ▼                       S122
  ┌──────────────────────────────┐
  │   CALCULATE COST IN A CASE OF  │
  │    INSERTING NEW TASK SEQUENCE │
  │      INTO EACH OF ACQUIRED     │
  │   PLURALITY OF EXISTING VEHICLE│
  │  CORRESPONDING TASK SEQUENCES  │
  └───────────────┬────────────────┘
                  │
                  ▼                       S123
  ┌──────────────────────────────┐
  │    INSERT NEW TASK SEQUENCE    │
  │    INTO ONE EXISTING VEHICLE   │
  │  CORRESPONDING TASK SEQUENCE   │
  │  THAT MINIMIZES COST TO UPDATE │
  │  EXISTING VEHICLE CORRESPONDING│
  │         TASK SEQUENCE          │
  └───────────────┬────────────────┘
                  │
                  ▼
          ┌─────────┐
          │   END   │
          └─────────┘
```

## FIG. 14

START

S151

RECEIVE TASK COMPLETION
NOTIFICATION FROM VEHICLE

S152

DELETE COMPLETED TASK FROM
VEHICLE CORRESPONDING TASK
SEQUENCE REGISTERED IN TASK DB

S153

INSTRUCT VEHICLE TO EXECUTE
NEW VEHICLE CORRESPONDING TASK
IN RESPONSE TO GENERATION OF
NEW VEHICLE CORRESPONDING TASK

END

# FIG. 15

C2 : move(P2)

C1 : load(P1,a)

P1  P2  P3  P4

MOVEMENT OF EACH VEHICLE IS DISPLAYED IN ANIMATION, AND TASK CURRENTLY BEING EXECUTED IS DISPLAYED.
FURTHER, WHEN VEHICLE IS SPECIFIED (VEHICLE IS POINTED AT WITH CURSOR), TASK SEQUENCE CURRENTLY HANDLED BY VEHICLE CAN BE CONFIRMED.

EP 3 816 963 A1

## FIG. 16

CASE 1:EXAMPLE OF PACKAGE DELIVERY USING PACKAGE DELIVERY VEHICLE
REQUEST = DELIVERY OF PACKAGE
(PACKAGE PICKUP POSITIONS CONCENTRATED (loads CONCENTRATED),
DELIVERY DESTINATIONS SCATTERED (unloads SCATTERED), NO CRUISE)

| | DATA TYPE | DETAILS |
|---|---|---|
| (1) | REQUEST | "DELIVER PACKAGES a, b, AND c FROM P1 TO a:P2, b:P3, AND c:P4, RESPECTIVELY" |
| (2) | TASK SEQUENCE | TASK SEQUENCE 1: load(P1, a), move(P2), unload(P2, a)<br>TASK SEQUENCE 2: load(P1, b), move(P2), move(P3), unload(P3, b)<br>TASK SEQUENCE 3: load(P1, c), move(P4), unload(P4, c) |
| (3) | VEHICLE CORRESPONDING TASK SEQUENCE | VEHICLE 1: move(P1),load(P1, a),load(P1, b),move(P2) ,unload(P2, a),move(P3),unload(P3, b)<br><br>VEHICLE 2: load(P1, c),move(P4),unload(P4, c) |

EP 3 816 963 A1

# FIG. 17

CASE 2:EXAMPLE OF USING TAXI
REQUEST = CRUISE AND DISPATCH
(PICKUP POSITIONS SCATTERED (loads SCATTERED),
DROP POSITIONS SCATTERED (unloads SCATTERED), CRUISE, AND CALL)

|     | DATA TYPE | DETAILS |
|-----|-----------|---------|
| (1) | REQUEST | CRUISE "EQUALLY CRUISE ALL POINTS"<br>DISPATCH "PICK UP a AT P1 AND DROP a AT P2" |
| (2) | TASK SEQUENCE | TASK SEQUENCE 1:move(P1),move(P2),・・move(P20),move(P1)<br>TASK SEQUENCE 2:load(P1, a), move(P2), unload(P2,a) |
| (3) | VEHICLE CORRESPONDING TASK SEQUENCE | VEHICLE 1:move(P1),load(P1, a),move(P2),unload(P2, a),<br>move(P3),move(P4),・・・<br><br>VEHICLE 2:move(P11),move(P12),・・・ |

EP 3 816 963 A1

## FIG. 18

| | DATA TYPE | DETAILS |
|---|---|---|
| (3) | VEHICLE CORRESPONDING TASK SEQUENCE | VEHICLE 1: move(P1),load(P1, a),move(P2),unload(P2, a), move(P3),move(P4),・・・<br><br>VEHICLE 2: move(P11),move(P12),・・・ |

EP 3 816 963 A1

# FIG. 19

CASE 3:EXAMPLE OF PRODUCT SALES ROBOT CRUISING ON FLOOR
REQUEST = CRUISE AND DISPATCH
(EXECUTE CRUISE, RESPOND TO CALL (NO load and NO unload))

| | DATA TYPE | DETAILS |
|---|---|---|
| (1) | REQUEST | auto "EQUALLY CRUISE ALL POINTS" |
| (2) | TASK SEQUENCE | TASK SEQUENCE 1:move(P1), move(P2),··move(P20),move(P1) |
| (3) | VEHICLE CORRESPONDING TASK SEQUENCE | VEHICLE 1:move(P2),move(P3),move(P4),···,move(P20) |

⬇

| | DATA TYPE | DETAILS |
|---|---|---|
| (1) | REQUEST | auto "EQUALLY CRUISE ALL POINTS"<br>CALL "CALL FROM POINT P13" |
| (2) | TASK SEQUENCE | TASK SEQUENCE 1:move(P1), move(P2),··move(P20),move(P1)<br>TASK SEQUENCE 2:move(P13) |
| (3) | VEHICLE CORRESPONDING TASK SEQUENCE | VEHICLE 1:move(Px),move(Py),···,move(P13) |

# FIG. 20

|  | DATA TYPE | DETAILS |
|---|---|---|
| (3a) | VEHICLE CORRESPONDING TASK SEQUENCE BEFORE UPDATE | VEHICLE 1: move(P2),move(P3),move(P4),・・・,move(P20) |

|  | DATA TYPE | DETAILS |
|---|---|---|
| (3b) | UPDATED VEHICLE CORRESPONDING TASK SEQUENCE | VEHICLE 1: move(P2),move(P7), move(P8),move(P13), move(P14),・・・ |

VEHICLE 1 CORRESPONDING TASK SEQUENCE BEFORE UPDATE (CRUISE)

UPDATED VEHICLE 1 CORRESPONDING TASK SEQUENCE

VEHICLE 1

P1  P2  P3  P4  P5

P6  P7  P8  P9  P10

P11  P12  P13  P14  P15

Hi!

EP 3 816 963 A1

## FIG. 21

| | DATA TYPE | TASK SEQUENCE DETAILS |
|---|---|---|
| (1) | EXISTING VEHICLE CORRESPONDING TASK SEQUENCE | TASK SEQUENCE A:load(P1,PACKAGE 1),move(P6),move(P7),move(P8), move(P13),unload(P13, PACKAGE 1) |
| (2) | ADDITIONAL TASK SEQUENCE | TASK SEQUENCE B:load(P1,PACKAGE 2),move(P2).move(P3).move(P4), move(P9),move(P10),unload(P10,PACKAGE 2) |

ADDITIONAL TASK SEQUENCE

PACKAGE 1  PACKAGE 2

EXISTING VEHICLE CORRESPONDING TASK SEQUENCE

PACKAGE 2

PACKAGE 1

EP 3 816 963 A1

## FIG. 22

|  | DATA TYPE | TASK SEQUENCE DETAILS |
|---|---|---|
| (1) | EXISTING VEHICLE CORRESPONDING TASK SEQUENCE | TASK SEQUENCE A:load(P1,PACKAGE 1),move(P6),move(P7),move(P8), move(P13),unload(P13,PACKAGE 1) |
| (2) | ADDITIONAL TASK SEQUENCE | TASK SEQUENCE B:load(P1,PACKAGE 2),move(P2).move(P3).move(P4), move(P9),move(P10),unload(P10,PACKAGE 2) |

S201

DELETE move ELEMENTS FROM ADDITIONAL TASK SEQUENCE

|  | DATA TYPE | TASK SEQUENCE DETAILS |
|---|---|---|
| (1) | EXISTING VEHICLE CORRESPONDING TASK SEQUENCE | TASK SEQUENCE A: load(P1,PACKAGE 1),move(P6),move(P7),move(P8), move(P13),unload(P13,PACKAGE 1) |
| (2) | ADDITIONAL TASK SEQUENCE | TASK SEQUENCE B:load(P1,PACKAGE 2), unload(P10,PACKAGE 2) |

EP 3 816 963 A1

## FIG. 23

| | DATA TYPE | TASK SEQUENCE DETAILS |
|---|---|---|
| (1) | EXISTING VEHICLE CORRESPONDING TASK SEQUENCE | TASK SEQUENCE A:load(P1,PACKAGE 1),move(P6),move(P7),move(P8), move(P13),unload(P13,PACKAGE 1) |
| (2) | ADDITIONAL TASK SEQUENCE (move ELEMENTS DELETED) | TASK SEQUENCE B:load(P1,PACKAGE 2), unload(P10,PACKAGE 2) |

S202

EXISTING VEHICLE TASK SEQUENCE IS SEARCHED IN ORDER FROM FIRST ELEMENT, FOR ELEMENT HAVING POSITION MATCHING POSITION (Pn) OF ELEMENT OF ADDITIONAL TASK SEQUENCE IN ORDER FROM FIRST ELEMENT, AND ELEMENT OF ADDITIONAL TASK SEQUENCE IS INSERTED AFTER ELEMENT MATCHING POSITION

INSERTED ELEMENT

| | DATA TYPE | TASK SEQUENCE DETAILS |
|---|---|---|
| (1) | EXISTING VEHICLE CORRESPONDING TASK SEQUENCE (BEING UPDATED) | TASK SEQUENCE A: load(P1, PACKAGE 1), **load(P1, PACKAGE 2)**,move(P6), move(P7),move(P8),move(P13),unload(P13,PACKAGE 1) |
| (2) | ADDITIONAL TASK SEQUENCE (BEING PROCESSED) | TASK SEQUENCE B:unload(P10, PACKAGE 2) |

EP 3 816 963 A1

## FIG. 24

| | DATA TYPE | TASK SEQUENCE DETAILS |
|---|---|---|
| (1) | EXISTING VEHICLE CORRESPONDING TASK SEQUENCE (BEING UPDATED) | TASK SEQUENCE A:load(P1,PACKAGE 1), **load(P1,PACKAGE 2),move(P6)**, move(P7),move(P8),move(P13),unload(P13,PACKAGE 1) |
| (2) | ADDITIONAL TASK SEQUENCE (BEING PROCESSED) | TASK SEQUENCE B: unload(P10,PACKAGE 2) |

IN A CASE WHERE ELEMENT HAVING POSITION MATCHING POSITION (Pn) OF ELEMENT OF ADDITIONAL TASK SEQUENCE IS NOT INCLUDED IN EXISTING VEHICLE TASK SEQUENCE, NECESSARY ROUTE IS ADDED AFTER FINAL ELEMENT OF EXISTING VEHICLE TASK SEQUENCE, AND ELEMENT OF ADDITIONAL TASK SEQUENCE IS INSERTED    S203

| | DATA TYPE | TASK SEQUENCE DETAILS |
|---|---|---|
| (1) | EXISTING VEHICLE CORRESPONDING TASK SEQUENCE (UPDATE COMPLETED) | TASK SEQUENCE A:load(P1,PACKAGE 1), **load(P1,PACKAGE 2),move(P6)**, move(P7),move(P8),move(P13),unload(P13,PACKAGE 1), **move(P14),move(P15), move(P10)**,unload(P10,**PACKAGE 2**) |
| (2) | ADDITIONAL TASK SEQUENCE (BEING PROCESSED) | TASK SEQUENCE B:     INSERTED ROUTE ELEMENT     INSERTED ADDITIONAL TASK ELEMENT |

EP 3 816 963 A1

# FIG. 25

|       | DATA TYPE | TASK SEQUENCE DETAILS |
|-------|-----------|------------------------|
| (1) | EXISTING VEHICLE CORRESPONDING TASK SEQUENCE (UPDATE COMPLETED) | TASK SEQUENCE A:load(P1,PACKAGE 1), **load(P1,PACKAGE 2)**,move(P6), move(P7),move(P8),move(P13),unload(P13,PACKAGE 1), **move(P14),move(P15), move(P10)**,unload(P10,**PACKAGE 2**) |

## FIG. 26

```
                    ( START )

S301   DELETE ALL moves FROM B AND
       NEWLY SET b₁, b₂, ⋯, AND b_l

S302   i = 1, j = 1

S303   t = a_i

S304   t.locate = b_j.locate ? — No → S311  i = i + 1 → S312  i = n ? — No
         │ Yes                                                    │ Yes
S305   INSERT b_j IMMEDIATELY
       AFTER a_i OF A

S306   t = b_j

S307   j = j + 1

S308   j > l ? — No (loop back)
         │ Yes

S313   (TAIL OF A) SET m₁, m₂, ⋯, m_k AS MOVE TASK
       SEQUENCE FROM locate TO b_j.locate, AND INSERT
       m₁, m₂, ⋯, m_k AND b_j TO TAIL OF A

S314   j = j + 1

S315   j > l ? — No (loop back)
         │ Yes

                    ( END )
```

ALGORITHM OF INSERTING TASK SEQUENCE B
INTO TASK SEQUENCE A
$A: a_1, a_2, \cdots, a_n \quad B: b_1, b_2, \cdots, b_m$
$TASK = (locate, tasktype, object)$
$*tasktype = move \mid load \mid unload \mid wait$

# FIG. 27

EP 3 816 963 A1

| | DATA TYPE | TASK SEQUENCE DETAILS |
|---|---|---|
| (1) | EXISTING VEHICLE CORRESPONDING TASK SEQUENCE | TASK SEQUENCE A:load(P1,PACKAGE 1,pri=1),move(P6),move(P7), move(P8),move(P13),unload(P13,PACKAGE 1,pri=1) |
| (2) | ADDITIONAL TASK SEQUENCE | TASK SEQUENCE B:load(P1,PACKAGE 2,pri=10),move(P2).move(P3). move(P4),move(P9),move(P10),unload(P10,PACKAGE 2,pri=10) |

PRIORITY INFORMATION (pri=1)

ADDITIONAL TASK SEQUENCE (HIGH PRIORITY)

PRIORITY INFORMATION (pri=10)

PACKAGE 1  PACKAGE 2

EXISTING VEHICLE CORRESPONDING TASK SEQUENCE

PACKAGE 2

PACKAGE 1

## FIG. 28

| | DATA TYPE | TASK SEQUENCE DETAILS |
|---|---|---|
| (1) | EXISTING VEHICLE CORRESPONDING TASK SEQUENCE | TASK SEQUENCE A:load(P1,PACKAGE 1,pri=1),move(P6),move(P7), move(P8),move(P13),unload(P13,PACKAGE 1,pri=1) |
| (2) | ADDITIONAL TASK SEQUENCE | TASK SEQUENCE B: load(P1,PACKAGE 2,pri=10),move(P2).move(P3). move(P4),move(P9),move(P10),unload(P10,PACKAGE 2,pri=10) |

PRIORITY INFORMATION (pri=1)

PRIORITY INFORMATION (pri=10)

S401

DELETE move ELEMENTS FROM ADDITIONAL TASK SEQUENCE

| | DATA TYPE | TASK SEQUENCE DETAILS |
|---|---|---|
| (1) | EXISTING VEHICLE CORRESPONDING TASK SEQUENCE | TASK SEQUENCE A:load(P1,PACKAGE 1,pri=1),move(P6),move(P7), move(P8),move(P13),unload(P13,PACKAGE 1,pri=1) |
| (2) | ADDITIONAL TASK SEQUENCE | TASK SEQUENCE B: load(P1,PACKAGE 2,pri=10), unload(P10,PACKAGE 2,pri=10) |

EP 3 816 963 A1

## FIG. 29

|  | DATA TYPE | TASK SEQUENCE DETAILS |
|---|---|---|
| (1) | EXISTING VEHICLE CORRESPONDING TASK SEQUENCE | TASK SEQUENCE A: load(P1,PACKAGE 1,pri=1),move(P6),move(P7), move(P8),move(P13),unload(P13,PACKAGE 1,pri=1) |
| (2) | ADDITIONAL TASK SEQUENCE | TASK SEQUENCE B: load(P1,PACKAGE 2,pri=10), unload(P10,PACKAGE 2,pri=10) |

S402

EXISTING VEHICLE TASK SEQUENCE IS SEARCHED IN ORDER FROM FIRST ELEMENT, FOR ELEMENT HAVING PRIORITY LESS THAN PRIORITY (pri) OF ELEMENT OF ADDITIONAL TASK SEQUENCE IN ORDER FROM FIRST ELEMENT, AND ELEMENT OF ADDITIONAL TASK IS INSERTED BEFORE DETECTED ELEMENT, AND NECESSARY ROUTE IS ALSO INSERTED

INSERTED ELEMENT AND INSERTED ROUTE

|  | DATA TYPE | TASK SEQUENCE DETAILS |
|---|---|---|
| (1) | EXISTING VEHICLE CORRESPONDING TASK SEQUENCE (BEING UPDATE) | TASK SEQUENCE A: **load(P1,PACKAGE 2,pri=10),move(P2).move(P3). move(P4),move(P9),move(P10),unload(P10,PACKAGE 2,pri=10),** load(P1,PACKAGE 1,pri=1),move(P6),move(P7),move(P8),move(P13), unload(P13,PACKAGE 1,pri=1) |
| (2) | ADDITIONAL TASK SEQUENCE (BEING PROCESSED) | TASK SEQUENCE B: |

EP 3 816 963 A1

## FIG. 30

| | DATA TYPE | TASK SEQUENCE DETAILS |
|---|---|---|
| (1) | EXISTING VEHICLE CORRESPONDING TASK SEQUENCE (BEING UPDATE) | TASK SEQUENCE A: **load(P1,PACKAGE 2,pri=10),move(P2).move(P3). move(P4),move(P9),move(P10),unload(P10,PACKAGE 2,pri=10)** load(P1,PACKAGE 1,pri=1),move(P6),move(P7),move(P8),move(P13), unload(P13,PACKAGE 1,pri=1) |
| (2) | ADDITIONAL TASK SEQUENCE (BEING PROCESSED) | TASK SEQUENCE B: |

ADDITIONALLY INSERT ROUTE ELEMENT BETWEEN ADJACENT ELEMENTS OF ELEMENT OF VEHICLE CORRESPONDING TASK SEQUENCE BEING UPDATED AND ELEMENT OF INSERTED ADDITIONAL TASK SEQUENCE — S403

| | DATA TYPE | TASK SEQUENCE DETAILS |
|---|---|---|
| (1) | EXISTING VEHICLE CORRESPONDING TASK SEQUENCE (UPDATE COMPLETED) | TASK SEQUENCE A: load(P1,PACKAGE 2,pri=10),move(P2).move(P3). move(P4),move(P9),move(P10),unload(P10,PACKAGE 2,pri=10), **move(P5).move(P4).move(P3),move(P2),move(P1),** INSERTED ROUTE ELEMENT<br>load(P1,PACKAGE 1,pri=1),move(P6),move(P7),move(P8),move(P13), unload(P13,PACKAGE 1,pri=1) |
| (2) | ADDITIONAL TASK SEQUENCE (BEING PROCESSED) | TASK SEQUENCE B: |

EP 3 816 963 A1

# FIG. 31

|  | DATA TYPE | TASK SEQUENCE DETAILS |
|---|---|---|
| (1) | EXISTING VEHICLE CORRESPONDING TASK SEQUENCE (UPDATE COMPLETED) | TASK SEQUENCE A:load(P1,PACKAGE 2,pri=10),move(P2).move(P3). . move(P4),move(P9),move(P10),unload(P10,PACKAGE 2,pri=10), **move(P5).move(P4).move(P3),move(P2),move(P1),** load(P1,PACKAGE 1,pri=1),move(P6),move(P7),move(P8),move(P13), unload(P13,PACKAGE 1,pri=1) |

PACKAGE 1  PACKAGE 2

PACKAGE 2

PACKAGE 1

EP 3 816 963 A1

# FIG. 32

TASK = (locate, tasktype, object, priority)
*tasktype = move | load | unload | wait

START

**S501** DELETE ALL *moves* FROM B AND NEWLY SET $b_1, b_2, \cdots,$ AND $b_l$

**S502** i = 0, j = 0

**S503** $t = a_i$

**S511** SET $m_1, m_2, \cdots, m_k$ AS MOVE TASK SEQUENCE FROM $t. locate$ TO $b_j. locate$, AND INSERT $m_1, m_2, \cdots, m_k$ AND $b_j$ IMMEDIATELY AFTER $t$ OF A

**S512** $t = b_j$

**S513** j = j + 1

**S514** $j > l$   No / Yes

**S504** (NEXT TO t).$pri < b_j.pri$   Yes

**S515** INSERT MOVE TASK SEQUENCE FROM $t. locate$ TO $a_i. locate$

**S505** $t. locate = b_j. locate$   No

**S521** i = i + 1

**S522** $i = n$   No / Yes

**S506** INSERT $b_j$ IMMEDIATELY AFTER $t$ OF A

**S523** SET $m_1, m_2, \cdots, m_k$ AS MOVE TASK SEQUENCE FROM TAIL TASK OF A. $locate$ TO $b_j. locate$, AND INSERT $m_1, m_2, \cdots, m_k$ AND $b_j$ TO TAIL OF A

**S507** $t = b_j$

**S508** j = j + 1

**S524** j = j + 1

**S509** $j > l$   No / Yes

**S525** $j > l$   No / Yes

END

# FIG. 33

| | PROCESSING STEP | PROCESSING DETAILS |
|---|---|---|
| （S601） | ISSUE SETTING | TO WHICH VEHICLE CORRESPONDING TASK SEQUENCE NEW TASK SEQUENCE IS ADDED |
| （S602） | MATCHING COST CALCULATION PROCESSING | MATCHING COST = WEIGHTED LINEAR COMBINATION OF FOLLOWING THREE COST VALUES<br><br>$cost_{add}$ : INCREASED COST = INCREMENTAL (MOVE) TIME COST BY INSERTION OF NEW TASK SEQUENCE TO CURRENT VEHICLE CORRESPONDING TASK SEQUENCE<br>$cost_{dis}$: CURRENT LOAD CORRESPONDING COST = (DISTANCE AVERAGE OF CENTER OF GRAVITY OF load AND unload POINTS OF CURRENTLY HANDLED TASKS AND load AND unload POINTS TO BE ADDED) ÷ (AVERAGE VEHICLE SPEED)<br>$cost_{now}$: CURRENT TASK CORRESPONDING TASK = TOTAL TIME COST TO COMPLETE CURRENTLY HANDLED TASK SEQUENCE<br><br>ADJUST BALANCE BY APPLYING WEIGHING COEFFICIENTS TO $cost_{add}$, $cost_{dis}$, AND $cost_{now}$<br><br>MATCHING COST : $cost = w_{add} \times cost_{add} + w_{dis} \times cost_{dis} + w_{now} \times cost_{now}$ |
| （S603） | MATCHING | ADD NEW TASK SEQUENCE TO VEHICLE CORRESPONDING TASK WITH MINIMUM MATCHING COST |

EP 3 816 963 A1

## FIG. 34

| | DATA | DETAILS |
|---|---|---|
| (1) | ADDITIONAL TASK SEQUENCE | load(P1, PACKAGE X),move(P2).move(P3).move(P4),move(P9), move(P10),unload(P10, PACKAGE X) |
| (A) | VEHICLE CORRESPONDING TASK SEQUENCE OF VEHICLE A | move(P3), move(P4),move(P5),unload(P5,PACKAGE A) |
| (B) | VEHICLE CORRESPONDING TASK SEQUENCE OF VEHICLE B | move(P12), unload(P12, PACKAGE B), move(P11), load(P11,PACKAGE C), move(P6), unload(P6,PACKAGE C) |

EP 3 816 963 A1

## FIG. 35

|  | DATA | DETAILS |
|---|---|---|
| (1) | ADDITIONAL TASK SEQUENCE | load(P1, PACKAGE X),move(P2).move(P3).move(P4),move(P9), move(P10),unload(P10, PACKAGE X) |
| (A) | VEHICLE CORRESPONDING TASK SEQUENCE OF VEHICLE A | move(P3), move(P4),move(P5),unload(P5, PACKAGE A) |
| (a1) | $cost_{add}$ OF VEHICLE A | move(P3), move(P4),move(P5),unload(P5, PACKAGE A) ⟵ ADDITIONAL ROUTE / ADDITIONAL TASK<br>move(P4),move(P3),move(P2), move(P1)<br>load(P1, PACKAGE X),move(P2).move(P3).move(P4),move(P9),move(P10),unload(P10, PACKAGE X)<br><br>SPEED OF VEHICLE A=40km<br>$cost_{add}$=0. 25×9+load TIME(0. 2h)+unload(0. 2h)=2. 65 |

VEHICLE CORRESPONDING TASK SEQUENCE OF VEHICLE A

VEHICLE A

CENTER OF GRAVITY OF load AND unload POINTS (40,0)

ADDITIONAL TASK SEQUENCE

ADDITIONAL ROUTE

P1 (0,0)   P2 (10,0)   P3 (20,0)   P4 (30,0)   P5 (40,0)

P6 (0,10)   P7 (10,10)   P8 (20,10)   P9 (30,10)   P10 (40,10)

P11 (0,20)   P12 (10,20)   P13 (20,20)   P14 (30,20)   P15 (40,20)

EP 3 816 963 A1

## FIG. 36

| | DATA | DETAILS |
|---|---|---|
| (1) | ADDITIONAL TASK SEQUENCE | load(P1,PACKAGE X),move(P2).move(P3).move(P4),move(P9), move(P10),unload(P10,PACKAGE X) |
| (A) | VEHICLE CORRESPONDING TASK SEQUENCE OF VEHICLE A | move(P3), move(P4),move(P5),unload(P5,PACKAGE A) |
| (a1) | $cost_{add}$ OF VEHICLE A | move(P3), move(P4),move(P5),unload(P5,PACKAGE A) , **move(P4),move(P3),move(P2), move(P1),** **load(P1,PACKAGE X),move(P2).move(P3).move(P4),move(P9),move(P10),unload(P10,PACKAGE X)** |
| | | SPEED OF VEHICLE A=40km $cost_{add} = 0. 25 \times 9 +$load TIME$(0. 2h) +$unload$(0. 2h) = 2. 65$ |
| (a2) | $cost_{dis}$ OF VEHICLE A | (DISTANCE AVERAGE OF CENTER OF GRAVITY OF load AND unload POINTS OF CURRENTLY HANDLED TASKS AND load AND unload POINTS TO BE ADDED) ÷ (AVERAGE VEHICLE SPEED) ＊ CENTER OF GRAVITY OF load AND unload POINTS OF CURRENTLY HANDLED TASKS = (40, 0) ＊ DISTANCE AVERAGE OF CENTER OF GRAVITY AND load AND unload POINTS TO BE ADDED = (40 + 10) / 2 = 25 |
| | | $cost_{dis} = 25 / 40 = 0. 625$ |
| (a3) | $cost_{now}$ OF VEHICLE A | ADD TRAVEL TIME OBTAINED BY DIVIDING DISTANCE 30km FROM CURRENT POSITION P2 TO unload-P5 BY SPEED PER HOUR (40km/H) WITH TIME REQUIRED FOR load AND unload DURING TRAVEL TIME (0.2h)×NUMBER OF TIMES (1) |
| | | $cost_{now} = 30 / 40 + 0. 2 = 0. 95$ |
| (a4) | MATCHING COST cost OF VEHICLE A | MATCHING COST : $cost = w_{add} \times cost_{add} + w_{dis} \times cost_{dis} + w_{now} \times cost_{now}$ WEIGHING COEFFICIENTS : $w_{add} = w_{dis} = w_{now} = 1$ |
| | | cost=2. 65+0. 625+0. 95=4. 225 |

EP 3 816 963 A1

# FIG. 37

| | DATA | DETAILS |
|---|---|---|
| (1) | ADDITIONAL TASK SEQUENCE | load(P1,PACKAGE X),move(P2).move(P3).move(P4),move(P9), move(P10),unload(P10,PACKAGE X) |
| (B) | VEHICLE CORRESPONDING TASK SEQUENCE OF VEHICLE B | move(P12), unload(P12,PACKAGE B), move(P11), load(P11,PACKAGE C), move(P6), unload(P6,PACKAGE C) |
| (b1) | $\text{cost}_{add}$ OF VEHICLE B | move(P12), unload(P12, PACKAGE B), move(P11), load(P11, PACKAGE C), move(P6), unload(P6,PACKAGE C) move(P1), } ⋯⋯ ADDITIONAL ROUTE  ADDITIONAL TASK load(P1,PACKAGE X),move(P2).move(P3).move(P4),move(P9),move(P10),unload(P10, PACKAGE X) |
| | | SPEED OF VEHICLE B=40km $\text{cost}_{add}=0.25\times6+\text{load TIME}(0.2h)+\text{unload}(0.2h)=1.9$ |

ADDITIONAL ROUTE

ADDITIONAL TASK SEQUENCE

CENTER OF GRAVITY OF load AND unload POINTS (3.33,16.67)

VEHICLE CORRESPONDING TASK SEQUENCE OF VEHICLE B

VEHICLE B

x
y

P1 (0,0)  P2 (10,0)  P3 (20,0)  P4 (30,0)  P5 (40,0)
P6 (0,10)  P7 (10,10)  P8 (20,10)  P9 (30,10)  P10 (40,10)
P11 (0,20)  P12 (10,20)  P13 (20,20)  P14 (30,20)  P15 (40,20)

EP 3 816 963 A1

## FIG. 38

| | DATA | DETAILS |
|---|---|---|
| (1) | ADDITIONAL TASK SEQUENCE | load(P1,PACKAGE X),move(P2).move(P3).move(P4),move(P9), move(P10),unload(P10,PACKAGE X) |
| (B) | VEHICLE CORRESPONDING TASK SEQUENCE OF VEHICLE B | move(P12), unload(P12,PACKAGE B), move(P11), load(P11,PACKAGE C), move(P6), unload(P6,PACKAGE C) |
| (b1) | $cost_{add}$ OF VEHICLE B | move(P12), unload(P12,PACKAGE B), move(P11), load(P11,PACKAGE C), move(P6), unload(P6,PACKAGE C) **move(P1), load(P1, PACKAGE X),move(P2).move(P3).move(P4),move(P9),move(P10),unload(P10, PACKAGE X)** |
| | | SPEED OF VEHICLE B = 40km $cost_{add} = 0.25 \times 6 +$ load TIME (0.2h) + unload (0.2h) = 1.9 |
| (b2) | $cost_{dis}$ OF VEHICLE B | (DISTANCE AVERAGE OF CENTER OF GRAVITY OF load AND unload POINTS OF CURRENTLY HANDLED TASKS AND load AND unload POINTS TO BE ADDED) ÷ (AVERAGE VEHICLE SPEED) * CENTER OF GRAVITY OF load AND unload POINTS OF CURRENTLY HANDLED TASKS = (3.33,16,67) * DISTANCE AVERAGE OF CENTER OF GRAVITY AND load AND unload POINTS TO BE ADDED = (17 +37) / 2 = 27 |
| | | $cost_{dis} = 27 / 40 = 0.68$ |
| (b3) | $cost_{now}$ OF VEHICLE B | ADD TRAVEL TIME OBTAINED BY DIVIDING DISTANCE 30km FROM CURRENT POSITION P13 TO TASK END POSITION-P6 BY SPEED PER HOUR (40km/H) WITH TIME REQUIRED FOR load AND unload DURING TRAVEL TIME (0.2h)×NUMBER OF TIMES (3) |
| | | $cost_{now} = 30 / 40 + 0.2 \times 3 = 1.35$ |
| (b4) | MATCHING COST cost OF VEHICLE B | MATCHING COST: $cost = w_{add} \times cost_{add} + w_{dis} \times cost_{dis} + w_{now} \times cost_{now}$ WEIGHING COEFFICIENTS : $w_{add} = w_{dis} = w_{now} = 1$ |
| | | cost = 1.9 + 0.68 + 1.35 = 3.93 |

EP 3 816 963 A1

## FIG. 39

| | SETTING EXAMPLES OF MULTIPLICATION WEIGHING COEFFICIENTS | MATCHING COST cost OF VEHICLE A | MATCHING COST cost OF VEHICLE B |
|---|---|---|---|
| (1) | $w_{add}=w_{dis}=w_{now}=1$ | cost=4. 225 | cost=3. 93 ◯ |
| (2) | $w_{add}=2, w_{dis}=1, w_{now}=1$ | cost=6. 875 | cost=5. 83 ◯ |
| (3) | $w_{add}=1, w_{dis}=2, w_{now}=1$ | cost=4. 85 | cost=4. 61 ◯ |
| (4) | $w_{add}=1, w_{dis}=1, w_{now}=2$ | cost=5. 175 ◯ | cost=5. 28 |
| (5) | $w_{add}=1, w_{dis}=2, w_{now}=2$ | cost=5. 8 ◯ | cost=5. 96 |

VALUES OF $w_{add}$, $w_{dis}$, AND $w_{now}$ ARE ADJUSTED AND OPTIMIZATION ACCORDING TO PURPOSE CAN BE IMPLEMENTED.
TIME EFFICIENCY BECOMES BETTER AS WHOLE SYSTEM WHEN $w_{add}$ IS HIGH.
EACH VEHICLE CAN WORK IN NARROW AREA WHEN $w_{dis}$ IS HIGH.
JOBS ARE EQUALLY ASSIGNED TO VEHICLES WHEN $w_{now}$ IS HIGH.

ADJUSTMENT OF SETTING $w_{now}$ HIGH IN A CASE OF TRUCK DRIVERS WHO REQUIRE FAIRNESS AND EQUALITY AMONG DRIVERS, AND SETTING $w_{add}$ HIGH EMPHASIZING EFFICIENCY WHEN CONSIDERING AUTONOMOUS DRIVING CAR DISPATCH SERVICE IS CONCEIVABLE.
CONTROL OF SETTING $w_{dis}$ HIGH SO THAT VEHICLES ARE DISTRIBUTED IN EACH REGION WHEN DEMAND IS DYNAMICALLY GENERATED SUCH AS TAXI IS POSSIBLE.

EP 3 816 963 A1

## FIG. 40

EP 3 816 963 A1

**INTERNATIONAL SEARCH REPORT**

| International application No. |
|---|
| PCT/JP2019/022879 |

A. CLASSIFICATION OF SUBJECT MATTER
Int.Cl. G08G1/123(2006.01)i, G01C21/34(2006.01)i, G06Q50/28(2012.01)i

According to International Patent Classification (IPC) or to both national classification and IPC

B. FIELDS SEARCHED

Minimum documentation searched (classification system followed by classification symbols)
Int.Cl. G08G1/123, G01C21/34, G06Q50/28

Documentation searched other than minimum documentation to the extent that such documents are included in the fields searched
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2014-238831 A (FUJITSU LIMITED) 18 December 2014, paragraphs [0016], [0038]-[0083], fig. 3-11 & US 2014/0365250 A1, paragraphs [0030], [0052]-[0098], fig. 3-11 | 1-7, 10-17<br>8-9 |
| Y | JP 2013-83610 A (NIIGATA CITY) 09 May 2013, paragraphs [0135]-[0152], fig. 20, 21 (Family: none) | 1-7, 10-17 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15.08.2019 | 27.08.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| | International application No. |
|---|---|
| | PCT/JP2019/022879 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2012-167942 A (HITACHI, LTD.) 06 September 2012, paragraphs [0071], [0072]<br>& US 2012/0209512 A1, paragraphs [0087], [0088] & CN 102692222 A | 1-7, 10-17 |
| Y | JP 2004-302941 A (FUJITSU LIMITED) 28 October 2004, paragraphs [0096]-[0101], fig. 13 (Family: none) | 7 |
| A | JP 2002-140788 A (TOSHIBA CORPORATION) 17 May 2002, entire text, all drawings (Family: none) | 1-17 |

Form PCT/ISA/210 (continuation of second sheet) (January 2015)

**EP 3 816 963 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008230816 A